(19) Europäisches Patentamt
European Patent Office
Office européen des brevets

(11) **EP 2 431 936 A2**

(12) **EUROPEAN PATENT APPLICATION**
published in accordance with Art. 153(4) EPC

(43) Date of publication:
**21.03.2012 Bulletin 2012/12**

(21) Application number: **10772290.2**

(22) Date of filing: **08.05.2010**

(51) Int Cl.:
**G06Q 50/00** (2012.01)     **G06T 15/00** (2011.01)
**G06F 17/00** (2006.01)

(86) International application number:
**PCT/KR2010/002938**

(87) International publication number:
**WO 2010/128830 (11.11.2010 Gazette 2010/45)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **08.05.2009   KR 20090040476**
**23.10.2009   KR 20090101471**
**28.10.2009   US 255636 P**
**04.05.2010   KR 20100041736**

(71) Applicant: **Samsung Electronics Co., Ltd.**
**Suwon-si, Gyeonggi-do 443-742 (KR)**

(72) Inventors:
• **HAN, Seung Ju**
**Yongin-si**
**Gyeonggi-do 446-712 (KR)**
• **HAN, Jae Joon**
**Yongin-si**
**Gyeonggi-do 446-712 (KR)**

• **AHN, Jeong Hwan**
**Yongin-si**
**Gyeonggi-do 446-712 (KR)**
• **LEE, Hyun Jeong**
**Yongin-si**
**Gyeonggi-do 446-712 (KR)**
• **BANG, Won Chul**
**Yongin-si**
**Gyeonggi-do 446-712 (KR)**
• **PARK, Joon Ah**
**Yongin-si**
**Gyeonggi-do 446-712 (KR)**

(74) Representative: **Hylarides, Paul Jacques et al**
**Arnold & Siedsma**
**Sweelinckplein 1**
**2517 GK The Hague (NL)**

(54) **SYSTEM, METHOD, AND RECORDING MEDIUM FOR CONTROLLING AN OBJECT IN VIRTUAL WORLD**

(57)     Provided is a system and method of controlling characteristics of an avatar in a virtual world is provided. The system of controlling the characteristics of the avatar may generate avatar control information based on avatar information of the virtual world and a sensor control command expressing an user intent using a sensor-based input device.

**Description**

TECHNICAL FIELD

One or more embodiments relate to a method of controlling a figure of a user of a real world to be adapted to characteristics of an avatar of a virtual world.

RELATED ART

Recently, interests in expressing users of a real world as avatars of a virtual world are greatly increasing. In particular, a study for a method of controlling to adapt, to the avatars of the virtual world, practical characteristics such as appearances, motions, and the like of the users so that the avatars may be realistically shown has been actively made.
Accordingly, there is a desire for a system and method of controlling characteristics of an avatar of a virtual world.

SUMMARY

According to an aspect of one or more embodiments, there may be provided a system of controlling characteristics of an avatar, the system including: a sensor control command receiver to receive a sensor control command indicating a user intent via a sensor-based input device; and an avatar control information generator to generate avatar control information based on the sensor control command.
The avatar information may include, as metadata, an identifier (ID) for dientifyign the avatar and an attribute of a family indicating morphological information of the avatar.
The avatar information may include, as metadata, a free direction (FreeDirection) of a move element for defining various behaviors of an avatar animation.
The avatar information may include, as metadata for an avatar appearance, an element of a physical condition (PhysicalCondition) for indicating various expressions of behaviors of the avatar, and may include, as sub-elements of the PhysicalCondition, a body flexibility (BodyFlexibility) and a body strength (BodyStrength).
The avatar information may include metadata defining an avatar face feature point and a body feature point for controlling a facial expression and a motion of the avatar.
According to another aspect of one or more embodiments, there may be provided a method of controlling characteristics of an avatar, the method including: receiving a sensor control command indicating a user intent via a sensor-based input device; and generating avatar control information based on the sensor control command.
According to still another aspect of one or more embodiments, there may be provided a non-transitory computer-readable storage medium storing a metadata structure, wherein an avatar face feature point and a body feature point for controlling a facial expression and a motion of an avatar are defined.
According to yet another aspect of one or more embodiments, there may be provided an imaging apparatus including a storage unit to store an animation clip, animation control information, and control control information, the animation control information including information indicating a part of an avatar the animation clip corresponds to and a priority, and the control control information including information indicating a part of an avatar motion data corresponds to and a priority, the motion data being generated by processing a value received from a motion sensor; and a processing unit to compare a priority of animation control information corresponding to a first part of the avatar with a priority of control control information corresponding to the first part of the avatar, and to determine data to be applicable to the first part of the avatar.
According to a further another aspect of one or more embodiments, there may be provided a non-transitory computer-readable storage medium storing a program implemented in a computer system comprising a processor and a memory, the non-transitory computer-readable storage medium including a first set of instructions to store animation control information and control control information, and a second set of instructions to associate an animation clip and motion data generated from a value received from a motion sensor, based on the animation control information corresponding to each part of an avatar and the control control information. The animation control information may include information associated with a corresponding animation clip, and an identifier indicating the corresponding animation clip corresponds to one of a facial expression, a head, an upper body, a middle body, and a lower body of an avatar, and the control control information may include an identifier indicating real-time motion data corresponds to one of the facial expression, the head, the upper body, the middle body, and the lower body of an avatar.

BRIEF DESCRIPTION OF THE DRAWINGS

FIG. 1 illustrates a system in which an adaption real to virtual (RV) receives a user intent of a real world using a sensor control command and communicates with a virtual world based on avatar information and avatar control information according to an embodiment;

FIG. 2 illustrates a system having a symmetrical structure of RV and virtual to real (VR) in brief;

FIG. 3 illustrates a system having a symmetrical structure of RV and VR in detail;

FIG. 4 illustrates a process of driving an adaptation RV according to an embodiment;

FIG. 5 illustrates an example of defining an avatar facial expression control point for a face control according to an embodiment;

FIG. 6 illustrates an example of a face control according to an embodiment;

FIG. 7 illustrates an example of generating an individual avatar with respect to a user of a real world through a face control according to an embodiment;

FIG. 8 illustrates an example of two avatars showingdifferent forms depending on physical conditions of the avatars according to an embodiment;

FIG. 9 illustrates a structure of a common characteristics type (CommonCharacteristicsType) according to an embodiment;

FIG. 10 illustrates a structure of an identification type (IdentificationType) according to an embodiment;

FIG. 11 illustrates a structure of a virtual world object sound type (VWOSoundType) according to an embodiment;

FIG. 12 illustrates a structure of a virtual world object scent type (VWOScentType) according to an embodiment;

FIG. 13 illustrates a structure of a virtual world object control type (VWOControlType) according to an embodiment;

FIG. 14 illustrates a structure of a virtual world object event type (VWOEventType) according to an embodiment;

FIG. 15 illustrates a structure of a virtual world object behavior model type (VWOBehaviorModelType) according to an embodiment;

FIG. 16 illustrates a structure of a virtual world object haptic property type (VWOHapticPropertyType) according to an embodiment;

FIG. 17 illustrates a structure of a material property type (MaterialPropertyType) according to an embodiment;

FIG. 18 illustrates a structure of a dynamic force effect type (DynamicForceEffectType) according to an embodiment;

FIG. 19 illustrates a structure of a tactile type (TactileType) according to an embodiment;

FIG. 20 illustrates a structure of an avatar type (AvatarType) according to an embodiment;

FIG. 21 illustrates a structure of an avatar appearance type (AvatarAppearanceType) according to an embodiment;

FIG. 22 illustrates an example of facial calibration points according to an embodiment;

FIG. 23 illustrates a structure of a physical condition type (PhysicalConditionType) according to an embodiment;

FIG. 24 illustrates a structure of an avatar animation type (AvatarAnimationType) according to an embodiment;

FIG. 25 illustrates a structure of an avatar communication skills type (AvatarCommunicationSkillsType) according to an embodiment;

FIG. 26 illustrates a structure of a verbal communication type (VerbalCommunicationType) according to an embodiment;

FIG. 27 illustrates a structure of a language type (LanguageType) according to an embodiment;

FIG. 28 illustrates a structure of a nonverbal communication type (NonVerbalCommunicationType) according to an embodiment;

FIG. 29 illustrates a structure of a sign language type (SignLanguageType) according to an embodiment;

FIG. 30 illustrates a structure of an avatar personality type (AvatarPersonalityType) according to an embodiment;

FIG. 31 illustrates a structure of an avatar control features type (AvatarControlFeaturesType) according to an embodiment;

FIG. 32 illustrates a structure of a control body features type (ControlBodyFeaturesType) according to an embodiment;

FIG. 33 illustrates a structure of a control face features type (ControlFaceFeaturesType) according to an embodiment;

FIG. 34 illustrates an example of a head outline according to an embodiment;

FIG. 35 illustrates an example of a left eye outline according to an embodiment;

FIG. 36 illustrates an example of a right eye outline according to an embodiment;

FIG. 37 illustrates an example of a left eyebrow outline according to an embodiment;

FIG. 38 illustrates an example of a right eyebrow outline according to an embodiment;

FIG. 39 illustrates an example of a left ear outline and a right ear outline according to an embodiment;

FIG. 40 illustrates an example of a nose outline according to an embodiment;

FIG. 41 illustrates an example of a lip outline according to an embodiment;

FIG. 42 illustrates an example of a face point according to an embodiment;

FIG. 43 illustrates a structure of an outline type (OutlineType) according to an embodiment;

FIG. 44 illustrates a structure of Outline4PointsType according to an embodiment;

FIG. 45 illustrates a structure of Outline5PointsType according to an embodiment;

FIG. 46 illustrates a structure of Outline8PointsType according to an embodiment;

FIG. 47 illustrates a structure of Outline14PointsType according to an embodiment;

FIG. 48 illustrates a structure of a virtual object type (VirtualObjectType) according to an embodiment;

FIG. 49 illustrates a structure of avirtual object appearance type (VOAppearanceType) according to an embodiment;

FIG. 50 illustrates a structure of a virtual object animation type (VOAnimationType) according to an embodiment;

FIG. 51 illustrates a configuration of an avatar characteristic controlling system according to an embodiment;

FIG. 52 illustrates a method of controlling characteristics of an avatar according to an embodiment;

FIG. 53 illustrates a structure of a system exchanging information and data between a real world and a virtual world according to an embodiment;

FIGS. 54 through 58 illustrate an avatar control command according to an embodiment;

FIG. 59 illustrates a structure of an appearance control type (AppearanceControlType) according to an embodiment;

FIG. 60 illustrates a structure of a communication skills control type (CommunicationSkillsControlType) according to an embodiment;

FIG. 61 illustrates a structure of a personality control type (PersonalityControlType) according to an embodiment;

FIG. 62 illustrates a structure of an animation control type (AnimationControlType) according to an embodiment;

FIG. 63 illustrates a structure of a control control type (ControlControlType) according to an embodiment;

FIG. 64 illustrates a configuration of an imaging apparatus according to an embodiment;

FIG. 65 illustrates a state where an avatar of a virtual world is divided into a facial expression part, a head part, an upper body part, a middle body part, and a lower body part according to an embodiment;

FIG. 66 illustrates a database with respect to an animation clip according to an embodiment;

FIG. 67 illustrates a database with respect to motion data according to an embodiment;

FIG. 68 illustrates an operation of determining motion object data to be applied to an arbitrary part of an avatar by comparing priorities according to an embodiment;

FIG. 69 illustrates a method of determining motion object data to be applied to each part of an avatar according to an embodiment;

FIG. 70 illustrates an operation of associating corresponding motion object data with each part of an avatar according to an embodiment;

FIG. 71 illustrates an operation of associating corresponding motion object data with each part of an avatar according to an embodiment;

FIG. 72 illustrates a terminal for controlling a virtual world object and a virtual world server according to an embodiment;

FIG. 73 illustrates a terminal for controlling a virtual world object and a virtual world server according to another embodiment;

FIG. 74 illustrates a plurality of terminals for controlling a virtual world object according to another embodiment; and

FIG. 75 illustrates a terminal for controlling a virtual world object according to another embodiment.

DETAILED DESCRIPTION

Reference will now be made in detail to embodiments, examples of which are illustrated in the accompanying drawings, wherein like reference numerals refer to the like elements throughout. Embodiments are described below to explain the present disclosure by referring to the figures.

1. Instruction:

An importance of a virtual environment (VE) in multimedia industries may be gradually increasing. A specificity of VE with respect to other multimedia applications may include a visual expression of a user within the VE. The visual expression may be provided in a form of an avatar, that is, a graphic object that providing other purposes:

- Make the presence of a user in a real world visual in the VE,
- Characterize the user within the VE,
- Interact with the VE.

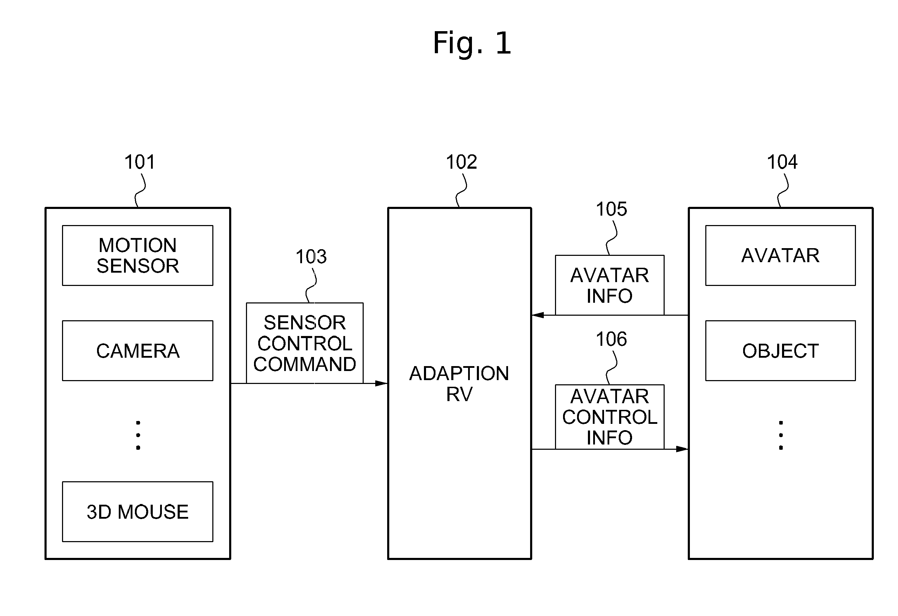

FIG. 1 illustrates a system in which an adaption real to virtual (RV) 102 receives a user intent of a real world using a sensor control command 103 and communicates with a virtual world 104 based on avatar information and avatar control information according to an embodiment. In the real world, user intents may be transferred from a sensor-based input device 101 to the adaptation RV 102 as the sensor control command 103. Structural information of an object and an avatar in the virtual world 104 may be transferred to the adaptation RV 102, for example, an adaptation RV engine, as avatar information 105. The adaptation RV engine may convert the avatar and the object of the virtual world 104 to avatar control information 106 based on the sensor control command 103 and avatar information 105, and may transmit the avatar control information 106 to the virtual world 104. The avatar of the virtual world 104 may be manipulated based on the avatar control information 106. For example, a motion sensor may transfer information associated with a position, a speed, and the like, and a camera may transfer information associated with a silhouette, a color, a depth, and the like. The information transferred by the motion sensor and the camera may be computed with avatar information contained in the adaptation RV engine and be converted to the avatar control information 106.

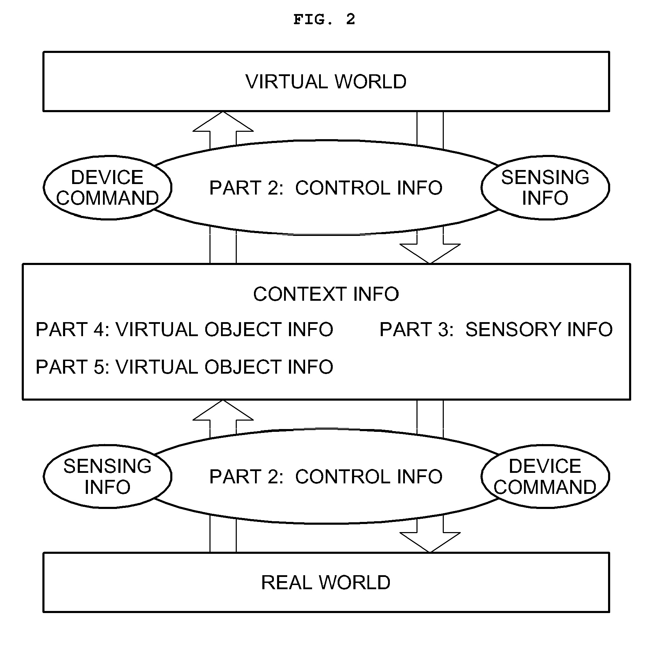

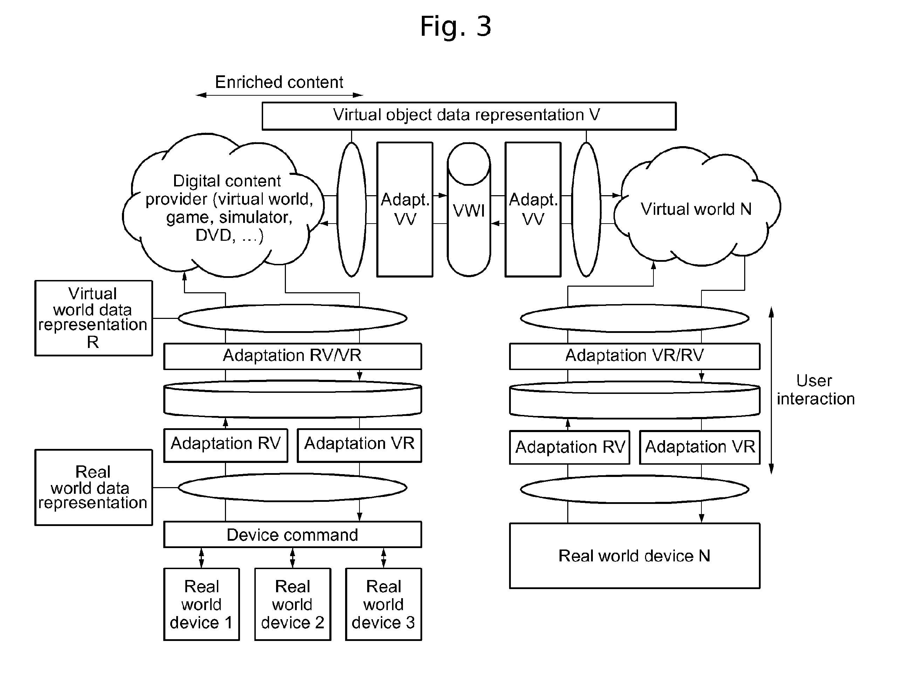

FIG. 2 illustrates a system having a symmetrical structure of RV and virtual to real (VR) in brief, and FIG. 3 illustrates a system having a symmetrical structure of RF and VR in detail. The VR shown in FIGS. 2 and 3 may sense a situation of a virtual world using a virtual sensor to provide the same situation using an actuator in a real world. For example, in the case of an interactive cinema, a situation in a movie such as the wind blowing, shaking, and the like may be identically reproduced in a space where viewers view the movie. The RV may sense a current actual situation of the real world using a sensor of the real world, and may convert the sensed situation to be pursuant to the virtual world, generate input and command information, and adapt the generated input and command information to the virtual world. The virtual actuator may be associated with an avatar, a virtual object, and a virtual environment. In FIG. 3, an elliptical shape may indicate a standard area A with respect to control information corresponding to a part 2 of FIG. 2. The part 2 defines a product capability, a user preference, a device command, and the like, with respect to a device, for example, a sensor and an actuator, existing in the real world. A cylindrical shape may indicate a standard area B with respect to context information such as sensory information corresponding to a part 3, avatar information corresponding to a part 4 and virtual object information corresponding to a part 5. The part 3 defines effect of content, for example, a virtual game, a game, and the like, desired to be transferred from the real world. The effect may be a sensor effect included in the content by a copyright holder, and may be converted to control information via a moving picture experts group for virtual world (MPEG-V) engine and be transferred to each device as a command. The part 4 defines characteristics of the avatar and the virtual object existing in the virtual world. Specifically, the part 4 may be used to readily manipulate the avatar and the virtual object of the virtual world based on control information, avatar information, and virtual object information. The standard areas A and B are goals of MPEG-V standardization.

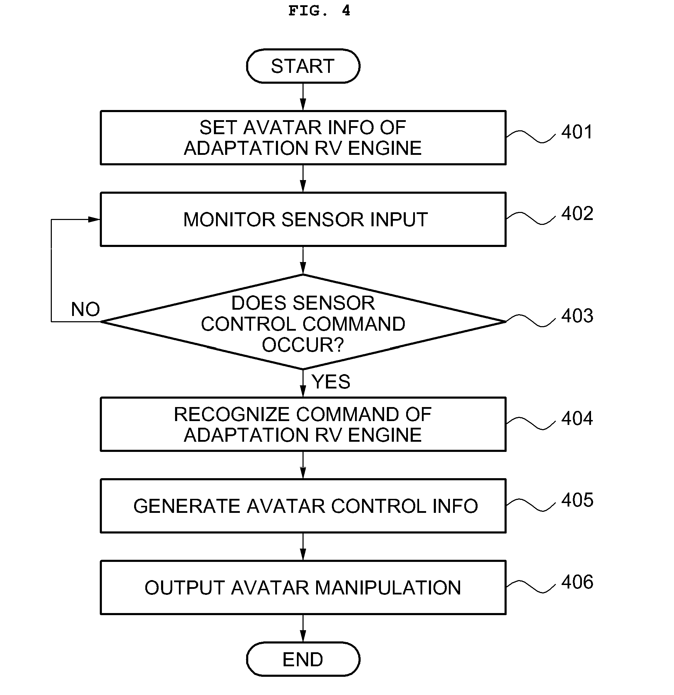

FIG. 4 illustrates a process of driving an adaptation RV according to an embodiment.

In operation 401, avatar information of the adaptation RV engine may be set. In operation 402, a sensor input may be monitored. When a sensor control command occurs in operation 403, a command of the adaptation RV engine may be recognized in operation 404. In operation 405, avatar control information may be generated. In operation 406, an avatar manipulation may be output.

In general, creating an avatar may be a time consuming task. Even though some elements of the avatar may be associated with the VE (for example, the avatar wearing a medieval suite in a contemporary style VE being inappropriate), there may be a real desire to create the the avatar once and import and use the created avatar in other VEs . In addition, the avatar may be controlled from external applications. For example, emotions once avatar exposes in the VE may be obtained by processing the associated user's psychological sensors.

Based on two main requirements below, an extensible Markup Language (XML) schema used for expressing the avatar may be proposed:

- Easily create an importer and an exporter from performances of a variety of VEs,
- Easily control the avatar in the VE.

The proposed scheme may deal with metadata and may not include representation of a texture, geometry, or an animation.

The schema may be obtained based on a study for another virtual human being relating to markup languages together with popular games, tools, and schemes from real presences of the virtual world and content authentication packages

As basic attributes of the avatar, identifier (ID) of identifying each avatar in a virtual reality (VR) space and a family of signifying a type of each avatar may be given. The family may provide information regarding whether the avatar has a form of a human being, a robot, or a specific animal. In this manner, a user may discriminate and manipulate the user's own avatar from an avatar of another user using an ID in the VR space where a plurality of avatars are present, and the family attributes may be applied to various avatars. As optional attributes of the avatar, a name, a gender, and the like may be included.

Elements of the avatar may be configured as data types below:

- Appearance: may include a high-level description for the appearance, and refer to media including accurate geometry and texture. Here, 'PhysicalCondition' is additionally proposed. The 'PhysicalCondition' may include 'BodyFlexibility' and 'BodyStrength' as its subelements. When defining external characteristics of each avatar, the body flexibility or the body strength may provide information associated with a degree of an avatar expressing a motion. For example, in comparison between an avatar having a high flexibility and an avatar having a low flexibility, the motions of the two avatars may vary depending on a flexibility degree when the same dance, for example, a ballet is performed by the two avatars. As for the body strength, an avatar having a relatively great strength with respect to the same motion may be expressed as being more actively performed. To obtain these effects, the 'PhysicalCondition' may be provided as metadata of a subelement of the avatar appearance.
- Animation: may include descriptions about a set of animation sequences performing an avatar, and refer to some media including accurate animation parameters such as geometric transformations. A free direction (FreeDirection) of a move element may be additionally added to existing metadata of the avatar animation. An existing manipulation scheme to move the avatar is limited to up, down, left, and right. In this regard, an item that may be readily manipulated in any direction may be added to diversely provide expression information of moving animation of the avatar.
- Communication skills: may include a set of descriptors providing information to other modalities communicable by the avatar.
- Personality: may include a set of descriptors defining a personality of the avatar.
- Control features: may include a set of facial expressions of the avatar and motion points. Thus, a user may control facial expression and full body motion which are not listed in the descriptors.

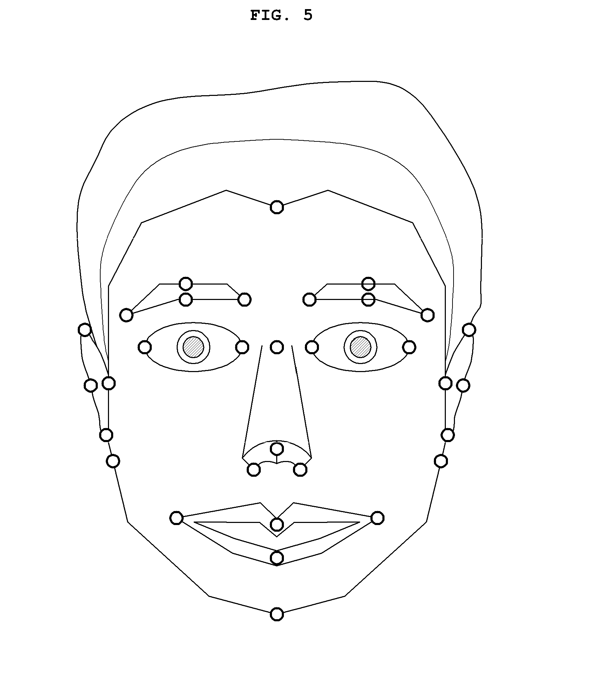

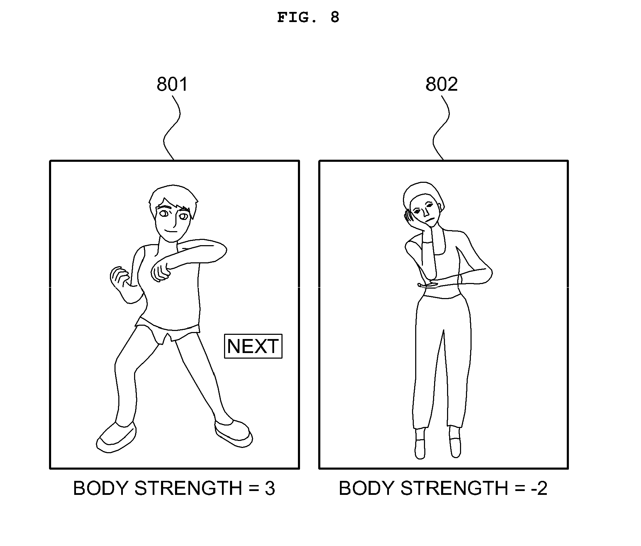

Specifically, the appearance may signify a feature of the avatar, and various appearances of the avatar may be defined using appearance information concerning a size, a position, a shape, and the like with respect to eyes, a nose, lips, ears, hair, eyebrows, nails, and the like, of the avatar. The animation may be classified into body gestures (an angry gesture, an agreement gesture, a tired gesture, etc.,) of the avatar such as greeting, dancing, walking, fighting, celebrating, and the like, and meaningless gestures of the avatar such as facial expressions (smiling, crying, surprising, etc.). The communication skills may signify communication capability of the avatar. For example, the communication skills may include communication capability information such that the avatar speaks excellent in Korean as a native language, speaks fluently in English, and speaks a simple greeting in French. The personality may include openness, agreeableness, neuroticism, extraversion, conscientiousness, and the like.
The facial expression and the full body motion among the characteristics of the avatar may be controlled as follows. FIG. 5 illustrates an example of an avatar facial expression control point for a face control according to an embodiment. The face control may express a variety of non-predefined facial expressions such as a smiling expression, a crying expression, meaningless expressions, and the like by moving, based on spatial coordinates, control points (markers) on outlines of a head, left and right eyes, left and right eyebrows, left and right ears, a nose, and lips of an avatar, as illustrated in FIG. 5. For example, according to the face control, facial expressions of users in the real world may be recognized using a camera to adapt the recognized facial expressions onto facial expressions of the avatar of the virtual world.

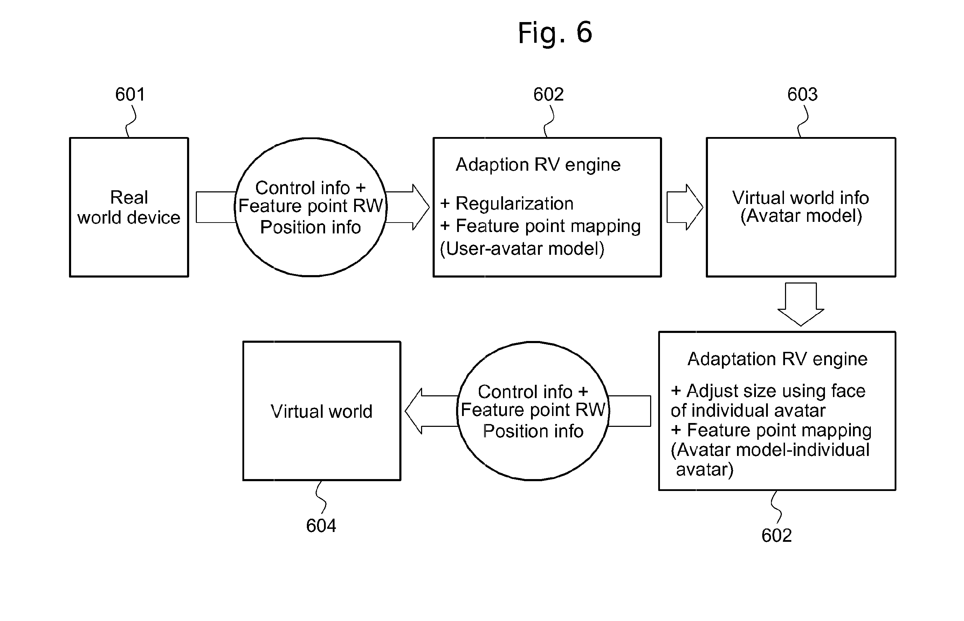

FIG. 6 illustrates an example of a face control according to an embodiment. Position information of user face feature points obtained from a real world device 601 such as a depth camera may be transmitted to an adaptation RV engine 602. The information may be mapped to feature point information of a reference avatar model through a regularization process (for matching a face size of a user and a face size of the avatar model) and then be transmitted to the adaptation RV engine 602, or the aforementioned process may be performed by the adaptation RV engine 602. Next, virtual world information 603 such as an avatar model created through the feature point mapping may be adjusted to a size of an individual avatar of a virtual world 604 to be mapped, and the mapped information may be transmitted to the virtual world 604 as position information of the virtual world 604. Thus, changes in various facial expressions of the user of the real world may be adapted to the facial expressions of the avatar of the virtual world 604. In FIG. 6, 'RW' may indicate the real world and 'VW' may indicate the virtual world.

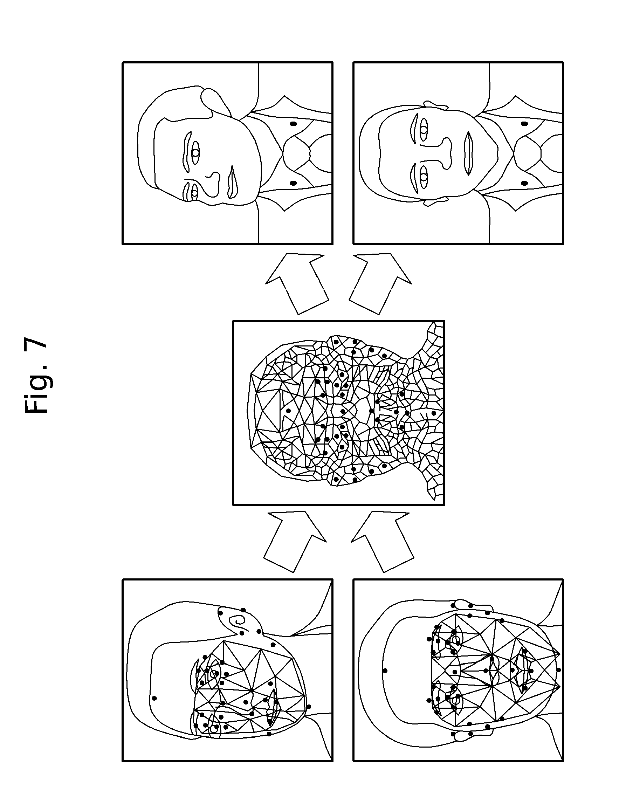

FIG. 7 illustrates an example of generating an individual avatar of a user of a real world through a face control according to an embodiment.
When comparing two avatars having physical conditions different from each other, states while or after the two avatars conduct the same task may be different from each other. FIG. 8 illustrates an example of two avatars showing different states depending on physical conditions. Immediately after racing of two avatars is completed, an avatar 801 having a relatively high body strength still looks vital, and an avatar 802 having a relatively low body strength looks tired. According to another embodiment, when practicing the same yoga motion, a stretching degree of each avatar may vary depending on a body flexibility.
A body shape, that is, a skeleton may be configured in a shape of an actual human being based on bones of the human being existing in the real world. For example, the body shape may include left and right clavicle, left and right scapulaes, left and right humerus, left and right radiuses, left and right wrists, left and right hands, left and right thumbs, and the like. Also, the body control expressing movements of the skeleton may reflect movements of respective bones to express movements of the body, and the movements of the respective bones may be controlled using a joint point of each bone. Since the respective bones are connected with each other, neighbouring bones may share the joint point. Thus, starting a pelvis as a reference point, end points far away from the pelvis from among end points of the respective bones may be defined as control points of the respective bones, and non-predefined motions of the avatar may be diversely expressed by moving the control points. For example, motions of the humerus may be controlled based on information associated with a three-dimensional (3D) position, a direction, and a length of a joint point with respect to an elbow. Fingers may be also controlled based on information associated with a 3D position, a direction, and a length of an end point of each joint. Movements of each joint may be controlled based on only the position, or based on the direction and the distance.

In the case of the avatar body control using the above, motions of users of the real world may be recognized using a camera or a motion sensor sensing motions to adapt the recognized motions onto motions of an avatar of the virtual world. The avatar body control may be performed through a process similar to the avatar face control described above with reference to FIG. 6. Specifically, position and direction information of feature points of a skeleton of a user may be obtained using the camera, the motion sensor, and the like, and the obtained information may be transmitted to the adaptation RV. The information may be mapped to skeleton feature point information of the reference avatar model through a regularization process (for matching skeleton model information calculated based on characteristics of a face size of a user and a face size of the avatar model) and then be transmitted to the adaptation RV engine, or the aforementioned process may be performed by the adaptation RV engine. The processed information may be re-adjusted to be adapted for a skeleton model of the individual avatar of the virtual world, and be transmitted to the virtual world based on the position information of the virtual world. Thus, the movements of the user of the real world may be adapted onto movements of the avatar of the virtual world.

As described above, according to an embodiment, by means of an avatar feature control signifying characteristics of an avatar, various facial expressions, motions, personalities, and the like of a user may be naturally expressed. For this purpose, a user of a real world may be sensed using a sensing device, for example, a camera, a motion sensor, an infrared light, and the like, to reproduce characteristics of the user to an avatar as is. Accordingly, various figures of users may be naturally adapted onto the avatar of the virtual world.

An active avatar control may be a general parametic model used to track, recognize, and synthesize common features in a data sequence from the sensing device of the real world. For example, a captured full body motion of the user may be transmitted to a system to control a motion of the avatar. Body motion sensing may use a set of wearable or attachable 3D position and posture sensing devices. Thus, a concept of an avatar body control may be added. The concept may signify enabling a full control of the avatar by employing all sensed motions of the user.

The control is not limited to the avatar and thus may be applicable to all the objects existing in the virtual environment. For this, according to an embodiment, an object controlling system may include a control command receiver to receive a control command with respect to an object of a virtual environment, and an object controller to control the object based on the received control command and object information of the object. The object information may include common characteristics of a virtual world object as metadata for the virtual world object, include avatar information as metadata for an avatar, and virtual object information as metadata for a virtual object.

The object information may include common characteristics of a virtual world object. The common characteristics may include, as metadata, at least one element of an Identification for identifying the virtual world object, a virtual world object sound (VWOSound), a virtual world object scent (VWOScent), a virtual world object control (VWOControl), a virtual world object event (VWOEvent), a virtual world object behavior model (VWOBehaviorModel), and virtual world object haptic properties (VWOHapticProperties).

The Identification may include, as an element, at least one of a user identifier (UserID) for identifying a user associated with the virtual world object, an Ownership of the virtual world object, Rights, and Credits, and may include, as an attribute, at least one of a name of the virtual world object and a family with another virtual world object.

The VWOSound may include, as an element, a sound resource uniform resource locator (URL) including at least one link to a sound file, and may include, as an attribute, at least one of a sound identifier (SoundID) that is a unique identifier of an object sound, an intensity indicating a sound strength, a duration indicating a length of time where the sound lasts, a loop indicating a playing option, and a sound name.

The VWOScent may include, as an element, a scent resource URL including at least one link to a scent file, and may include, as an attribute, at least one of a scent identifier (ScentID) that is a unique identifier of an object scent, an intensity indicating a scent strength, a duration indicating a length of time where the scent lasts, a loop indicating a playing option, and a scent name.

The VWOControl may include, as an element, a motion feature control (MotionFeatureControl) that is a set of elements controlling a position, an orientation, and a scale of the virtual world object, and may include, as an attribute, a control identifier (ControlID) that is a unique identifier of control. In this instance, the MotionFeatureControl may include, as an element, at least one of a position of an object in a scene with a three-dimensional (3D) floating point vector, an orientation of the object in a scene with the 3D floating point vector as an Euler angle, and a scale of the object in a scene expressed as the 3D floating point vector.

The VWOEvent may include, as an element, at least one of a Mouse that is a set of mouse event elements, a Keyboard that is a set of keyboard event elements, and a user defined input (UserDefinedInput), and may include, as an attribute, an event identifier (EventID) that is a unique identifier of an event. The Mouse may include, as an element, at least one of a click, double click (Double_Click), a left button down (LeftBttn_down) that is an event taking place at the moment of holding down a left button of a mouse, a left button up (LeftBttn_up) that is an event taking place at the moment of releasing the left button of the mouse, a right button down (RightBttn_down) that is an event taking place at the moment of pushing a right button of the mouse, a right button up (RightBttn_up) that is an event taking place at the moment of releasing the right button of the mouse, and a move that is an event taking place while changing a position of the mouse. Also, the Keyboard may include, as an element, at least one of a key down (Key_Down) that is an event taking place at the moment of holding down a keyboard button and a key up (Key_Up) that is an event taking place at the moment of releasing the keyboard button.

The VWOBehaviorModel may include, as an element, at least one of a behavior input (BehaviorInput) that is an input event for generating an object behavior and a behavior output (BehaviorOutput) that is an object behavior output according to the input event. In this instance, the BehaviorInput may include an EventID as an attribute, and the BehaviorOutput may include, as an attribute, at least one of a SoundID, a ScentID, and an animation identifier (AnimationID).

The VWOHapticProperties may include, as an attribute, at least one of a material property (MaterialProperty) that contains parameters characterizing haptic properties, a dynamic force effect (DynamicForceEffect) that contains parameters characterizing force effects, and a tactile property (TactileProperty) that contains parameters characterizing tactile properties. In this instance, the MaterialProperty may include, as an attribute, at least one of a Stiffness of the virtual world object, a static friction (StaticFriction) of the virtual world object, a dynamic friction (DynamicFriction) of the virtual world object, a Damping of the virtual world object, a Texture containing a link to a haptic texture file, and a mass of the virtual world object. Also, the DynamicForceEffect may include, as an attribute, at least one of a force field (ForceField) containing a link to a force field vector file and a movement trajectory (MovementTrajectory) containing a link to a force trajectory file. Also, the TactileProperty may include, as an attribute, at least one of a Temperature of the virtual world object, a Vibration of the virtual world object, a Current of the virtual world object, and tactile patterns (TactilePatterns) containing a link to a tactile pattern file.

The object information may include avatar information associated with an avatar of a virtual world, and the avatar information may include, as the metadata, at least one element of an avatar appearance (AvatarAppearance), an avatar animation (AvatarAnimation), avatar communication skills (AvatarCommunicationSkills), an avatar personality (AvatarPersonality), avatar control features (AvatarControlFeatures), and avatar common characteristics (AvatarCC), and may include, as an attribute, a Gender of the avatar.

The AvatarAppearance may include, as an element, at least one of a Body, a Head, Eyes, Ears, a Nose, a mouth lip (MouthLip), a Skin, a facial, a Nail, a body look (BodyLook), a Hair, eye brows (EyeBrows), a facial hair (FacialHair), facial calibration points (FacialCalibrationPoints), a physical condition (PhysicalCondition), Clothes, Shoes, Accessories, and an appearance resource (AppearanceResource).

The AvatarAnimation may include at least one element of an Idle, a Greeting, a Dance, a Walk, a Moves, a Fighting, a Hearing, a Smoke, Congratulations, common actions (Common_Actions), specific actions (Specific_Actions), a facial expression (Facial_Expression), a body expression (Body_Expression), and an animation resource (Animation-Resource).

The AvatarCommunicationSkills may include, as an element, at least one of an input verbal communication (InputVerbalCommunication), an input nonverbal communication (InputNonVerbalCommunication), an output verbal communication (OutputVerbalCommunication), and an output nonverbal communication (OutputNonVerbalCommunication), and may include, as an attribute, at least one of a Name and a default language (DefaultLanguage). In this instance, a verbal communication including the InputVerbalCommunication and OutputVerbalCommunication may include a language as the element, and may include, as the attribute, at least one of a voice, a text, and the language. The language may include, as an attribute, at least one of a name that is a character string indicating a name of the language and a preference for using the language in the verbal communication. Also, a communication preference including the preference may include a preference level of a communication of the avatar. The language may be set with a communication preference level (CommunicationPreferenceLevel) including a preference level for each language that the avatar is able to speak or understand. Also, a nonverbal communication including the InputNonVerbalCommunication and the OutputNonVerbalCommunication may include, as an element, at least one of a sign language (SignLanguage) and a cued speech communication (CuedSpeechCommumication), and may include, as an attribute, a complementary gesture (ComplementaryGesture). In this instance, the SignLanguage may include a name of a language as an attribute.

The AvatarPersonality may include, as an element, at least one of an openness, a conscientiousness, an extraversion, an agreeableness, and a neuroticism, and may selectively include a name of a personality.

The AvatarControlFeatures may include, as elements, control body features (ControlBodyFeatures) that is a set of elements controlling moves of a body and control face features (ControlFaceFeature) that is a set of elements controlling moves of a face, and may selectively include a name of a control configuration as an attribute.

The ControlBodyFeatures may include, as an element, at least one of head bones (headBones), upper body bones (UpperBodyBones), down body bones (DownBodyBones), and middle body bones (MiddleBodyBones). In this instance, the ControlFaceFeatures may include, as an element, at least one of a head outline (HeadOutline), a left eye outline (LeftEyeOutline), a right eye outline (RightEyeOutline), a left eye brow outline (LeftEyeBrowOutline), a right eye brow outline (RightEyeBrowOutline), a left ear outline (LeftEarOutline), a right ear outline (RightEarOutline), a nose outline (NoseOutline), a mouth lip outline (MouthLipOutline), face points (FacePoints), and miscellaneous points (MiscellaneousPoints), and may selectively include, as an attribute, a name of a face control configuration. In this instance, at least one of elements included in the ControlFaceFeatures may include, as an element, at least one of an outline (Outline4Points) having four points, an outline (Outline5Points) having five points, and an outline (Outline8Points) having eight points, and an outline (Outline14Points) having fourteen points. Also, at least one of elements included in the ControlFaceFeatures may include a basic number of points and may selectively further include an additional point.

The object information may include information associated with a virtual object. Information associated with the virtual object may include, as metadata for expressing a virtual object of the virtual environment, at least one element of a virtual object appearance (VOAppearance), a virtual object animation (VOAnimation), and virtual object common characteristics (VOCC).

When at least one link to an appearance file exists, the VOAppearance may include, as an element, a virtual object URL (VirtualObjectURL) that is an element including the at least one link.

The VOAnimation c may include, as an element, at least one of a virtual object motion (VOMotion), a virtual object deformation (VODeformation), and a virtual object additional animation (VOAdditionalAnimation), and may include, as an attribute, at least one of an animation identifier (AnimationID), a Duration that is a length of time where an animation lasts, and a Loop that is a playing option.

Metadata that may be included in the object information will be further described later.

When the object is an avatar, the object controller may control the avatar based on the received control command and metadata defining an avatar face feature point and a body feature point for controlling a facial expression and a motion of the avatar. When the object is an avatar of a virtual world, the control command may be generated by sensing a facial expression and a body motion of a user of a real world. The object controller may control the object to map characteristics of the user to the avatar of the virtual world according to the facial expression and the body motion.

An object controlling method according to an embodiment may include receiving a control command with respect to an object of a virtual environment, and controlling the object based on the received control command and object information of the object. The object information used in the object controlling method may be equivalent to object information used in the object controlling system. In this instance, the controlling may include controlling the avatar based on the received control command and metadata defining an avatar face feature point and a body feature point for controlling a facial expression and a motion of an avatar when the object is the avatar. Also, when the object is an avatar of a virtual world, the control command may be generated by sensing a facial expression and a body motion of a user of a real world, and the controlling may include controlling the object to map characteristics of the user to the avatar of the virtual world according to the facial expression and the body motion.

An object controlling system according to an embodiment may include a control command generator to generate a regularized control command based on information received from a real world device, a control command transmitter to transmit the regularized control command to a virtual world server, and an object controller to control a virtual world object based on information associated with the virtual world object received from the virtual world server. In this instance, the object controlling system according to the present embodiment may perform a function of a single terminal, and an object controlling system according to another embodiment, performing a function of a virtual world server, may include an information generator to generate information associated with a corresponding virtual world object by converting a regularized control command received from a terminal according to the virtual world object, and an information transmitter to transmit information associated with the virtual world object to the terminal. The regularized control command may be generated based on information received by the terminal from a real world device.

An object controlling method according to another embodiment may include a generating a regularized control command based on information received from a real world device, transmitting the regularized control command to a virtual world server, and controlling a virtual world object based on information associated with the virtual world object received from the virtual world server. In this instance, the object controlling method according to the present embodiment may be performed by a single terminal, and an object controlling method according to still another embodiment may be performed by a virtual world server. Specifically, the object controlling method performed by the virtual world server may include generating information associated with a corresponding virtual world object by converting a regularized control command received from a terminal according to the virtual world object, and transmitting information associated with the virtual world object to the terminal. The regularized control command may be generated based on information received by the terminal from a real world device.

An object controlling system according to still another embodiment may include an information transmitter to transmit, to a virtual world server, information received from a real world device, and an object controller to control a virtual world object based on information associated with the virtual world object that is received from the virtual world server according to the transmitted information. In this instance, the object controlling system according to the present embodiment may perform a function of a single terminal, and an object controlling system according to yet another embodiment, performing a function of a virtual world server, may include a control command generator to generate a regularized control command based on information received from a terminal, an information generator to generate information associated with a corresponding virtual world object by converting the regularized control command according to the virtual world object, and an information transmitter to transmit information associated with the virtual world object to the terminal. The received information may include information received by the terminal from a real world device.

An object controlling method according to yet another embodiment may include transmitting, to a virtual world server, information received from a real world device, and controlling a virtual world object based on information associated with the virtual world object that is received from the virtual world server according to the transmitted information. In this instance, the object controlling method according to the present embodiment may be performed by a single terminal, and an object controlling method according to a further another embodiment may be performed by a virtual world server. The object controlling method performed by the virtual world server may include generating a regularized control command based on information received from a terminal, generating information associated with a corresponding virtual world object by converting the regularized control command according to the virtual world object, and transmitting information associated with the virtual world object to the terminal. The received information may include information received by the terminal from a real world device.

An object controlling system according to a further another embodiment may include a control command generator to generate a regularized control command based on information received from a real world device, an information generator to generate information associated with a corresponding virtual world object by converting the regularized control command according to the virtual world object, and an object controller to control the virtual world object based on information associated with the virtual world object.

An object controlling method according to still another embodiment may include generating a regularized control command based on information received from a real world device, generating information associated with a corresponding virtual world object by converting the regularized control command according to the virtual world object, and controlling the virtual world object based on information associated with the virtual world object.

An object controlling system according to still another embodiment may include a control command generator to generate a regularized control command based on information received from a real world device, an information generator to generate information associated with a corresponding virtual world object by converting the regularized control command according to the virtual world object, an information exchanging unit to exchange information associated with the virtual world object with information associated with a virtual world object of another object controlling system, and an object controller to control the virtual world object based on information associated with the virtual world object and the exchanged information associated with the virtual world object of the other virtual world object.

An object controlling method according to still another embodiment may include generating a regularized control command based on information received from a real world device, generating information associated with a corresponding virtual world object by converting the regularized control command according to the virtual world object, exchanging information associated with the virtual world object with information associated with a virtual world object of another object controlling system, and controlling the virtual world object based on information associated with the virtual world object and the exchanged information associated with the virtual world object of the other virtual world object.

An object controlling system according to still another embodiment may include an information generator to generate information associated with a virtual world object based on information received from a real world device and virtual world information received from a virtual world server, an object controller to control the virtual world object based on information associated with the virtual world object, and a processing result transmitter to transmit, to the virtual world server, a processing result according to controlling of the virtual world object. In this instance, the object controlling system according to the present embodiment may perform a function of a single terminal, and an object controlling system according to still another embodiment, performing a function of a virtual world server, may include an information transmitter to transmit virtual world information to a terminal, and an information update unit to update the virtual world information based on a processing result received from the terminal. The processing result may include a control result of a virtual world object based on information received by the terminal from a real world device, and the virtual world information.

An object controlling method according to still another embodiment may include generating information associated with a virtual world object based on information received from a real world device and virtual world information received from a virtual world server, controlling the virtual world object based on information associated with the virtual world object, and transmitting, to the virtual world server, a processing result according to controlling of the virtual world object. In this instance, the object controlling method according to the present embodiment may be performed by a single terminal, and an object controlling method according to still another embodiment may be performed by a virtual world server. The object controlling method performed by the virtual world server may include transmitting virtual world information to a terminal, and updating the virtual world information based on a processing result received from the terminal.

The processing result may include a control result of a virtual world object based on information received by the terminal from a real world device, and the virtual world information.

The object controller according to one or more embodiments may control the virtual world object by generating a control command based on information associated with the virtual world object and transmitting the generated control command to a display.

2. Virtual World Object metadata

2.1 Types of metadata

A specificity of Virtual Environments (VEs) with respect to other multimedia applications may lie in the representation of virtual world objects inside the environment. The "virtual world object" may be classified into two types, such as avatars and virtual objects. An avatar may be used as a (visual) representation of the user inside the environment. These virtual world objects serve different purposes:

- characterize various kinds of objects within the VE,
- provide an interaction with the VE.

In general, creating an object is a time consuming task. Even though some components of the object may be related to the VE (for example, the avatar wearing a medieval suite in a contemporary style VE may be inappropriate), there may be a real need of being able to create the object once and import/use it in different VEs. In addition, the object may be controlled from external applications. For example, the emotions one avatar exposes in the VE can be obtained by processing the associated user's physiological sensors.

The current standard proposes an XML Schema, called Virtual World Object Characteristics XSD, for describing an object by considering three main requirements:

- it should be possible to easily create importers and exporters from various VEs implementations,
- it should be easy to control an object within an VE,
- it should be possible to modify a local template of the object by using data contained in Virtual World Object Characteristics file.

The proposed schema may deal only with metadata and may not include representation of a geometry, a sound, a scent, an animation, or a texture. To represent the latter, references to media resources are used.

There are common types of attributes and characteristics of the virtual world objects which are shared by both avatars and the virtual objects.

The common associated attributes and characteristics are composed of following type of data:

- Identity: contains identification descriptors.
- Sound: contains sound resources and the related properties.
- Scent: contains scent resources and the related properties.
- Control: contains a set of descriptors for controlling motion features of an object such as translation, orientation and scaling.
- Event: contains a set of descriptors providing input events from a mouse, keyboard and etc.
- Behaviour Model: contains a set of descriptors defining the behavior information of the object according to input events.
- Haptic Properties: contains a set of high level descriptors of the haptic properties.

The common characteristics and attributes are inherited to both avatar metadata and virtual object metadata to extend the specific aspects of each of metadata.

2.2 Virtual World Object Common Characteristics

2.2.1 CommonCharacteristicsType

2.2.1.1 Syntax

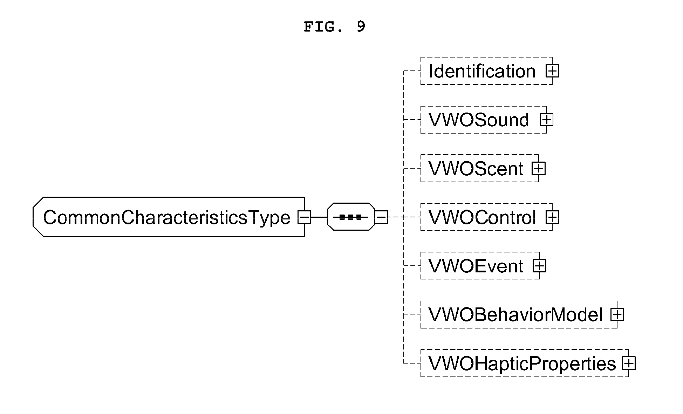

FIG. 9 illustrates a structure of a CommonCharacteristicsType according to an embodiment. Table 1 shows a syntax of the CommonCharacteristicsType.

[Table 1]

| | |
|---|---|
| Childr en | <Identification>, <VWOSound>, <VWOScent>, <VWOControl>, <VWOEvent>, <VWOBehaviorModel>, <VWOHapticProperties> |
| Attrib utes | - |
| Source | <xsd:complexType name="CommonCharacteristicsType" abstract="true"> <xsd:sequence> <xsd:element name="Identification" type="IdentificationType" minOccurs="0"/> <xsd:element name="VWOSound" type="VWOSoundType" minOccurs="0"/> <xsd:element name="VWOScent" |
| | type="VWOScentType" minOccurs="0"/> <xsd:element name="VWOControl" type="VWOControlType" minOccurs="0"/> <xsd:element name="VWOEvent" type="VWOEventType" minOccurs="0"/> <xsd:element name="VWOBehaviorModel" type="VWOBehaviorModelType" minOccurs="0"/> <xsd:element name="VWOHapticProperties" type="VWOHapticPropertyType" minOccurs="0"/> </xsd:sequence> </xsd:complexType> |

2.2.1.2 Semantics

Table 2 below shows semantics of the CommonCharacteristicsType.

[Table 2]

| Name | Description |
|---|---|
| Identification | Describes the identification of the virtual world object. |
| VWOSound | Describes the sound effect associated to the virtual world object. |
| VWOScent | Describes the scent effect associated to the virtual world object. |
| VWOControl | Describes the control such as scaling, translation, and rotation associated to the virtual world object. |
| VWOEvent | Describes the input event associated to the virtual world object. |
| VWOBehaviorMode 1 | Describes the behaviour model associated to the virtual world object. |
| VWOHapticProper ties | Contain the high level description of the haptic properties of the virtual world object. |

2.2.2 IdentificationType

2.2.2.1 Syntax

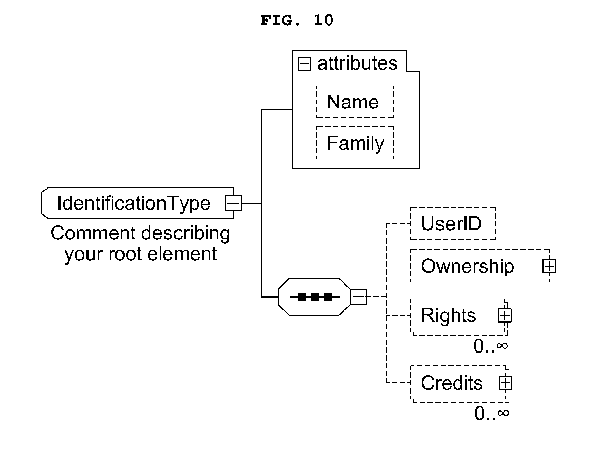

FIG. 10 illustrates a structure of an IdentificationType according to an embodiment. Table 3 shows syntax of the IdentificationType.

[Table 3]

| Children | <UserID>, <Ownership>, <Rights>, <Credits> |
|---|---|
| Attributes | Name, Family |
| source | <xsd:complexType name="IdentificationType"><br>        <xsd:annotation><br>                <xsd:documentation>Comment describing your root element</xsd:documentation><br>        </xsd:annotation><br>        <xsd:sequence><br>                <xsd:element name="UserID" type="xsd:anyURI" minOccurs="0"/><br>                <xsd:element name="Ownership" type="mpeg7:AgentType" minOccurs="0"/><br>                <xsd:element name="Rights" type="r:License" minOccurs="0" maxOccurs="unbounded"/><br>                <xsd:element name="Credits" type="mpeg7:AgentType" minOccurs="0" maxOccurs="unbounded"/><br>                <!-- Extend the agentType to have the number in chronological order.--><br>        </xsd:sequence><br>        <xsd:attribute name="Name" type="xsd:string" use="optional"/><br>        <xsd:attribute name="Family" type="xsd:string" use="optional"/><br></xsd:complexType> |

2.2.2.2 Semantics

Table 4 shows semantics of the IdentificationType.

[Table 4]

| Name | Definition |
|---|---|
| IdentificationType | Describes the identification of a virtual world object. |
| UserID | Contains the user identification associated to the virtual world object. |
| Ownership | Describes the ownership of the virtual world object. |
| Rights | Describes the rights of the virtual world object. |
| Credits | Describes the contributors of the virtual object in chronological order. Note: The 1st listed credit describes an original author of a virtual world object. The subsequent credits represent the list of the contributors of the virtual world object chronologically. |
| Name | Describes the name of the virtual world object. |
| Family | Describes the relationship with other virtual world objects. |

2.2.3 VWO(Virtual World Object)SoundType

2.2.3.1 Syntax

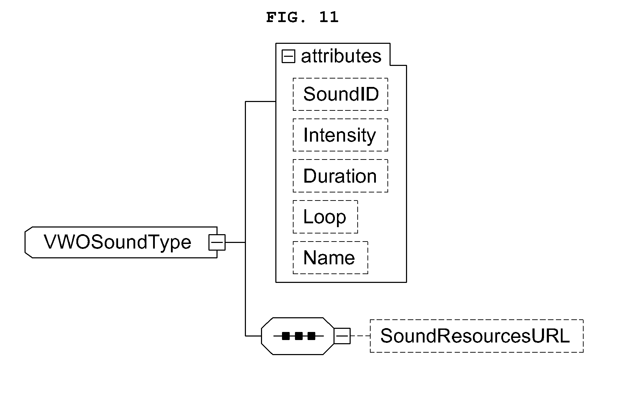

FIG. 11 illustrates a structure of a VWOSoundType according to an embodiment. Table 5 shows a syntax of the VWOSoundType.

[Table 5]

| Children | <SoundResourcesURL> |
|---|---|
| Attributes | SoundID, Intensity, Duration, Loop, Name |
| source | <xsd:complexType name="VWOSoundType"><br><xsd:sequence><br>    <xsd:element name="SoundResourcesURL" type="xsd:anyURI" minOccurs="0 /><br>    </xsd:sequence><br>    <xsd:attribute name="SoundID" type="xsd:anyURI"use="optional"/><br>    <xsd:attribute name="Intensity" type="xsd:decimal" use="optional"/><br>    <xsd:attribute name="Duration" type="xsd:unsignedInt" use="optional"/><br>    <xsd:attribute name="Loop" type="xsd:unsignedInt" use="optional"/><br>    <xsd:attribute name="Name " type="xsd:string" use="optional"/><br>    </xsd:complexType> |

2.2.3.2 Semantics

Table 6 shows semantics of the VWOSoundType.

【Table 6】

| Name | Definition | |
|---|---|---|
| SoundResourcesURL | Element that contains, if exist, one or more link(s) to Sound(s) file(s). | |
| | anyURI | Contains link to sound file, usually MP4 file. Can occur zero, once or more times. |
| SoundID | This is a unique identifier of the object Sound. | |
| Intensity | The strength(volume) of the sound. | |
| Duration | The length of time that the sound lasts. | |
| Loop | This is a playing option. (default value: 1, 0:repeated, 1:once, 2: twice, …, n: n times. | |

| Name | This is a name of the sound. |
|---|---|

2.2.3.3 Examples:

Table 7 shows the description of the sound information associated to an object with the following semantics. The sound resource whose name is "BigAlarm" is saved at "http://sounddb.com/alarmsound_0001.wav" and the value of SoundID, its identifier is "3." The length of the sound is 30 seconds. The sound shall be played with the volume of intensity = "50%" repeatedly.

[Table 7]

| |
|---|
| <VWOSound SoundID="3" Duration="30" Intensity="0.5" Loop="0" Name="BigAlarm"><br><SoundResourcesURL>http://sounddb.com/alarmsound_0001.wav</SoundResourcesURL<br></VWOSound> |

2.2.4 VWOScentType

2.2.4.1 Syntax

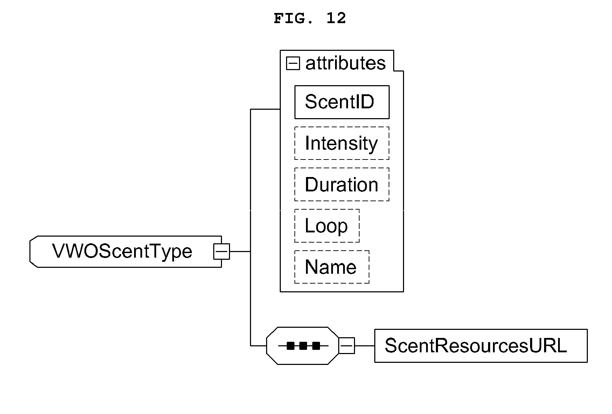

FIG. 12 illustrates a structure of the VWOScentType according to an embodiment. FIG. 8 illustrates a syntax of the VWOScentType.

[Table 8]

| Children | <ScentResourcesURL> |
|---|---|
| Attributes | ScentID, Intensity, Duration, Loop, Name |
| source | <xsd:complexType name="VWOScentType"><br>    <xsd:sequence><br>        <xsd:element name="ScentResourcesURL" type="xsd:anyURI" minOccurs="0" /><br>    </xsd:sequence><br>    <xsd:attribute name="ScentID" type="xsd:anyURI"use="optional"/><br>    <xsd:attribute name="Intensity " type="xsd:decimal" use="optional"/><br>    <xsd:attribute name="Duration " type="xsd:unsignedInt" use="optional"/> |
| |     <xsd:attribute name="Loop" type="xsd:unsignedInt" use="optional"/><br>    <xsd:attribute name="Name " type="xsd:string" use="optional"/><br></xsd:complexType> |

2.2.4.2 Semantics

Table 9 shows semantics of the VWOScentType.

【Table 9】

| Name | Definition |
|---|---|
| ScentResourcesURL | Element that contains, if exist, one or more link(s) to Scent (s) file(s).<br><br><table><tr><td>anyURI</td><td>Contains link to Scent file. Can occur zero, once or more times.</td></tr></table> |
| ScentID | This is a unique identifier of the object Scent. |
| Intensity | The strength of the Scent |
| Duration | The length of time that the Scent lasts. |
| Loop | This is a playing option. (default value: 1, 0:repeated, 1:once, 2: twice, …, n: n times) |
| Name | This is the name of the scent. |

2.2.4.3 Examples

Table 10 shows the description of the scent information associated to the object. The scent resource whose name is "rose" is saved at "http://scentdb.com/flower_0001.sct" and the value of ScentID, its identifier is "5." The intensity shall be 20% with duration of 20 seconds.

[Table 10]

```
<VWOScent ScentID="5" Duration="20" Intensity="0.2"
Name="rose">
                <ScentResourcesURL>
http://scentdb.com/flower_0001.sct</ScentResourcesURL>
</VWOScent>
```

2.2.5 VWOControlType

2.2.5.1 Syntax

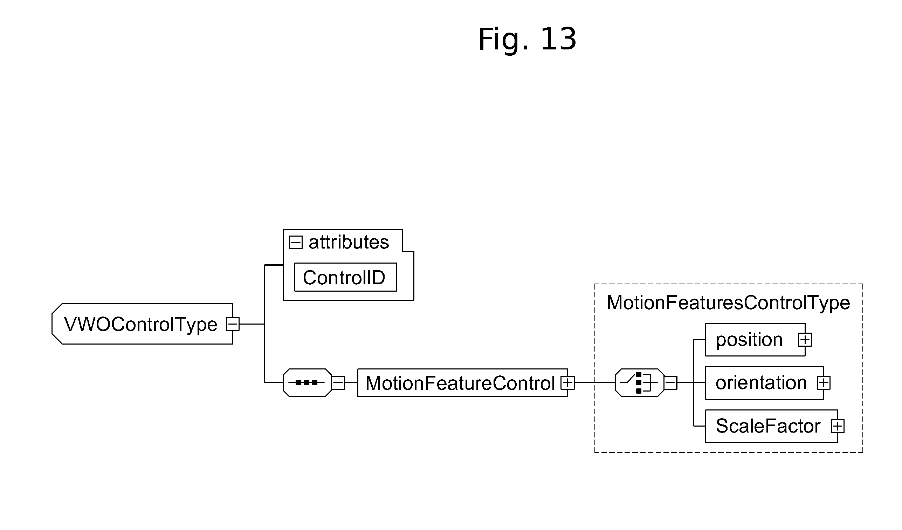

FIG. 13 illustrates a structure of aVWOControlType according to an embodiment. Table 11 shows a syntax of the VWOControlType.

[Table 11]

| Children | <MotionFeatureConrol> |
|---|---|
| Attribute | ControlID |
| | <xsd:complexType name="VWOControlType"><br>        <xsd:sequence><br>                <xsd:element<br>name="MotionFeatureControl"<br>type="MotionFeaturesControlType" minOccurs="0"/><br>        </xsd:sequence><br>        <xsd:attribute name="ControlID" |

(continued)

| Source | type="xsd:anyURI" use="optional"/><br></xsd:complexType><br>           <xsd:complexType name="MotionFeaturesControlType"><br>              <xsd:sequence><br>                <xsd:element name="position" type="mpegvct:Float3DVectorType" minOccurs="0"/><br>                <xsd:element name="orientation" type="mpegvct:Float3DVectorType" minOccurs="0"/><br>                <xsd:element name="ScaleFactor" type="mpegvct:Float3DVectorType" minOccurs="0"/><br>              </xsd:sequence><br>            </xsd:complexType> |
|---|---|

2.2.5.2 Semantics

Table 12 shows semantics of the VWOControlType.

【Table 12】

| Name | Definition |
|---|---|
| MotionFeatureControl | Set of elements that control position, orientation and scale of the virtual object.<br><br>| Element | Information |<br>|---|---|<br>| Position | The position of the object in the scene with 3D floating point vector (x, y, z). |<br>| Orientation | The orientation of the object in the scene with 3D floating point vector as an Euler angle (yaw, pitch, roll). |<br>| ScaleFactor | The scale of the object in the scene expressed as 3D floating point vector (Sx, Sy, Sz). | |
| ContorlID | A unique identifier of the Control. |

2.2.5.3 Examples

Table 13 shows the description of object control information with the following semantics. The motion feature control of changing a position is given and its value of ControlID, its identifier is "7." The object shall be positioned at DistanceX="122.0", DistanceY="150.0" and DistanceZ="40.0".

[Table 13]

```
<VWOControl ControlID="7">
        <MotionFeatureControl>

                        <position DistanceX="122.0" DistanceY="150.0"
DistanceZ="40.0" />
        </MotionFeatureControl>
</VWOControl>
```

2.2.6 VWOEventType

2.2.6.1 Syntax

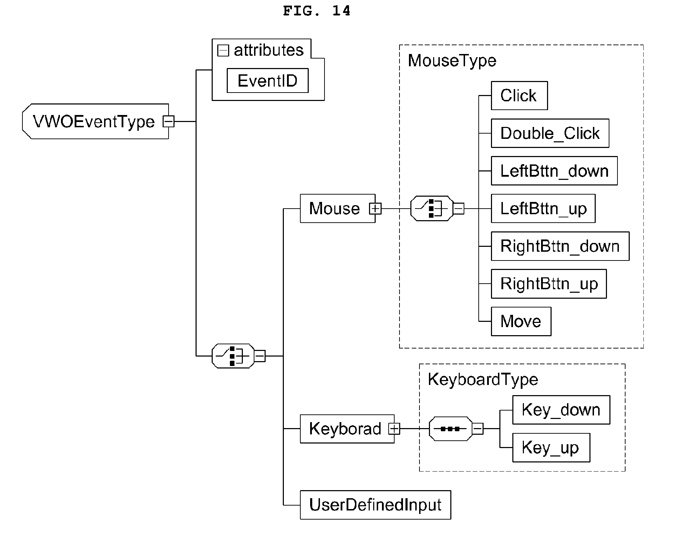

FIG. 14 illustrates a structure of a VWOEventType according to an embodiment. Table 14 shows a syntax of the VWOEventType.

[Table 14]

| | |
|---|---|
| Children Attribute | <Mouse>, <Keyboard>, <UserDefinedInput> <br> EventID |
| Source | <xsd:complexType name="VWOEventType"> <br>             <xsd:choice> <br>                         <xsd:element name="Mouse" type="MouseType" minOccurs="0"/> <br>                         <xsd:element name="Keyboard" type="KeyboardType" minOccurs="0"/> <br>                         <xsd:element name="UserDefinedInput" type="xsd:string" minOccurs="0"/> <br>             </xsd:choice> <br>             <xsd:attribute name="EventID" type="xsd:anyURI" use="optional"/> <br> </xsd:complexType> <br><br> <xsd:complexType name="MouseType"> <br>             <xsd:choice> <br>                         <xsd:element name="Click" minOccurs="0"/> <br>                         <xsd:element name="Double_Click" minOccurs="0"/> <br>                         <xsd:element name="LeftBttn_down" minOccurs="0"/> <br>                         <xsd:element name="LeftBttn_up" minOccurs="0"/> <br>                         <xsd:element name="RightBttn_down" minOccurs="0"/> <br>                         <xsd:element name="RightBttn_up" minOccurs="0"/> <br>                         <xsd:element name="Move" minOccurs="0"/> <br>             </xsd:choice> <br> </xsd:complexType> <br> <xsd:complexType name="KeyboardType"> |

(continued)

| | |
|---|---|
| | `<xsd:sequence>`<br>`<xsd:element name="Key_down" minOccurs="0"/>`<br>`<xsd:element name="Key_up" minOccurs="0"/>`<br>`</xsd:sequence>`<br>`</xsd:complexType>` |

2.2.6.2 Semantics

Table 15 shows semantics of the VWOEventType.

【Table 15】

| Name | Definition |
|---|---|
| Mouse | Set of Mouse Event elements.<br><br>Element — Information<br><br>Click — Click the left button of a mouse (Tap swiftly).<br><br>Double_Click — Double-Click the left button of a mouse (Tap swiftly and with the taps as close to each other as possible).<br><br>LeftBttn_down — The event which takes place at |

| | | the moment of holding down the left button of a mouse. |
| | LeftBttn_up | The event which takes place at the moment of releasing the left button of a mouse. |
| | RightBttn_down | The event which takes place at the moment of pushing the right button of a mouse. |
| | RightBttn_up | The event which takes place at the moment of releasing the right button of a mouse. |
| | Move | The event which takes place while changing the mouse position. |
| Keyboard | Set of Keyboard Event elements. | |
| | Element | Information |
| | Key_Down | The event which takes place at the moment of holding a keyboard button down. |
| | Key_Up | The event which takes place at the moment of releasing a keyboard button. |
| UserDefinedInput | UserDefinedInput | |
| EventID | A unique identifier of the Event. | |

2.2.6.3 Examples

Table 16 shows the description of an object event with the following semantics. The mouse as an input device produces new input value, "click." For identifying this input, the value of EventID is "3."

[Table 16]

| <VWOEvent EventID="3"> |
| --- |
| <Mouse>                <Click/>       </Mouse><br></VWOEvent> |

2.2.7 VWOBehaviourModelType

2.2.7.1 Syntax

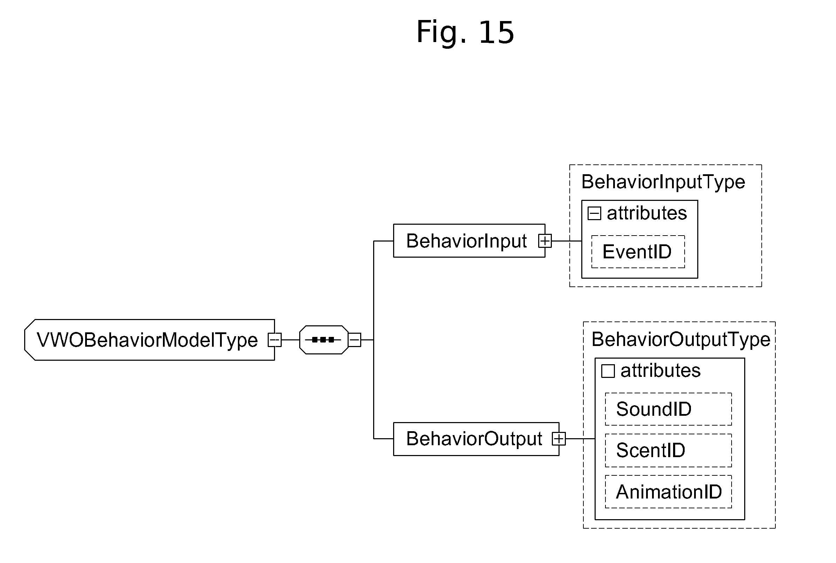

FIG. 15 illustrates a structure of a VWOBehaviourModelType according to an embodiment. Table 17 shows a syntax of the VWOBehaviourModelType.

[Table 17]

| Children | <BehaviorInput>, <BehaviorOutput> |
|---|---|
| Source | <xsd:complexType name="VWOBehaviorModelType"><br>    <xsd:sequence><br>        <xsd:element name="BehaviorInput" type="BehaviorInputType" minOccurs="0"/><br>        <xsd:element name="BehaviorOutput" type="BehaviorOutputType" minOccurs="0"/><br>    </xsd:sequence><br></xsd:complexType><br><br><xsd:complexType name="BehaviorInputType"><br><xsd:attribute name="EventID" type="xsd:anyURI" use="optional"/><br></xsd:complexType><br><xsd:complexType name="BehaviorOutputType"><br><xsd:attribute name="SoundID" type="xsd:anyURI" use="optional"/><br><xsd:attribute name="ScentID" type="xsd:anyURI" use="optional"/><br><xsd:attribute name="AnimationID" type="xsd:anyURI" use="optional"/><br></xsd:complexType> |

2.2.7.2 Semantics

Table 18 shows semantics of the VWOBehaviourModelType.

【Table 18】

| Name | Definition |
|---|---|
| VWOBehaviorModelType | Describes a container of an input event and the associated output object behaviors. |
| BehaviorInput | Input event to make an object behavior.<br><br>Element    Information<br><br>EventID   (Input event |
| BehaviorOutput | Object behavior output according to an input event<br><br>Element      Information<br>SoundID       It refers SoundID to provide a sound behavior of the object.<br>ScentID       It refers ScentID to provide a scent behavior of the object.<br>AnimationID  It refers AnimationID to provide a animation behavior of the object. |

2.2.7.3 Examples

Table 19 shows the description of a VWO behavior model with the following semantics. If EventID ="1" is given as BehaviorInput, then BehaviorOutput shall be executed related to SoundID="5" and AnimationID="4."

[Table 19]

| |
|---|
| <VWOBehaviorModel><br>        <BehaviorInput EventID="1"/><br>        <BehaviorOutput AnimationID="4" SoundID="5" /> |
| </VWOBehaviorModel> |

2.2.8 VWOHapticPropertyType

2.2.8.1 Syntax

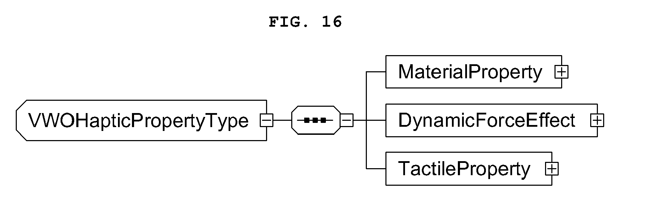

FIG. 16 illustrates a structure of a VWOHapticPropertyType according to an embodiment. Table 20 shows a syntax of the VWOHapticPropertyType.

[Table 20]

| Children | <MaterialProperty>, <DynamicForceEffect>, <TactileProperty> |
|---|---|
| Attributes - | |
| Source | <xsd:complexType name="VWOHapticPropertyType"><br><xsd:sequence><br><xsd:element name="MaterialProperty" type="MaterialPropertyType" " minOccurs="O"/><br><xsd:element name="DynamicForceEffect" type="DynamicForceEffectType" minOccurs="0"/><br><xsd:element name="TactileProperty" type="TactileType" minOccurs="0"/><br></xsd:sequence><br></xsd:complexType> |

2.2.8.2 Semantics

Table 21 shows semantics of the VWOHapticPropertyType.

[Table 21]

| Name | Description |
|---|---|
| MaterialProperty | This type contains parameters characterizing haptic properties. |
| DynamicForceEffect | This type contains parameters characterizing force effects. |
| TactileProperty | This type contains parameters characterizing tactile properties. |

2.2.8.3 MaterialPropertyType

2.2.8.3.1 Syntax

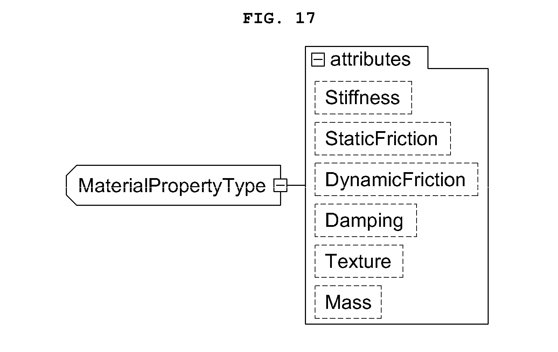

FIG. 17 illustrates a structure of a MaterialPropertyType according to an embodiment. Table 22 shows a syntax of the MaterialPropertyType.

[Table 22]

| attributes | <Stiffness>, <StaticFriction>, <DynamicFriction>, <Damping>, <Texture>, <mass> |
|---|---|
| Source | <xsd:complexType name="MaterialPropertyType"><br><xsd:attribute name="Stiffness" type="xsd:decimal" use="optional"/><br><xsd:attribute name="StaticFriction" type="xsd:decimal" use="optional"/><br><xsd:attribute name="DynamicFriction" type="xsd:decimal" use="optional"/><br><xsd:attribute name="Damping" type="xsd:decimal" use="optional"/><br><xsd:attribute name="Texture" type="xsd:anyURI" use="optional"/><br><xsd:attribute name="Mass" type="xsd:decimal" use="optional"/><br></xsd:complexType> |

2.2.8.3.2 Semantics

Table 23 shows semantics of the MaterialPropertyType.

[Table 23]

| Name | Description |
|---|---|
| SStiffness | The stiffness of the virtual world object (in N/mm). |
| StaticFriction | The static friction of the virtual world object. |
| DynamicFriction | The dynamic friction of the virtual world object. |
| Damping | The damping of the virtual world object. |
| Texture | Contains a link to haptic texture file (e.g., bump image). |
| Mass | The mass of the virtual world object. |

2.2.8.3.3 Examples

Table 24 shows the material properties of a virtual world object which has 0.5 N/mm of stiffness, 0.3 of static coefficient of friction, 0.02 of kinetic coefficient of friction, 0,001 damping coefficient, 0.7 of mass and its surface haptic texture is loaded from the given URL.

[Table 24]

```
<VWOHapticProperties>
                        <MaterialProperty Stiffness="0.5" StaticFriction="0.3"
DynamicFriction="0.02"
Damping="0.001" Texture=http://haptic.kr/tactile/texturel.bmp
Mass="0.7"/>
</VWOHapticProperties>
```

2.2.8.4 DynamicForceEffectType

2.2.8.4.1 Syntax

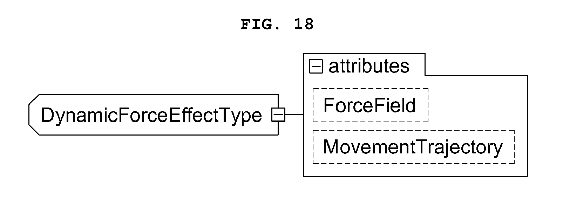

FIG. 18 illustrates a structure of a DynamicForceEffectType according to an embodiment. Table 25 shows a syntax of the DynamicForceEffectType.

[Table 25]

| attributes | <ForceField>, <MovementTrajectory> |
|---|---|
| Source | <xsd:complexType name="DynamicForceEffectType"><br>                    <xsd:attribute name="ForceField"<br>type="xsd:anyURI" use="optional"/><br>                    <xsd:attribute name="MovementTrajectory"<br>type="xsd:anyURI" use="optional"/><br></xsd:complexType> |

2.2.8.4.2 Semantics

Table 26 shows semantics of the DynamicForceEffectType.

[Table 26]

| Name | Description |
|---|---|
| ForceField | Contains link to force filed vector file (sum of force field vectors). |

(continued)

| Name | Description |
|---|---|
| MovementTrajectory | Contains link to force trajectory file (e.g. .dat file including sum of motion data). |

2.2.8.4.3 Examples:

Table 27 shows the dynamic force effect of an avatar. The force field characteristic of the avatar is determined by the designed force field file from the URL.

[Table 27]

```
<VWOHapticProperties>
                <DynamicForceEffect
ForceField="http://haptic.kr/avatar/forcefield.dat"/>
</VWOHapticProperties>
```

2.2.8.5 TactileType

2.2.8.5.1 Syntax

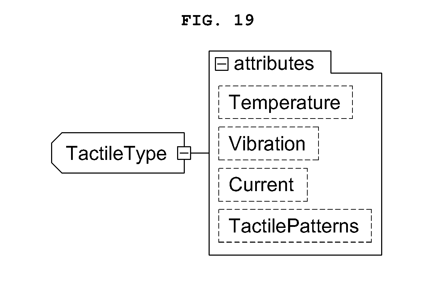

FIG. 19 illustrates a structure of a TactileType according to an embodiment. Table 28 shows a syntax of the TactileType.

[Table 28]

| attributes | <Temperature>, <Vibration>, <Current>, <TactilePatterns> |
|---|---|
| Source | `<xsd:complexType name="TactileType">`<br>`        <xsd:attribute name="Temperature" type="xsd:decimal" use="optional"/>`<br>`        <xsd:attribute name="Vibration" type="xsd:decimal" use="optional"/>` |
| | `                <xsd:attribute name="Current" type="xsd:decimal" use="optional"/>`<br>`                <xsd:attribute name="TactilePatterns" type="xsd:anyURI" use="optional"/>`<br>`</xsd:complexType>` |

2.2.8.5.2 Semantics

Table 29 shows semantics of the TactileType.

[Table 29]

| Name | Description |
|---|---|
| Temperature | The temperature of the virtual world object (in degree celsius). |
| Vibration | The vibration of the virtual world object. |
| Current | The electric current of the virtual world object. (in mA) |
| TactilePatterns | Contains link to tactile pattern file (e.g., grey-scale video (.avi, h.264, or .dat file.). |

2.2.8.5.3 Examples

Table 30 shows the tactile properties of an avatar which as 15 degree of temperature, tactile effect based on the tactile information from the following URL
(http://www.haptic.kr/avatar/tactilel.avi).

[Table 30]

```
<VWOHapticProperties>
                <DynamicForceEffect
ForceField="http://haptic.kr/avatar/forcefield.dat"/>
</VWOHapticProperties>
```

3. Avatar metadata

3.1 Type of Avatar metadata

Avatar metadata as a (visual) representation of the user inside the environment serves the following purposes:

- make visible the presence of a real user into the VE,
- characterize the user within the VE,
- interaction with the VE.

The "Avatar"element may include the following type of data in addition to the common characteristics type of virtual world object:

Avatar Appearance: contains the high level description of the appearance and may refer a media containing the exact geometry and texture,

- Avatar Animation: contains the description of a set of animation sequences that the avatar is able to perform and may refer to several medias containing the exact (geometric transformations) animation parameters,
- Avatar Communication Skills: contains a set of descriptors providing information on the different modalities an avatar is able to communicate,
- Avatar Personality: contains a set of descriptors defining the personality of the avatar,
- Avatar Control Features: contains a set of descriptors defining possible place-holders for sensors on body skeleton and face feature points.

3.2 Avatar Characteristics XSD

3.2.1 AvatarType

3.2.1.1 Syntax

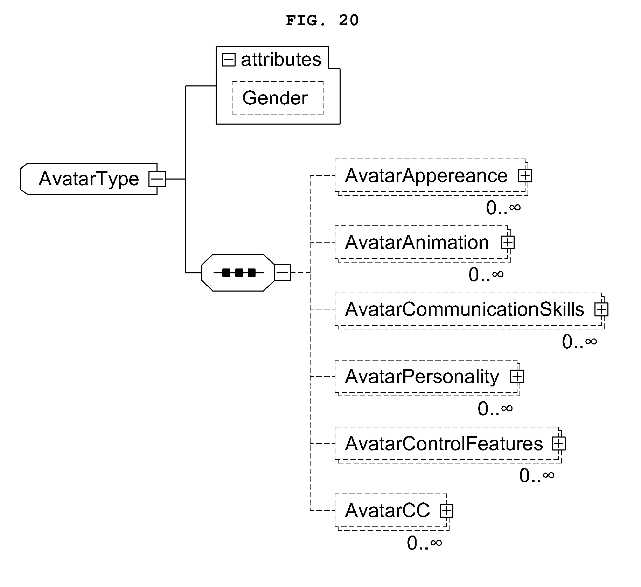

FIG. 20 illustrates a structure of an AvatarType according to an embodiment. Table 31 shows a syntax of the AvatarType.

[Table 31]

| Childr en | <AvatarAppearance>, <AvatarAnimation>, <AvatarCommunicationSkills>, <AvatarPersonality>, <AvatarControlFeatures>, <AvatarCC> |
|---|---|
| | `<xsd:complexType name="AvatarType"abstract="true">`<br>`        <xsd:sequence>`<br>`                <xsd:element name="AvatarAppereance" type="AvatarAppearanceType" minOccurs="0" maxOccurs="unbounded"/>`<br>`                <xsd:element name="AvatarAnimation"` |

(continued)

| Source | type="AvatarAnimationType" minOccurs="0" maxOccurs="unbounded"/>             <xsd:element name="AvatarCommunicationSkills" type="AvatarCommunicationSkillsType" minOccurs="0" maxOccurs="unbounded"/>            <xsd:element name="AvatarPersonality" type="AvatarPersonalityType" minOccurs="0" maxOccurs="unbounded"/>            <xsd:element name="AvatarControlFeatures" type="AvatarControlFeaturesType" minOccurs="0" maxOccurs="unbounded"/>            <xsd:element name="AvatarCC" type="CommonCharacteristicsType"minOccurs="0"/>            </xsd:sequence> <xsd:attribute name="Gender" type="xsd:string" use="optional"/> </xsd:complexType> |
|---|---|

3.2.1.2 Semantics

Table 32 shows semantics of the AvatarType.

[Table 2]

| Name | Definition |
|---|---|
| AvatarAppearance | Contains the high level description of the appearance of an avatar. |
| AvatarAnimation | Contains the description of a set of animation sequences that the avatar is able to perform. |
| AvatarCommunication Skills | Contains a set of descriptors providing information on the different modalities an avatar is able to communicate. |
| AvatarPersonality | Contains a set of descriptors defining the personality of the avatar. |
| AvatarControlFeatur es | Contains a set of descriptors defining possible place-holders for sensors on body skeleton and face feature points. |
| AvatarCC | Contains a set of descriptors about the common characteristics defined in the common characteristics of the virtual world object. |
| Gender | Describes the gender of the avatar. |

3.2.2 AvatarAppearanceType

3.2.2.1. Syntax

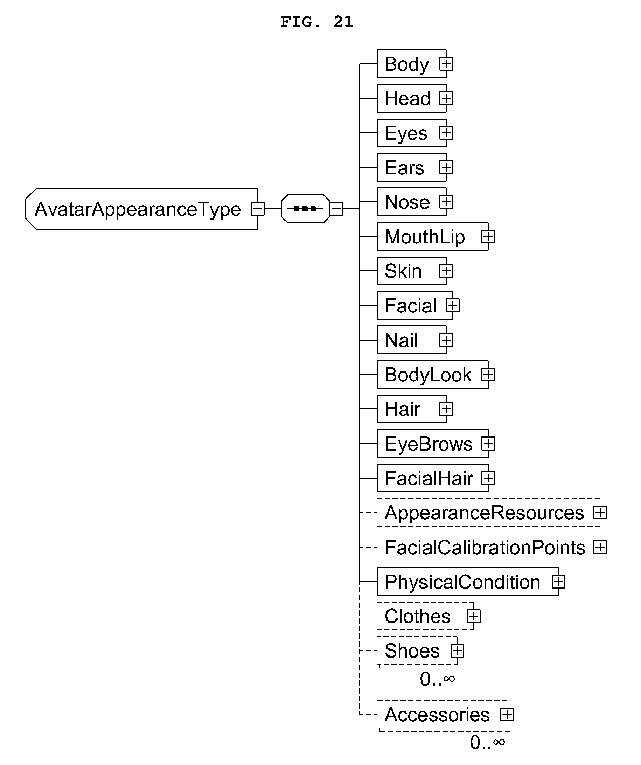

FIG. 21 illustrates a structure of an AvatarAppearanceType according to an embodiment. Table 33 shows a syntax of the AvatarAppearanceType.

[Table 33]

| Child ren | <Body>, <Head>, <Eyes>, <Ears>, <Nose>, <MouthLip>, <Skin>, <Facial>, <Nail>, <EyeBrows>, <FacialHair>, <AppearanceResources>, <FacialCalibrationPoints>, <PhysicalCondition>, <Clothes>, <Shoes>, |
|---|---|

(continued)

| | | |
|---|---|---|
| | | `<Accessories>` |
| | Sourc e | `<xsd:complexType name="AvatarAppearanceType">`<br>`<xsd:sequence>`<br>`<xsd:element name="Body" type="BodyType" minOccurs="0"/>`<br>`<xsd:element name="Head" type="HeadType" minOccurs="0"/>`<br>`<xsd:element name="Eyes"` |
| | | `type="EyesType" minOccurs="0"/>`<br>`<xsd:element name="Ears" type="EarsType" minOccurs="0"/>`<br>`<xsd:element name="Nose" type="NoseType" minOccurs="0"/>`<br>`<xsd:element name="MouthLip" type="MouthType" minOccurs="0"/>`<br>`<xsd:element name="Skin" type="SkinType" minOccurs="0"/>`<br>`<xsd:element name="Facial" type="FacialType" minOccurs="0"/>`<br>`<xsd:element name="Nail" type="NailType" minOccurs="0"/>`<br>`<xsd:element name="BodyLook" type="BodyLookType" minOccurs="0"/>`<br>`<xsd:element name="Hair" type="HairType" minOccurs="0"/>`<br>`<xsd:element name="EyeBrows" type="EyeBrowsType" minOccurs="0"/>`<br>`<xsd:element name="FacialHair" type="FacialHairType" minOccurs="0"/>`<br>`<xsd:element name="AppearanceResources" type="AppearanceResourceType" minOccurs="0"/>`<br>`<xsd:element name="FacialCalibrationPoints" type="FacialCalibrationPointsTypes" minOccurs="0"/>`<br>`<xsd:element name="PhysicalCondition" type="PhysicalConditionType" minOccurs="0"/>`<br>`<xsd:element name="Clothes" type="VirtualObjectType" minOccurs="0"/>`<br>`<xsd:element name="Shoes"` |
| | | `type="VirtualObjectType" minOccurs="0" maxOccurs="unbounded"/>`<br>`<xsd:element name="Accessories" type="VirtualObjectType" minOccurs="0" maxOccurs="unbounded"/>`<br>`</xsd:sequence>`<br>`</xsd:complexType>` |

3.2.2.2. Semantics

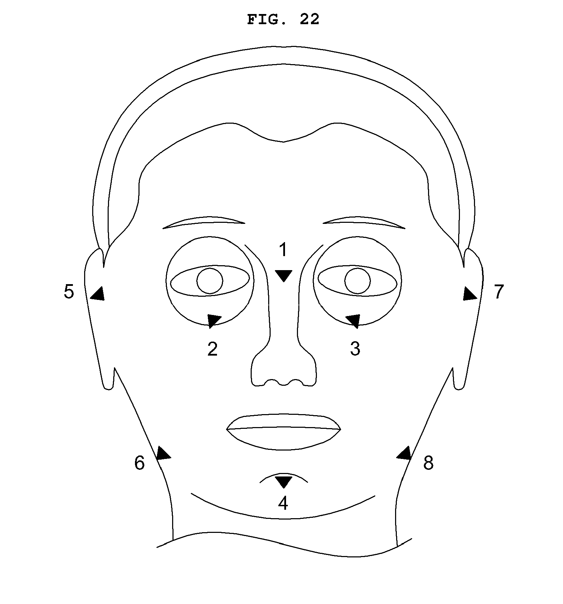

Table shows semantics of the AvatarAppearanceType. FIG. 22 illustrates an example of a FacialCalibration-Points according to an embodiment.

【Table 34】

| Name | Description |
|------|-------------|
| Body | Set of elements for body avatar description.<br><br>Containing elements:<br><br>| Element | Information | Type |<br>|---|---|---|<br>| BodyHeight | Full height of the character (always in meter) | anyUR |<br>| BodyThickness | This indicates the weight of the bounding box of the avatar (always in meter) | anyUR |<br>| BodyFat | This should be one of Low, Medium, High and indicates the fatness of the body | anyUR |<br>| TorsoMuscles | This should be one of Low, Medium, High and indicates the average muscularity of the avatar's body | anyUR | |

| | NeckThiknes s | The diameter of the neck (always in meter) | anyURI |
|---|---|---|---|
| | NeckLength | The height of the neck (always in meter) | anyURI |
| | Shoulders | The width of the shoulders (always in meter) | anyURI |
| | Pectorials | The size of the pectoral muscles (always in meter) | anyURI |
| | ArmLength | Length of complete arm (always in meter) | anyURI |
| | HandSize | Size of the whole hand including fingers (always in meter) | anyURI |
| | TorsoLength | The length of torso(between pectorals and legs) (always in meter) | anyURI |
| | LoveHandles | Size of the love handles (always in meter) | anyURI |
| | BellySize | Diameter of the belly (always in meter) | anyURI |
| | LegMucles | Size of all leg muscles (always in meter) | anyURI |
| | LegLength | Length of complete leg (always in meter) | anyURI |
| | HipWidth | The width of the hip area (always in meter) | anyURI |
| | HipLength | The vertical size of the hip area (always in meter) | anyURI |

| | ButtSize | Diameter of the butt's avatar (always in meter) | anyURI |
|---|---|---|---|
| | Package | Size of the package (small, medium, big) | anyURI |
| | SaddleBags | Volume of saddle bags (small, medium, big) | anyURI |
| | KneeAngle | The angle between the upper end lower leg, normally 0 when they are aligned (in degrees, from 0 to 360) | anyURI |
| | FootSize | Size of the whole foot including toes (always in meter) | anyURI |
| Head | Set of elements for head avatar description.<br><br>Containing elements: | | |

| Element | Information | Type |
|---|---|---|
| HeadSize | Size of the entire head (small, medium, big) | anyUR |
| HeadStrech | Vertical stretch of the head in % | anyUR |
| HeadShape | This can be one of "square", "round", "oval", or "long" | anyUR |
| EggHead | Head is larger on the top than on the bottom or vice versa. This can be "yes" or "not" | anyUR |
| HeadLength | The distance between the face and the back of the head, flat head or long head, measured in meters | anyUR |

| | | Changes the height difference between the two sides of the face | |
|---|---|---|---|
| | FaceShear | (always in meter) | anyURI |
| | ForeheadSize | The height of the forehead measured in meters | anyURI |
| | ForeheadAngle | The angle of the forehead measured in degrees | anyURI |
| | BrowSize | Measures how much the eyebrows are extruded from the face (in meter) | anyURI |
| | FaceSkin | Describe the type of face skin (dry, normal, greasy) | anyURI |
| | Cheeks | The size of the complete cheeks (small, medium, big) | anyURI |
| | CheeksDepth | The depth of the complete cheeks (always in meter) | anyURI |
| | CheeksShape | Different cheeks shapes (one of the following values: chubby, high, bone) | anyURI |
| | UpperCheeks | The volume of the upper cheeks (small, medium, big) | anyURI |
| | LowerCheeks | The volume of the lower cheeks (small, medium, big) | anyURI |
| | CheekBones | The vertical position of the cheek bones (down, medium, up) | anyURI |
| Eyes | | Set of elements for eyes avatar description.<br><br>Containing elements: | |

| Element | Information | Type |
|---|---|---|
| EyeSize | The size of the entire eyes (always in meter) | anyURI |
| EyeOpening | How much the eyelids are opened (always in meter) | anyURI |
| EyeSpacing | Distance between the eyes (always in meter) | anyURI |
| OuterEyeCorner | Vertical position of the outer eye corner (down, middle, up) | anyURI |
| InnerEyeCorner | Vertical position of the inner eye corner (down, middle, up) | anyURI |
| EyeDepth | How much the eyes are inside the head (always in meter) | anyURI |
| UpperEyelidFold | How much the upper eyelid covers the eye (always in meter) | anyURI |
| EyeBags | The size of the eye bags (always in meter) | anyURI |
| PuffyEyelids | The volume of the eye bags (small, medium, big) | anyURI |
| EyelashLength | The length of the eyelashes (always in meter) | anyURI |
| EyePop | The size difference between the left and right eye (always in meter) | anyURI |
| EyeColor | The eye colour (RGB) | anyURI |
| EyeLightness | The reflectivity of the eye in % | anyURI |

| | | | |
|---|---|---|---|
| Ears | Set of elements for ears avatar description.<br><br>Containing elements: | | |
| | Element | Information | Type |
| | EarSize | Size of the entire ear (always in meter) | anyUR |
| | EarPosition | Vertical ear position on the head (down, middle, up) | anyUR |
| | EarAngle | The angle between the ear and the head in degrees | anyUR |
| | AttachedEarlobes | The size of the earlobes (always in meter) | anyUR |
| | EarTips | How much the ear tips are pointed (pointed, medium, not pointed) | anyUR |
| Nose | Set of elements for nose avatar description.<br><br>Containing elements: | | |
| | Element | Information | Type |
| | NoseSize | The height of the nose from its bottom (always in meter) | anyUR I |
| | NoseWidth | The width of the complete nose (always in meter) | anyUR I |
| | NostrillWidth | Width of only the nostrils (always in meter) | anyUR I |
| | NostrillDivision | The size of the nostril division (always in meter) | anyUR I |

| | Element | Information | Type |
|---|---|---|---|
| | NoseThickness | The size of the tip of the nose (always in meter) | anyURI |
| | UpperBridge | The height of the upper part of the nose (always in meter) | anyURI |
| | LowerBridge | The height of the lower part of the nose (always in meter) | anyURI |
| | BridgeWidth | The width of the upper part of the nose (always in meter) | anyURI |
| | NoseTipAngle | The angle of the nose tip, "up" or "down" | anyURI |
| | NoseTipShape | The shape of the nose tip, "pointy" or "bulbous" | anyURI |
| | CrookedNose | Displacement of the nose on the left or right side | anyURI |
| MouthLip | Set of elements for mouth and lip avatar description. Containing elements: | | |

| Element | Information | Type |
|---|---|---|
| LipWidth | The width of the lips (m) | anyURI |
| LipFullness | The fullness of the lip (m) | anyURI |
| LipThickness | The thickness of the lip (m) | anyURI |
| LipRatio | Difference between the upper and lower lip (m) | anyURI |
| MouthSize | The size of the complete mouth (m) | anyURI |

| | | | |
|---|---|---|---|
| | MouthPositi on | Vertical position of the mouth on the face (m) | anyURI |
| | MouthCorner | Vertical position of the mouth corner (down, middle, up) | anyURI |
| | LipCleftDep th | The height of the lip cleft (m) | anyURI |
| | LipCleft | The width of the lip cleft (m) | anyURI |
| | ShiftMouth | Horizontal position of mouth on the face (left, middle, right) | anyURI |
| | ChinAngle | The curvature of the chin, outer or inner | anyURI |
| | JawShape | Pointy to Square jaw (pointed, middle, not pointed) | anyURI |
| | ChinDepth | Vertical height of the chin (m) | anyURI |
| | JawAngle | The height of the jaw (m) | anyURI |
| | JawJut | Position of the jaw inside or out of the face (inside , outside) | anyURI |
| | Jowls | The size of the jowls (m) | anyURI |
| | ChinCleft | The shape of the chin cleft, "round" or "cleft" | anyURI |
| | UpperChinCl eft | The shape of the upper chin cleft, "round" or "cleft" | anyURI |
| | ChinNeck | The size of the chin neck (m) | anyURI |
| Skin | | Set of elements for skin avatar description.<br><br>Containing elements: | |

| Element | Information | Type |
|---|---|---|
| SkinPigment | Skin Pigment (very light, light, average, olive, brown, black) | anyUR] |
| SkinRuddiness | Skin Ruddiness (few, medium, lot) | anyUR] |
| SkinRainbowColor | Skin Rainbow color (RGB) | anyUR] |

| | Set of elements for avatar face description.<br><br>Containing elements: | |
|---|---|---|

| | Element | Information | Type |
|---|---|---|---|
| Facial | FacialDefinition | Level of brightness of the face from 1-lighted to 5 dark | anyUR] |
| | Freckles | Freckles (5 levels, 1=smallest, 5= biggest) | anyUR] |
| | Wrinkles | Wrinkles (yes or no) | anyUR] |
| | RosyComplexion | Rosy Complexion (yes or no) | anyUR] |
| | LipPinkness | Lip Pinkness (5 levels, 1=smallest, 5= biggest) | anyUR] |
| | Lipstick | Lipstick (yes or no) | anyUR] |
| | LipstickColor | Lipstick Color (RGB) | anyUR] |
| | Lipgloss | Lipgloss (5 levels, 1=smallest, 5= biggest) | anyUR] |

| | | | |
|---|---|---|---|
| | Blush | Blush (yes or no) | anyURI |
| | BlushColor | Blush Color (RGB) | anyURI |
| | BlushOpacity | Blush Opacity (%) | anyURI |
| | InnerShadow | Inner Shadow (yes or no) | anyURI |
| | InnerShadow Color | Inner Shadow Color (RGB) | anyURI |
| | InnerShadow Opacity | Inner Shadow Opacity (%) | anyURI |
| | OuterShadow | Outer Shadow (yes or no) | anyURI |
| | OuterShadow Opacity | Outer Shadow Opacity (%) | anyURI |
| | Eyeliner | Eyeliner (yes or no) | anyURI |
| | EyelinerCol or | Eyeliner Color (RGB) | anyURI |
| Nail | Set of elements for general nails of avatar description.<br><br>Containing elements: | | |
| | Element | Information | Type |
| | NailPolish | Nail Polish (yes or no) | anyURI |
| | NailPolishC olor | Nail Polish Color (RGB) | anyURI |
| BodyLook | Set of elements for general body-look avatar description.<br><br>Containing elements: | | |

| Element | Information | Type |
|---|---|---|
| BodyFreckles | Body Freckles (5 levels, 1=smallest, 5= biggest) | anyUR |

| | Set of elements for general avatar hair description. Containing elements: | |
|---|---|---|

|  | Element | Information | Type |
|---|---|---|---|
| Hair | HairSize | The length of the hair (can be one of short, medium or long) | anyUR |
| | HairStyle | The style of the hair (free text) | anyUR |
| | HairColor | The hair color (RGB) | anyUR |
| | WhiteHair | Amount of white hair (%) | anyUR |
| | RainbowColor | The color of the hair (RGB) | anyUR |
| | BlondeHair | How much blond is the hair (%) | anyUR |
| | RedHair | How much red is the hair (%) | anyUR |
| | HairVolume | The volume of the complete hair (small, medium or big) | anyUR |
| | HairFront | How much the hair goes toward front (short, medium or long) | anyUR |
| | HairSides | The height of the sides of the hair (short, medium or long) | anyUR |
| | HairBack | How long is the hair at the back (short, medium or long) | anyUR |

| | | |
|---|---|---|
| BigHairFront | How high is the hair at the front of the skull (short, medium or long) | anyURI |
| BigHairTop | How high is the hair at the top of the skull (short, medium or long) | anyURI |
| BigHairBack | How high is the hair at the back of the skull (short, medium or long) | anyURI |
| FrontFringe | The length of the front fringe of the hair (short, medium or long) | anyURI |
| SideFringe | The length of the side fringe of the hair (short, medium or long) | anyURI |
| BackFringe | The length of the back fringe of the hair (short, medium or long) | anyURI |
| FullHairSides | The width of the hair (short, medium or long) | anyURI |
| HairSweep | How much the hair is turned towards the front (left, middle, right) | anyURI |
| ShearFront | How much the hair extends towards front (short, medium or long) | anyURI |
| ShearBack | How much the hair extends towards back (short, medium or long) | anyURI |
| TuperFront | The width of the hair at the front (short, medium or long) | anyURI |
| TuperBack | The width of the hair on the back (short, medium or long) | anyURI |
| Rumpledhair | How much the hair is rumpled (low, moderate or high) | anyURI |

|  | Pigtails | The length of the pigtails (short, medium or long) | anyURI |
|---|---|---|---|
|  | Ponytail | The length of the ponytail (short, medium or long) | anyURI |
|  | SpikedHair | The length of the spikes in the hair (short, medium or long) | anyURI |
|  | HairTilt | The vertical position of the hair from the top of the head (m) | anyURI |
|  | HairMiddlePart | How much the hair is parted at the middle front (low, high) | anyURI |
|  | HairRightPart | How much the hair is parted at the right side (low, high) | anyURI |
|  | HairLeftPart | How much the hair is parted at the left side (low, high) | anyURI |
|  | HairPartBangs | How much the hair is parted at the middle (low, high) | anyURI |
| EyeBrows | Set of elements for general avatar eyebrows description. Containing elements: | | |
| | Element | Information | Type |
| | EyebrowSize | The length of the eyebrow (short, medium, long) | anyUR |
| | EyebrowDensity | The density (low, moderate, high) | anyUR |
| | EyebrowHeight | The vertical eyebrow position on the face (low, middle, high) | anyUR |

|  | EyebrowArc | The curvature of the Eyebrow. It can be low (flat), middle or high (arced) | anyURI |
|  | EyebrowPoints | The direction of the eyebrows, towards up or down (down, middle, up) | anyURI |

| FacialHair | Set of elements for general avatar facial description. Containing elements: | | |
|---|---|---|---|
|  | Element | Information | Type |
|  | FacialHairThickness | The thick of the facial hair (low, middle, high) | anyURI |
|  | FacialSideBurns | The color of the facial side (RGB) | anyURI |
|  | FacialMoustache | The facial moustache (yes or no) | anyURI |
|  | FacialchinCurtains | Facial chin curtains (yes or no) | anyURI |
|  | FacialSoulPatch | Facial soul patch (yes or no) | anyURI |

| FacialCalibrationPoints | Element | Information | Type |
|---|---|---|---|
|  | sellion | 3D position (meter), point 1 in the figure 22 | anyURI |
|  | r_infraorbitale | 3D position (meter), point 2 in the figure 22 | anyURI |
|  | l_infraorbitale | 3D position (meter), point 3 in the figure 22 | anyURI |

| | | | |
|---|---|---|---|
| | supramenton | 3D position (meter), point 4 in the figure 22 | anyURI |
| | r_tragion | 3D position (meter), point 5 in the figure 22 | anyURI |
| | r_gonion | 3D position (meter), point 6 in the figure 22 | anyURI |
| | l_tragion | 3D position (meter), point 7 in the figure 22 | anyURI |
| | l_gonion | 3D position (meter), point 8 in the figure 22 | anyURI |
| | Note: The calibration points are to be used for mapping a captured face feature points onto an arbitrary face of an avatar. | | |
| PhysicalCondition | This element contains a set of elements for describing the physical condition of the avatar. | | |
| Clothes | A list of virtual clothes which are associated to the avatar. The type of this element is VirtualObjectType. | | |
| Shoes | A list of virtual shoes which are associated to the avatar. The type of this element is VirtualObjectType. | | |
| Accessories | A list of objects (ring, glasses, …) that are associated to the avatar. The type of this element is VirtualObjectType. | | |
| AppearanceResources | Element | Information | Type |
| | AvatarURL | URL to file with avatar description, usually MP4 file. Can occur once or zero | anyURI |

### 3.2.2.3 PhysicalConditionType

#### 3.2.2.3.1. Syntax

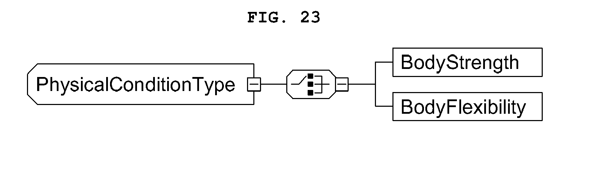

FIG. 23 illustrates a structure of a PhysicalConditionType according to an embodiment. Table 35 shows a syntax of the PhysicalConditionType.

[Table 35]

| Children | <BodyStrength>, <BodyFlexibility> |
|---|---|
| Source | ```xml<br><xsd:complexType name="PhysicalConditionType"><br>        <xsd:choice><br>                <xsd:element name="BodyStrength"<br>minOccurs="0"><br>                        <xsd:simpleType><br>                                <xsd:restriction base="xsd:decimal"><br>                                        <xsd:minInclusive value="-3"/><br>                                        <xsd:maxInclusive value="3"/><br>                                </xsd:restriction><br>                        </xsd:simpleType><br>                </xsd:element><br>                <xsd:element name="BodyFlexibility"<br>minOccurs="0"><br>                        <xsd:simpleType><br>                                <xsd:restriction base="xsd:string"><br>                                        <xsd:enumeration value="low"/><br>                                        <xsd:enumeration value="medium"/><br>                                        <xsd:enumeration value="high"/><br>                                </xsd:restriction><br>                        </xsd:simpleType><br>                </xsd:element><br>        </xsd:choice><br></xsd:complexType><br>``` |

3.2.2.3.2. Semantics

Table 36 shows semantics of the PhysicalConditionType.

[Table 36]

| Name | Description |
|---|---|
| BodyStren gth | This element describes the body strength. Values for this element can be from - 3 to 3.) |
| BodyFlexi bility | This element describes the body flexibility. Values for this element can be low, medium, high. |

3.2.3 AvatarAnimationType

3.2.3.1 Syntax

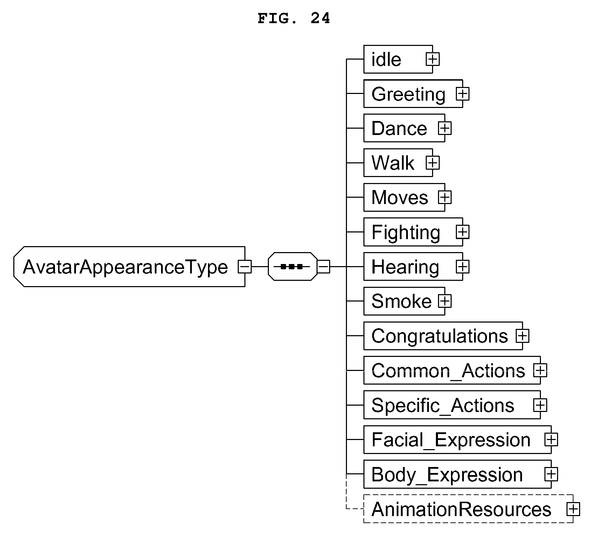

FIG. 24 illustrates a structure of an AvatarAnimationType according to an embodiment. Table 37 illustrates a syntax of the AvatarAnimationType.

[Table 37]

| Children | <Idle>, <Greeting>, <Dance>, <Walk>, <Moves>, <Fighting>, <Hearing>, <Smoke>, <Congratulations>, <Common_Actions>, <Specific_Actions>, <Facial_Expression>, <Body_Expression>, <AnimationResources> |
|---|---|
| | ```xml<br><xsd:complexType name="AvatarAnimationType"><br>        <xsd:sequence><br>                <xsd:element name="Idle"<br>``` |

(continued)

| | |
|---|---|
| Source | type="IdleType" minOccurs="0"/><br><xsd:element name="Greeting" type="GreetingType" minOccurs="0"/><br><xsd:element name="Dance" type="DanceType" minOccurs="0"/><br><xsd:element name="Walk" type="WalkType" minOccurs="0"/><br><xsd:element name="Moves" type="MovesType" minOccurs="0"/><br><xsd:element name="Fighting" type="FightingType" minOccurs="0"/> |
| | <xsd:element name="Hearing" type="HearingType" minOccurs="0"/><br><xsd:element name="Smoke" type="SmokeType" minOccurs="0"/><br><xsd:element name="Congratulations" type="CongratulationsType" minOccurs="0"/><br><xsd:element name="Common_Actions" type="CommonActionsType" minOccurs="0"/><br><xsd:elementname="Specific_Actions" type="SpecificActionType" minOccurs="0"/><br><xsd:element name="Facial_Expression" type="FacialExpressionType" minOccurs="0"/><br><xsd:element name="Body_Expression" type="BodyExpressionType" minOccurs="0"/><br><xsd:element name="AnimationResources" type="AnimationResourceType" minOccurs="0"/><br></xsd:sequence><br></xsd:complexType> |

3.2.3.2 Semantics

Table 38 shows semantics of the AvatarAnimationType.

【Table 38】

| Name | Description |
|------|-------------|
| Idle | Set of Idle animations.<br><br>Containing elements:<br><br>Element        Information         Type<br><br>default_idle    default_avatar_pose    anyURI |

|  | rest_pose | Rest | anyURI |
|---|---|---|---|
|  | breathe | Breathe | anyURI |
|  | body_noise | strong breathe | anyURI |
| **Greeting** | **Set of greeting animations.**<br><br>**Containing elements:** | | |
|  | Element | Information | Type |
|  | salute | salute | anyURI |
|  | cheer | cheer | anyURI |
|  | greet | greet | anyURI |
|  | wave | wave | anyURI |
|  | hello | hello | anyURI |
|  | bow | bow | anyURI |
|  | court_bow | court-bow | anyURI |
|  | flourish | flourish | anyURI |
| **Dance** | **Set of dance animations.**<br><br>**Containing elements:** | | |
|  | Element | Information | Type |
|  | body_pop_dance | body pop dance | anyURI |
|  | break_dance | Break dance | anyURI |
|  | cabbage_patch | cabbage patch | anyURI |
|  | casual_dance_d | casual dance | anyURI |

| | | | |
|---|---|---|---|
| | ance | | |
| | dance | A default dance defined per avatar | anyURI |
| | rave_dance | rave dance | anyURI |
| | robot_dance | robot dance | anyURI |
| | rock_dance | rock dance | anyURI |
| | rock_roll_danc e | rock 'n roll dance | anyURI |
| | running_man_da nce | running man | anyURI |
| | salsa_dance | salsa | anyURI |
| Walk | **Set of walk animations.** **Containing elements:** | | |
| | Element | Information | Type |
| | slow_walk | slow walk | anyURI |
| | default_walk | default walk | anyURI |
| | fast_walk | fast walk | anyURI |
| | slow_run | slow run | anyURI |
| | default_run | default run | anyURI |
| | fast_run | fast run | anyURI |
| | crouch | crouch | anyURI |
| | crouch_walk | crouch-walk | anyURI |
| **Moves** | **Set of animations for simply body moves.** | | |

| | **Containing elements:** | | |
|---|---|---|---|
| | Element | Information | Type |
| | MoveDown | move down | anyURI |
| | MoveLeft | move left | anyURI |
| | MoveRight | move right | anyURI |
| | MoveUp | move up | anyURI |
| | point_me | point to myself | anyURI |
| | point_you | point to other | anyURI |
| | turn_180 | make a turn for 180° | anyURI |
| | turnback_180 | make a turn back for 180° | anyURI |
| | turnleft | turn left | anyURI |
| | turnright | turn right | anyURI |
| | turn_360 | make a turn for 360° | anyURI |
| | turnback_360 | make a turn back for 360° | anyURI |
| | FreeDirection | Move to an arbitrary direction | anyURI |
| **Fighting** | **Set of animations characteristic for fighting.** | | |
| | **Containing elements:** | | |
| | Element | Information | Type |
| | aim | aim | anyURI |
| | aim_l | aim left | anyURI |

| | | | |
|---|---|---|---|
| aim_r | aim right | anyURI |
| aim_bow | aim with bow | anyURI |
| aim_l_bow | aim left with bow | anyURI |
| aim_r_bow | aim right with bow | anyURI |
| aim_rifle | aim with rifle | anyURI |
| aim_l_rifle | aim left with rifle | anyURI |
| aim_r_rifle | aim right with rifle | anyURI |
| aim_bazooka | aim with bazooka | anyURI |
| aim_l_bazooka | aim left with bazooka | anyURI |
| aim_r_bazooka | aim right with bazooka | anyURI |
| aim_handgun | aim with handgun | anyURI |
| aim_l_handgun | aim left with handgun | anyURI |
| aim_r_handgun | aim right with handgun | anyURI |
| hold | hold weapon | anyURI |
| hold_l | hold weapon in left hand | anyURI |
| hold_r | hold weapon in right hand | anyURI |
| hold_bow | hold bow | anyURI |
| hold_l_bow | hold bow in left hand | anyURI |
| hold_r_bow | hold bow in right hand | anyURI |
| hold_rifle | hold rifle | anyURI |
| hold_l_rifle | hold rifle in left hand | anyURI |

| | | |
|---|---|---|
| hold_r_rifle | hold rifle in right hand | anyURI |
| hold_bazooka | hold bazooka | anyURI |
| hold_l_bazooka | hold bazooka in left hand | anyURI |
| hold_r_bazooka | hold bazooka in right hand | anyURI |
| hold_handgun | hold handgun | anyURI |
| hold_l_handgun | hold handgun in left hand | anyURI |
| hold_r_handgun | hold handgun in right hand | anyURI |
| hold_throw | hold weapon and then throw | anyURI |
| hold_throw_r | hold weapon and then throw on right | anyURI |
| hold_throw_l | hold weapon and then throw on left | anyURI |
| shoot | shoot | anyURI |
| shoot_l | shoot left | anyURI |
| shoot_r | shoot right | anyURI |
| shoot_bow | shoot with bow | anyURI |
| shoot_r_bow | shoot with bow right hand | anyURI |
| shoot_l_bow | shoot with bow left hand | anyURI |
| shoot_rifle | shoot with rifle | anyURI |

| | | | |
|---|---|---|---|
| shoot_l_rifle | shoot with rifle right hand | anyURI |
| shoot_r_rifle | shoot with rifle left hand | anyURI |
| shoot_bazooka | shoot with bazooka | anyURI |
| shoot_l_bazooka | shoot with bazooka right hand | anyURI |
| shoot_r_bazooka | shoot with bazooka left hand | anyURI |
| shoot_handgun | shoot with handgun | anyURI |
| shoot_l_handgun | shoot with handgun right hand | anyURI |
| shoot_r_handgun | shoot with handgun left hand | anyURI |
| strike | strike | anyURI |
| strike_sword | strike with sword | anyURI |
| strike_r_sword | strike with sword with left hand | anyURI |
| strike_l_sword | strike with sword with right hand | anyURI |
| punch | punch | anyURI |
| punch_l | punch with left hand | anyURI |
| punch_r | punch with right hand | anyURI |
| throw | throw | anyURI |
| throw_l | throw weapon with left | anyURI |

| | | hand | |
|---|---|---|---|
| | throw_r | throw weapon with right hand | anyURI |
| **Hearing** | **Set of animations for movements make during try to hear.** **Containing elements:** | | |
| | Element | Information | Type |
| | start_hearing | default animation for start hearing | anyURI |
| | stop_hearing | default animation for stop hearing | anyURI |
| | ears_extend | Ears extend | anyURI |
| | turns_head_left | Turns head left | anyURI |
| | turns_head_right | Turns head right | anyURI |
| | holds_up_hand | Holds up hand | anyURI |
| | tilts_head_right | Tilts head right | anyURI |
| | tilts_head_left | Tilts head left | anyURI |
| | cocks_head_left | Cocks head left | anyURI |
| | default_hear | hearing | anyURI |
| **Smoke** | **Set of animations for movements make while smoking.** | | |

|  | **Containing elements:** | | |
| --- | --- | --- | --- |
|  | Element | Information | Type |
|  | smoke_idle | default smoke animation, smoke | anyURI |
|  | smoke_inhale | Inhaling smoke | anyURI |
|  | smoke_throw_down | throw down smoke | anyURI |
| **Congratulations** | **Set of animations for movements make while congratulating.** | | |
|  | **Containing elements:** | | |
|  | Element | Information | Type |
|  | applaud | Applaud | anyURI |
|  | clap | clap once | anyURI |
| **Common_Actions** | **Set of more often used common animations.** | | |
|  | **Containing elements:** | | |
|  | Element | Information | Type |
|  | appear | appear from somewhere | anyURI |
|  | away | go away | anyURI |
|  | blowkiss | Blow kiss | anyURI |
|  | brush | brush | anyURI |
|  | busy | take a busy posture | anyURI |

| | | | |
|---|---|---|---|
| crazy | crazy | anyURI |
| dead | dead, not moving posture | anyURI |
| disappear | disappear somewhere | anyURI |
| drink | drink | anyURI |
| eat | eat | anyURI |
| explain | explain | anyURI |
| falldown | falling down | anyURI |
| flip | flip | anyURI |
| fly | fly | anyURI |
| gag | make funny pose | anyURI |
| getattention | waves arms for getting attention | anyURI |
| impatient | impatient | anyURI |
| jump | jump | anyURI |
| kick | kick | anyURI |
| land | land | anyURI |
| prejump | prepare to jump | anyURI |
| puke | puke | anyURI |
| read | read | anyURI |
| sit | sit | anyURI |
| sleep | sleep | anyURI |
| stand | stand | anyURI |

| | | | |
|---|---|---|---|
| | stand-up | stand-up | anyURI |
| | stretch | stretch | anyURI |
| | stride | stride | anyURI |
| | suggest | suggest | anyURI |
| | surf | surf | anyURI |
| | talk | talk | anyURI |
| | think | think | anyURI |
| | type | type | anyURI |
| | whisper | whisper | anyURI |
| | whistle | whistle | anyURI |
| | write | write | anyURI |
| | yawn | yawn | anyURI |
| | yeah | yeah | anyURI |
| | yoga | yoga | anyURI |
| **Specific _Actions** | **Set of VW specific animations.**<br><br>**Containing elements:**<br><br>Element Information Type | | |
| | airguitar | air guitar | anyURI |
| | angry_fingerwag | angry_fingerwag | anyURI |
| | angry_tantrum | angry_tantrum | anyURI |
| | backflip | back flip | anyURI |

| | | |
|---|---|---|
| beckon | beck on | anyURI |
| bigyawn | big yawn | anyURI |
| boo | boo | anyURI |
| burp | burp | anyURI |
| candlestick | candlestick | anyURI |
| comeagain | come again | anyURI |
| decline | decline | anyURI |
| dismissive | Dismissive | anyURI |
| dontrecognize | don't recognize | anyURI |
| fartArm | fart Arm | anyURI |
| fist_pump | fist pump | anyURI |
| flyslow | fly slow | anyURI |
| guns | guns | anyURI |
| ha | ha | anyURI |
| hide | hide | anyURI |
| hmmm | hmmm | anyURI |
| hover | hover | anyURI |
| hover_down | hover down | anyURI |
| hover_up | hover up | anyURI |
| huh | Huh | anyURI |
| jumpforjoy | jump for joy | anyURI |
| kick_roundhous | kick roundhouse | anyURI |

| | | |
|---|---|---|
| e | | |
| kissmybutt | kiss my butt | anyURI |
| laught_short | laught short | anyURI |
| lol | lol | anyURI |
| loser | loser | anyURI |
| motorcycle_sit | motorcycle sit | anyURI |
| musclebeach | muscle beach | anyURI |
| no_way | no way | anyURI |
| no_head | no head | anyURI |
| no_unhappy | no unhappy | anyURI |
| nod | nod | anyURI |
| Nope | Nope | anyURI |
| nyanya | nyanya | anyURI |
| okay | okay | anyURI |
| oooh | oooh | anyURI |
| peace | peace | anyURI |
| point | point | anyURI |
| pose | pose | anyURI |
| punch_onetwo | punch one two | anyURI |
| rps_countdown | rps countdown | anyURI |
| rps_paper | rps paper | anyURI |
| rps_rock | rps rock | anyURI |

| | | |
|---|---|---|
| rps_scissors | rps scissors | anyURI |
| score | score | anyURI |
| shake_fists | shake fists | anyURI |
| show | show | anyURI |
| sit_generic | sit generic | anyURI |
| sit_ground | sit ground | anyURI |
| sit_ground_con strained | sit ground constrained | anyURI |
| sit_to_stand | sit to stand | anyURI |
| slow_fly | slow  fly | anyURI |
| snapshot | snapshot | anyURI |
| soft_land | soft land | anyURI |
| spin | spin | anyURI |
| tantrum | tantrum | anyURI |
| thumbs_down | thumbs_down | anyURI |
| thumbs_up | thumbs_up | anyURI |
| tongue | tongue | anyURI |
| tryon_shirt | tryon_shirt | anyURI |
| uncertain | uncertain | anyURI |
| wassamatta | wassamatta | anyURI |
| what | what | anyURI |
| yay | yay | anyURI |

|  | yes_happy | yes happy | anyURI |
|---|---|---|---|
|  | yes_head | yes head | anyURI |
| Facial_Expressions | **Set of face animations.** Containing elements: | | |
|  | Element | Information | Type |
|  | Affection | affected face | anyURI |
|  | Afraid | afraid face | anyURI |
|  | Agree | agree face | anyURI |
|  | Amusement | amuse face | anyURI |
|  | Angry | angry face | anyURI |
|  | Annoyance | annoyance face | anyURI |
|  | Anxiety | anxiety face | anyURI |
|  | Big_Smile | big smile | anyURI |
|  | Blink | blink | anyURI |
|  | Bored | bored face | anyURI |
|  | Calm | calm face | anyURI |
|  | concentrate | concentrate face | anyURI |
|  | confused | confused face | anyURI |
|  | Contempt | contempt face | anyURI |
|  | Content | content face | anyURI |
|  | Courage | courage face | anyURI |

| | | |
|---|---|---|
| Cry | cry face | anyURI |
| Dazed | dazed face | anyURI |
| Default-emotion | Default-emotion | anyURI |
| Delight | delight face | anyURI |
| Despair | despair face | anyURI |
| disagree | disagree face | anyURI |
| Disappointment | disappointed face | anyURI |
| Disdain | disdain face | anyURI |
| Disgusted | disgusted face | anyURI |
| Doubt | doubt face | anyURI |
| Elation | elation face | anyURI |
| Embarrassed | embarrassed face | anyURI |
| Empathy | empathy face | anyURI |
| Envy | envy face | anyURI |
| Excitement | excitement face | anyURI |
| Fear | fear face | anyURI |
| Friendliness | friendliness face | anyURI |
| Frown | frown face | anyURI |
| Frustration | frustrated face | anyURI |
| Grin | grin face | anyURI |
| Guilt | guilt face | anyURI |

| | | | |
|---|---|---|---|
| | Happy | happy face | anyURI |
| | Helplessness | helplessness face | anyURI |
| | Hope | hoping face | anyURI |
| | Hurt | hurt face | anyURI |
| | Interest | interested face | anyURI |
| | Irritation | irritated face | anyURI |
| | Joy | joy face | anyURI |
| | Kiss | kiss | anyURI |
| | Laugh | laughing face | anyURI |
| | Look_down | Look down | anyURI |
| | Look_down_blink | Look down blink | anyURI |
| | LookDownLeft | Look Down Left | anyURI |
| | LookdownLeftBlink | Look down Left Blink | anyURI |
| | LookDownLeftReturn | Look Down Left Return | anyURI |
| | LookDownReturn | Look Down Return | anyURI |
| | LookDownRight | Look Down Right | anyURI |
| | LookdownRightBlink | Look down Right Blink | anyURI |
| | LookDownRightReturn | Look Down Right Return | anyURI |
| | LookLeft | Look Left | anyURI |

| | | |
|---|---|---|
| LookLeftBlink | Look Left Blink | anyURI |
| LookLeftReturn | Look Left Return | anyURI |
| LookRight | Look Right | anyURI |
| LookRightBlink | Look Right Blink | anyURI |
| LookRightReturn | Look Right Return | anyURI |
| LookUp | Look Up | anyURI |
| LookUpBlink | Look Up Blink | anyURI |
| LookUpLeft | Look Up Left | anyURI |
| LookUpLeftBlink | Look Up Left Blink | anyURI |
| LookUpLeftReturn | Look Up Left Return | anyURI |
| LookUpReturn | Look Up Return | anyURI |
| LookUpRight | Look Up Right | anyURI |
| LookUpRightBlink | Look Up Right Blink | anyURI |
| LookUpRightReturn | Look Up Right Return | anyURI |
| Love | love face | anyURI |
| Mad | mad face | anyURI |
| Neutral | neutral face | anyURI |
| Open Mouth | Open Mouth | anyURI |
| Pleasure | pleasure face | anyURI |

| | | |
|---|---|---|
| Politeness | politeness face | anyURI |
| Powerlessness | powerlessness face | anyURI |
| Pride | pride face | anyURI |
| Pucker | puckering | anyURI |
| Relaxed | relaxed face | anyURI |
| Relieved | relieved face | anyURI |
| Repulsed | repulsed face | anyURI |
| Sad | sad face | anyURI |
| Satisfaction | satisfied face | anyURI |
| Scream | screaming | anyURI |
| Serene | serene face | anyURI |
| Shame | shame face | anyURI |
| Shock | shocked face | anyURI |
| shrug | shrug face | anyURI |
| sigh | sigh face | anyURI |
| Smile | smiling face | anyURI |
| Stress | stressed face | anyURI |
| Surprise | surprised face | anyURI |
| Tension | tension face | anyURI |
| Tongue_Out | Tongue Out | anyURI |
| Tooth_Smile | Tooth Smile | anyURI |
| Tired | tired | anyURI |

|  | Trust | Trust | anyURI |
|---|---|---|---|
|  | Wink | Wink | anyURI |
|  | Worry | worried face | anyURI |
|  | gestureright | Gesture right | anyURI |
|  | gestureleft | Gesture left | anyURI |
|  | gestureup | Gesture up | anyURI |
|  | gesturedown | Gesture down | anyURI |

**Set of body animations expressing emotions.**

**Containing elements:**

| | Element | Information | Type |
|---|---|---|---|
| **Body_Exp ressions** | affection | affected pose | anyURI |
| | afraid | afraid pose | anyURI |
| | agree | agree pose | anyURI |
| | amusement | amuse pose | anyURI |
| | angry | angry pose | anyURI |
| | annoyance | annoyance pose | anyURI |
| | anxiety | anxiety pose | anyURI |
| | Bored | bored pose | anyURI |
| | calm | calm pose | anyURI |
| | concentrate | concentrate pose | anyURI |
| | confused | confused pose | anyURI |

| | | |
|---|---|---|
| contempt | contempt pose | anyURI |
| content | content pose | anyURI |
| courage | courage pose | anyURI |
| cry | cry pose | anyURI |
| Dazed | dazed pose | anyURI |
| Delight | delight pose | anyURI |
| Despair | despair pose | anyURI |
| disagree | disagree pose | anyURI |
| Disappointment | disappointed pose | anyURI |
| Disdain | disdain pose | anyURI |
| Disgusted | disgusted pose | anyURI |
| Doubt | doubt pose | anyURI |
| Elation | elation pose | anyURI |
| Embarrassed | embarrassed pose | anyURI |
| Empathy | empathy pose | anyURI |
| Envy | envy pose | anyURI |
| Excitement | excitement pose | anyURI |
| fear | fear pose | anyURI |
| Friendliness | friendliness pose | anyURI |
| Frown | frown pose | anyURI |
| Frustration | frustrated pose | anyURI |
| Grin | grin pose | anyURI |

| | | |
|---|---|---|
| Guilt | guilt pose | anyURI |
| Happy | happy pose | anyURI |
| Helplessness | helplessness pose | anyURI |
| Hope | hoping pose | anyURI |
| Hurt | hurt pose | anyURI |
| Interest | interested pose | anyURI |
| Irritation | irritated pose | anyURI |
| Joy | joy pose | anyURI |
| Laugh | laughing pose | anyURI |
| Love | love pose | anyURI |
| Mad | mad pose | anyURI |
| Neutral | neutral pose | anyURI |
| Pleasure | pleasure pose | anyURI |
| Politeness | politeness pose | anyURI |
| Powerlessness | powerlessness pose | anyURI |
| Pride | pride pose | anyURI |
| Pucker | puckering | anyURI |
| Relaxed | relaxed pose | anyURI |
| Relieved | relieved pose | anyURI |
| Repulsed | repulsed pose | anyURI |
| Sad | sad pose | anyURI |
| Satisfaction | satisfied pose | anyURI |

| | | | |
|---|---|---|---|
| | Scream | screaming | anyURI |
| | Serene | serene pose | anyURI |
| | Shame | shame pose | anyURI |
| | Shock | shocked pose | anyURI |
| | shrug | shrug pose | anyURI |
| | sigh | sigh pose | anyURI |
| | Smile | smiling pose | anyURI |
| | Stress | stressed pose | anyURI |
| | Surprise | surprised pose | anyURI |
| | Tension | tension pose | anyURI |
| | Tired | tired pose | anyURI |
| | Worry | worried pose | anyURI |
| **AnimationResources** | **Element that contains, if exist, one or more link(s) to animation(s) file(s).** | | |
| | Element | Information | Type |
| | AnimationURL | Contains link to animation file, usually MP4 file. Can occur zero, once or more times. | anyURI |

3.2.3.3 Examples

Table 39 shows the description of avatar animation information with the following semantics. Among all animations, idle at default, saluting greeting, bow, dance, and salsa dance are given. The animation resources are saved at "http://avatarAnimationdb.com/default_idle.bvh",
"http://avatarAnimationdb.com/salutes.bvh",
"http://avatarAnimationdb.com/bowing.bvh",
"http://avatarAnimationdb.com/dancing.bvh", and

"http://avatarAnimationdb.com/salsa.bvh".

[Table 39]

```
<AvatarAnimation>
        <Idle>


                <default_idle>http://avatarAnimationdb.com/default_idle.bvh</default_idle>
        </Idle>
        <Greeting>
                                        <salute>http://avatarAnimationdb.com/salutes.bvh</salute>
                                        <bow>http://avatarAnimationdb.com/bowing.bvh</bow>
        </Greeting>
        <Dance>
                                        <dance>http://avatarAnimationdb.com/dancing.bvh</dance>
                                        <salsa_dance>http://avatarAnimationdb.com/salsa.bvh</salsa_dance>
        </Dance>
</AvatarAnimation>
```

3.2.4 AvatarCommunicationSkillsType

This element defines the communication skills of the avatar in relation to other avatars.

3.2.4.1 Syntax

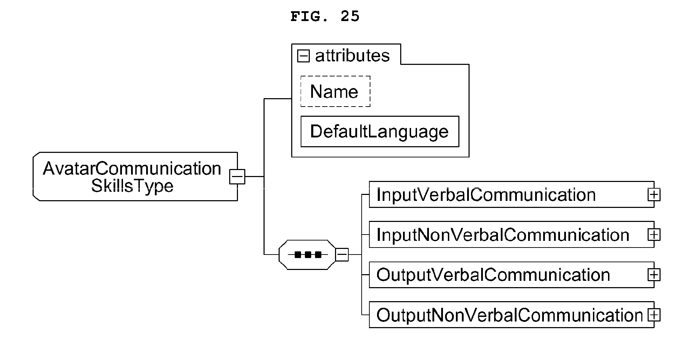

FIG. 25 illustrates a structure of an AvatarCommunicationSkillsType according to an embodiment. Table 40 shows a syntax of the AvatarCommunicationSkillsType.

[Table 40]

| | |
|---|---|
| Children | <InputVerbalCommunication>, <InputNonVerbalCommunication>, <OutputVerbalCommunication>, |
| | <OutputNonVerbalCommunication> |
| Attributes | Name (optional), DefaultLanguage (required) |
| Source | `<xsd:complexType name="AvatarCommunicationSkillsType">` `<xsd:sequence>` `<xsd:element name="InputVerbalCommunication" type="VerbalCommunicationType"/>` `<xsd:element name="InputNonVerbalCommmunication" type="NonVerbalCommunicationType"/>` `<xsd:element name="OutputVerbalCommunication" type="VerbalCommunicationType"/>` `<xsd:element name="OutputNonVerbalCommaunication" type="NonVerbalCommunicationType"/>` `</xsd:sequence>` `<xsd:attribute name="Name" type="xsd:string"/>` |

(continued)

| | |
|---|---|
| | &lt;xsd:attribute name="DefaultLanguage"<br>use="required" type="xsd:string"/&gt;<br>&lt;/xsd:complexType&gt; |

3.2.4.2 Semantics

Table 40 describes the virtual world and the rest of avatars that can adapt their inputs and outputs to these preferences (having a balance with their own preferences, too). All inputs and outputs will be individually adapted for each avatar.

The communication preferences are defined by means of two input and two output channels that guaranty multimodality. They are the verbal and nonverbal recognition as input, and the verbal and nonverbal performance as output. These channels can be specified as "enabled" and "disabled". All channels "enabled" imply an avatar is able to speak, to perform gestures and to recognize speak and gestures.

In verbal performance and verbal recognition channels the preference for using the channel via text or via voice can be specified.

The nonverbal and nonverbal recognition channels specify the types of gesturing: "Nonverbal language", "sign language" and "cued speech communication".

All the features dependent on the language (speaking via text or voice, speaking recognition via text or voice, and sign/cued language use/recognition) use a language attribute for defining the concrete language skills.

Table 41 shows semantics of the AvatarCommunicationSkillsType.

[Table 41]

| Name | Definition |
|---|---|
| &lt;VerbalCommunicationType&gt; | Defines the verbal (voice and text) communication skills of the avatar. |
| &lt;NonVerbalCommunicationType&gt; | Defines the nonverbal (body gesture) communication skills of the avatar. |
| Name | A user defined chain of characters used for addressing the CommunicationType element. |
| DefaultLanguage | The native language of the avatar (e.g., English, French). |

The DefaultLanguage attribute specifies the avatar's preferred language for all the communication channels (it will be generallyitsnativelanguage). For each communication channel other languages that override this preference can be specified.

3.2.4.3 VerbalCommunicationType

3.2.4.3.1 Syntax

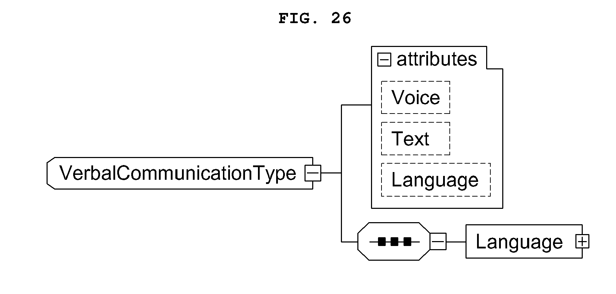

FIG. 26 illustrates a structure of a VerbalCommunicationType according to an embodiment. Table 42 shows a syntax of the VerbalCommunicationType.

[Table 42]

| Children | &lt;Language&gt; |
|---|---|
| Atttributes | Voice, Text, Language |
| Source | &lt;xsd:complexType<br>name="VerbalCommunicationType"&gt;<br>    &lt;xsd:sequence&gt;<br>      &lt;xsd:element name="Language"<br>type="LanguageType"/&gt;<br>    &lt;/xsd:sequence&gt;<br>    &lt;xsd:attribute name="Voice"<br>type="CommunicationPreferenceLevelType"/&gt; |

(continued)

| | |
|---|---|
| | `<xsd:attribute name="Text"` `type="CommunicationPreferenceLevelType"/>` `<xsd:attribute` `name="Language"type="xsd:string"/>` `</xsd:complexType>` |

3.2.4.3.2 Semantics

Table 43 shows semantics of the VerbalCommunicationType.

[Table 43]

| Name | Definition |
|---|---|
| Voice | Defines if the avatar is able or prefers to speak when used for OutputVerbalCommunication and understand when used for InputVerbalCommunication. |
| Text | Defines if the avatar is able or prefers to write when used for OutputVerbalCommunication and read when used for InputVerbalCommunication. |
| Language | Defines the preferred language for verbal communication. |

The above Table 43 specifies the avatar's verbal communication skills. Voice and text can be defined as enabled, disabled or preferred in order to specify what the preferred verbal mode is and the availability of the other.
Optional tag 'Language' defines the preferred language for verbal communication. If it is not specified, the value of the attribute DefaultLanguage defined in the CommunicationSkills tag will be applied.

3.2.4.3.3 LanguageType

3.2.4.3.3.1 Syntax

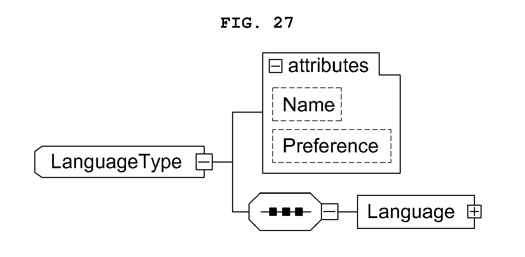

FIG. 27 illustrates a structure of a LanguageType according to an embodiment. Table 44 shows a syntax of the LanguageType.

[Table 44]

| | |
|---|---|
| Children | -- |
| Attributes | Name (name of the language),Preference (required, defines the mode in which this language is using, possible values: voice or text) |
| Source | `<xsd:complexType name="LanguageType">` `<xsd:sequence>` `<xsd:element name="Language"/>` `</xsd:sequence>` `<xsd:attribute` `name="Name"use="required"type="xsd:string"/>` `<xsd:attribute name="Preference"` `use="required"` `type="CommunicationPreferenceType"/>` `</xsd:complexType>` |

3.2.4.3.3.2 Semantics

Table 45 shows semantics of the LanguageType.

[Table 45]

| Name | Definition |
|------|-----------|
| | String that specifies the name of the language (ex. English, Spanish...). |
| Preference | Define the preference for using the language in verbal communication: voice or text. |

Table 45 defines secondary communication skills for VerbalCommunication. In case, it is not possible to use the preferred language (or the default language) defined for communicating with other avatar, these secondary languages will be applied.

3.2.4.3.3.3 CommunicationPreferenceType

3.2.4.3.3.3.1 Syntax

Table 46 shows a syntax of a Communication Preference Type.

[Table 46]

| Source | `<xsd:simpleType name="CommunicationPreferenceType">`<br>`<xsd:restriction base="xsd:string">`<br>`<xsd:enumeration value="Voice"/>`<br>`<xsd:enumeration value="Text"/>`<br>`</xsd:restriction>`<br>`</xsd:simpleType>` |
|--------|---|

3.2.4.3.3.3.2 Semantics

Table 47 shows semantics of the CommunicationPreferenceType.

[Table 47]

| Name | Definition |
|------|-----------|
| CommunicationPreferenceType | Defines the preferred level of communication of the avatar: voice or text. |

3.2.4.3.4 CommunicationPreferenceLevelType

3.2.4.3.4.1 Syntax

Table 48 shows a syntax of a CommunicationPreferenceLevelType.

[Table 48]

| Source | `<xsd:simpleType name="CommunicationPreferenceLevelType">`<br>`<xsd:restriction base="xsd:string">`<br>`<xsd:enumeration value="prefered"/>`<br>`<xsd:enumeration value="enabled"/>`<br>`<xsd:enumeration value="disabled"/>`<br>`</xsd:restriction>`<br>`</xsd:simpleType>` |
|--------|---|

3.2.4.3.4.2 Semantics

Table 49 shows semantics of CommunicationPreferenceLevelType.

[Table 49]

| Name | Definition |
|---|---|
| CommunicationPreferenceLevelType | Defined the level of preference for each language that the avatar can speak/understand. This level can be: preferred, enabled or disabled. |

3.2.4.4 NonVerbalCommunicationType

3.2.4.4.1 Syntax

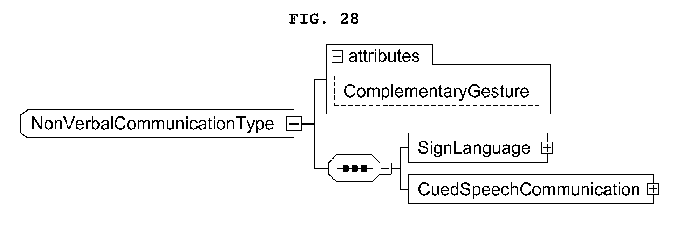

FIG. 28 illustrates a structure of a NonVerbalCommunicationType according to an embodiment. Table 50 illustrates a syntax of the NonVerbalCommunicationType.

[Table 50]

| Children | <SignLanguage>, <CuedSpeechCommunication>, |
|---|---|
| Attributes | ComplementaryGesture |
| Source | <xsd:complexType name="NonVerbalCommunicationType"> <xsd:sequence> <xsd:element name="SignLanguage"type="SignLanguageType"/> <xsd:element name="Cued Speech Communication "type="Sign Language Type"/> </xsd:sequence> <xsd:attribute |
| | name="ComplementaryGesture"use="optional"type="xsd:string"/> </xsd:complexType> |

3.2.4.4.2 Semantics

Table 51 shows semantics of theNonVerbalCommunicationType.

[Table 51]

| Name | Definition |
|---|---|
| SignLanguage | Defines the sign languages that the avatar is able to perform when used for OutputVerbalCommunication and interpret when used for InputVerbalCommunication. |
| CuedSpeechCommunication | Defines the cued speech communications that the avatar is able to perform when used for OutputVerbalCommunication and interpret when used for InputVerbalCommunication. |
| ComplementaryGesture | Defines if the avatar is able to perform complementary gesture during output verbal communication. |

3.2.4.4.3 SignLanguageType

3.2.4.4.3.1 Syntax

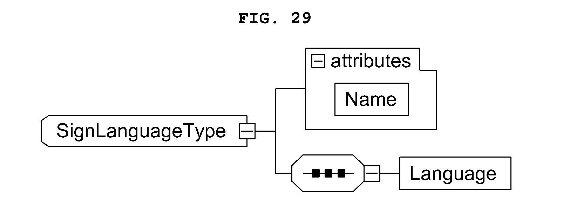

FIG. 29 illustrates a structure of a SignLanguageType according to an embodiment. Table 52 shows a syntax of the SignLanguageType.

[Table 52]

| Children | -- |
|---|---|
| Attributes | Name (name of the language) |
| Source | `<xsd:complexType name="SignLanguageType">` `<xsd:sequence>` `<xsd:element name="Language"/>` `</xsd:sequence>` `<xsd:attribute name="Name"use="required"type="xsd:string"/>` `</xsd:complexType>` |

3.2.4.4.3.2 Semantics

Table 53 shows semantics of the SignLanguageType.

[Table 53]

| Name | Definition |
|---|---|
| Name | String that specifies the name of the language (ex. English, Spanish...) |

Table 53 defines secondary communication skills for NonVerbalCommunication (sign or cued communication). In case it is not possible to use the preferred language (or the default language), these secondary languages will be applied.

3.2.5 AvatarPersonalityType

3.2.5.1 Syntax

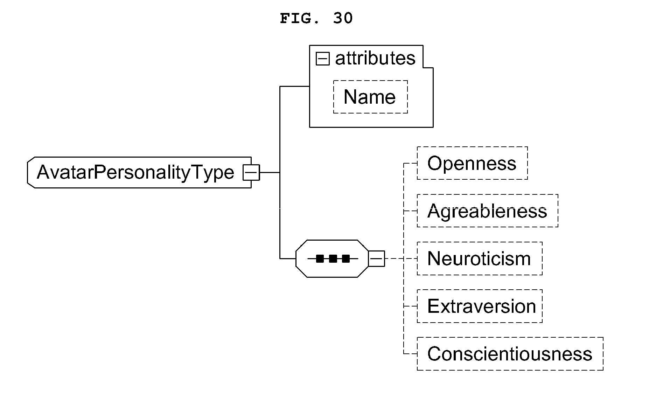

FIG. 30 illustrates a structure of an AvatarPersonalityType according to an embodiment. Table 54 shows a syntax of the AvatarPersonalityType.

[Table 54]

| children | `<Oppeness>,<Agreableness>,<Neuroticism>,<Extraversion>,<Conscientiousnes` |
|---|---|
| Attributes | Name. Name of the personality configuration. It is optional. |
| Source | `<xsd:complexType name="Avatar Personality Type">` `<xsd:sequence>` |
| | `<xsd:element name="Openness"minOccurs="0">` `<xsd:simpleType>` `<xsd:restriction base="xsd:decimal">` `<xsd:minInclusive value="-1"/>` `<xsd:maxInclusive value="1"/>` `</xsd:restriction>` `</xsd:simpleType>` `</xsd:element>` `<xsd:element name="Agreeableness"minOccurs="0">` `<xsd:simpleType>` `<xsd:restriction base="xsd:decimal">` `<xsd:minInclusive value="-1"/>` `<xsd:maxInclusive value="1"/>` `</xsd:restriction>` `</xsd:simpleType>` |

(continued)

```
                    </xsd:element>
        <xsd:element name="Neuroticism"minOccurs="0">
                        <xsd:simpleType>
                            <xsd:restriction base="xsd:decimal">
                                <xsd:minInclusive value="-1"/>
                                <xsd:maxInclusive value="1"/>
                            </xsd:restriction>
                        </xsd:simpleType>
                    </xsd:element>
        <xsd:element name="Extraversion"minOccurs="0">
                        <xsd:simpleType>
                                <xsd:restriction base="xsd:decimal">
                                <xsd:minInclusive value="-1"/>
                                <xsd:maxInclusive value="1"/>
                            </xsd:restriction>
                            </xsd:simpleType>
                    </xsd:element>
        <xsd:element name="Conscientiousness"minOccurs="0">
                        <xsd:simpleType>
                            <xsd:restriction base="xsd:decimal">
                                <xsd:minInclusive value="-1"/>
                                <xsd:maxInclusive value="1"/>
                            </xsd:restriction>
                        </xsd:simpleType>
                </xsd:element>
            </xsd:sequence>
            <xsd:attribute name="Name"type="CDATA"/>
        </xsd:complexType>
```

3.2.5.2 Semantics

This tag defines the personality of the avatar. This definition is based on the OCEAN model, consisting in a set of characteristics that personality is composed of. A combination of these characteristics is a specific personality. Therefore, an avatar contains a subtag for each attribute defined in OCEAN's model. They are: openness, conscientiousness, extraversion, agreeableness, and neuroticism.

The purpose of this tag is to provide the possibility to define the avatar personality that is desired, and that the architecture of the virtual world can interpret as the inhabitant wishes. It would be able to adapt the avatar's verbal and nonverbal communication to this personality. Moreover, emotions and moods that could be provoked by virtual world events, avatar-avatar communication or the real time flow, will be modulated by this base personality.

Table 55 shows semantics of the AvatarPersonalityType.

[Table 55]

| Name | Definition |
|---|---|
| Openness | A value between -1 and 1 specifying the openness level of the personality. |
| Agreeableness | A value between -1 and 1 specifying the agreeableness level of the personality. |
| Neuroticism | A value between -1 and 1 specifying the neuroticism level of the personality. |
| Extraversion | A value between -1 and 1 specifying the extraversion level of the personality. |
| Conscientiousness | A value between -1 and 1 specifying the conscientiousness level of the personality. |

3.2.6 AvatarControlFeaturesType

3.2.6.1 Syntax

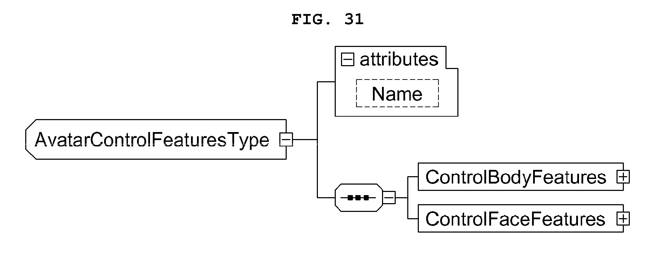

FIG. 31 illustrates a structure of an AvatarControlFeaturesType according to an embodiment. Table 56 shows a syntax of the AvatarControlFeaturesType.

[Table 56]

| Children | <ControlBodyFeatures>,<ControlFaceFeatures> |
|---|---|
| Attributes | Name. Name of the Control configuration. It is optional. |
| Source | <xsd:complexType name= "AvatarControlFeaturesType ">                <xsd:sequence>                               <xsd:element name="ControlBodyFeatures" type="Control Body Features Type" minOccurs="0"/>                               <xsd:element name="ControlFaceFeatures" type="ControlFaceFeaturesType" minOccurs="0"/>                </xsd:sequence>                     <xsd:attribute name="Name" type="CDATA"/> </xsd:complexType> |

3.2.6.2 Semantics

Table 57 shows semantics of the AvatarControlFeaturesType.

[Table 57]

| Name | Description |
|---|---|
| ControlBodyFeatures | Set of elements that control moves of the body (bones). |
| ControlFaceFeatures | Set of elements that control moves of the face. |

3.2.6.3 Examples

Table 58 shows the description of controlling body and face features with the following semantics. The features control is given and works as a container.

[Table 58]

```
<AvatarControlFeatures>
        <ControlBodyFeatures>
                <headBones>
                ...
        </ControlBodyFeatures>
        <ControlFaceFeatures>
                <HeadOutline>
                ...
        </ControlFaceFeatures>
</AvatarControlFeatures>
```

3.2.6.4 ControlBodyFeaturesType

3.2.6.4.1 Syntax

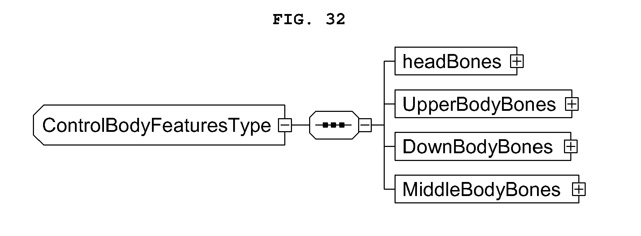

FIG. 32 shows a structure of a ControlBodyFeaturesType according to an embodiment. Table 59 shows a syntax of the ControlBodyFeaturesType.

[Table 59]

| Children | \<headBones>, \<UpperBodyBones>, \<DownBodyBones>, \<MiddleBodyBones> |
|---|---|
| Source | \<xsd:complexType name="ControlBodyFeaturesType"><br>        \<xsd:sequence><br>                \<xsd:element name="headBones" type="headBonesType" minOccurs="0"/><br>                \<xsd:element name="UpperBodyBones" type="UpperBodyBonesType" minOccurs="0"/><br>                \<xsd:element name="DownBodyBones" type="DownBodyBonesType" minOccurs="0"/><br>                \<xsd:element name="MiddleBodyBones" type="MiddleBodyBonesType" minOccurs="0"/><br>        \</xsd:sequence><br>\</xsd:complexType> |

3.2.6.4.2 Semantics

Table 60 shows semantics of the Control Body Features Type.

【Table 60】

| Name | Description (Compare with Human Bones) | |
|---|---|---|
| headBones | Set of bones on the head.<br><br>Containing elements: | |
| | Element | Information |
| | CervicalVertebrae7 | cervical vertebrae |
| | CervicalVertebrae6 | cervical vertebrae |

| | |
|---|---|
| | CervicalVertebrae5       cervical vertebrae 5 |
| | CervicalVertebrae4       cervical vertebrae 4 |
| | CervicalVertebrae3       cervical vertebrae 3 |
| | CervicalVertebrae2       cervical vertebrae 2 |
| | CervicalVertebrae1       cervical vertebrae 1 |
| | skull       skull |
| | l_eyelid |
| | r_eyelid |
| | l_eyeball |
| | r_eyeball |
| | l_eyebrow |
| | r_eyebrow |
| | jaw |
| **UpperBodyBones** | **Set of bones on the upper part of the body, mainly arms and hands bones.**<br><br>**Containing elements:** |

| Element | Information |
|---|---|
| LClavicle | Lclavicle |
| LScapulae | Lscapulae |
| LHumerus | Lhumerus |
| LRadius | Lradius |

| | |
|---|---|
| lfWrist | |
| lHand | |
| Lthumb | Lthumb_Metacarpal |
| LPhalanges1 | LPhalanges1 |
| lThumb2 | |
| LPhalanges2 | LPhalanges2 |
| LIndex | Lindex_Metacarpal |
| LPhalanges3 | LPhalanges3 |
| LPhalanges4 | LPhalanges4 |
| LPhalanges5 | LPhalanges5 |
| LMiddle | Lmiddle_Metacarpal |
| LPhalanges6 | LPhalanges6 |
| LPhalanges7 | LPhalanges7 |
| LPhalanges8 | LPhalanges8 |
| Lring | Lring_Metacarpal |
| LPhalanges9 | LPhalanges9 |
| LPhalanges10 | LPhalanges10 |
| LPhalanges11 | LPhalanges11 |
| LPinky | Lpinky_Metacarpal |
| LPhalanges12 | LPhalanges12 |
| LPhalanges13 | LPhalanges13 |
| LPhalanges14 | LPhalanges14 |

| | |
|---|---|
| RClavicle | Rclavicle |
| RScapulae | Rscapulae |
| RHumerus | Rhumerus |
| RRadius | Rradius |
| RWrist | |
| rtHand | |
| RThumb | Rthumb_Metacarpal |
| RPhalanges1 | RPhalanges1 |
| RThumb2 | |
| RPhalanges2 | RPhalanges2 |
| RIndex | RLindex_Metacarpal |
| RPhalanges3 | RPhalanges3 |
| RPhalanges4 | RPhalanges4 |
| RPhalanges5 | RPhalanges5 |
| RMiddle | RLmiddle_Metacarpal |
| RPhalanges6 | RPhalanges6 |
| RPhalanges7 | RPhalanges7 |
| RPhalanges8 | RPhalanges8 |
| RRing | Rring_Metacarpal |
| RPhalanges9 | RPhalanges9 |
| RPhalanges10 | RPhalanges10 |
| RPhalanges11 | RPhalanges11 |

| | | |
|---|---|---|
| | RPinky | Rpinky_Metacarpal |
| | RPhalanges12 | RPhalanges12 |
| | RPhalanges13 | RPhalanges13 |
| | RPhalanges14 | RPhalanges14 |
| **DownBodyBones** | **Set of bones on the down part of the body, mainly legs and foot bones.**<br><br>**Containing elements:** | |
| | Element | Information |
| | LFemur | Lfemur |
| | LPatella | Lpatella (knee bon⸱ |
| | LTibia | Ltibia (femur in front) |
| | LFibulae | Lfibulae |
| | LTarsals1 | Ltarsals1 |
| | LTarsals2 | Ltarsals2 (7 are al⸱ |
| | LMetaTarsals | Lmetatarsals (5) |
| | LPhalanges | LPhalanges (1 - 14 |
| | RFemur | Rfemur |
| | RPatella | Rpatella (knee bon⸱ |
| | RTibia | Rtibia (femur in front) |
| | RFibulae | Rfibulae |

| | | |
|---|---|---|
| | RTarsals1 | Rtarsals1 (parts of ankle) |
| | RTarsals2 | Rtarsals2 (7 are all) |
| | RMetaTarsals | Rmetatarsals (5) (foot parts) |
| | RPhalanges | RPhalanges (1 - 14) (foot parts) |
| **MiddleBodyBones** | **Set of bones on the middle body, torso.** **Containing elements:** | |
| | Element | Information |
| | Sacrum | Sacrum |
| | Pelvis | pelvis |
| | LumbarVertebrae5 | lumbar vertebrae 5 |
| | LumbarVertebrae4 | lumbar vertebrae 4 |
| | LumbarVertebrae3 | lumbar vertebrae 3 |
| | LumbarVertebrae2 | lumbar vertebrae 2 |
| | LumbarVertebrae1 | lumbar vertebrae 1 |
| | ThoracicVertebrae12 | thoracic vertebrae |
| | ThoracicVertebrae11 | thoracic vertebrae |
| | ThoracicVertebrae10 | thoracic vertebrae |
| | ThoracicVertebrae9 | thoracic vertebrae |
| | ThoracicVertebrae8 | thoracic vertebrae |

| | |
|---|---|
| ThoracicVertebrae7 | thoracic vertebrae 7 |
| ThoracicVertebrae6 | thoracic vertebrae 6 |
| ThoracicVertebrae5 | thoracic vertebrae 5 |
| ThoracicVertebrae4 | thoracic vertebrae 4 |
| ThoracicVertebrae3 | thoracic vertebrae 3 |
| ThoracicVertebrae2 | thoracic vertebrae 2 |
| ThoracicVertebrae1 | thoracic vertebrae 1 |

3.2.6.4.3 Examples

Table 61 shows the description of controlling body features with the following semantics. The body features control maps the user defined body feature points to the placeholders. Table 62 shows a set of the feature points that are mapped to the placeholders defined in the semantics.

[Table 61]

```
<ControlBodyFeatures>
        <headBones>
                <skull>head</skull>
                <CervicalVerbae1>neck</CervicalVerbae1>
</headBones>
        <UpperBodyBones>
                <LClavicle>lCollar</LClavicle>
                <LHumerus>lShldr</LHumerus>
                <LRadius>lForeArm</LRadius>
                <LHand>1Hand</LHand>
                <RClavicle>rCollar</RClavicle>
                <RHumerus>rShldr</RHumerus>
                <RRadius>RForeArm</RRadius>
                <RHand>RHand</RHand>
        </UpperBodyBones>
        <DownBodyBones>
                <LFemur>lThigh</LFemur>
                <LTibia>lShin</LTibia>
                <LFibulae>lFoot</LFibulae>
                <RFemur>rThigh</RFemur>
                <RTibia>rShin</RTibia>
                <RFibulae>rFoot</RFibulae>
        </DownBodyBones>
        <MiddleBodyBones>
                <Sacrum>hip</Sacrum>
                <Pelvis>abdomen</Pelvis>
```

(continued)

```
                    <ThoracicVertebrae1>chest</ThoracicVertebrae1>
          </MiddleBodyBones>
</ControlBodyFeatures>
```

[Table 62]

| Name of Placeholder | User defined features |
|---|---|
| sacrum | hip |
| pelvis | abdomen |
| Lfemur | LThigh |
| Ltibia (femur in front) | LShin |
| Lfibulae | Lfoot |
| Rfemur | RThigh |
| Rtibia (femur in front) | Rshin |
| Rfibulae | Rfoot |
| thoracic vertebrae 1 | chest |
| cervical vertebrae 1 | neck |
| skull | head |
| Lclavicle | lCollar |
| Lhumerus | lShldr |
| Lradius | lForeArm |
| If Hand | lHand |
| Rclavicle | Rcollar |
| Rhumerus | RShldr |
| Rradius | RForeArm |

3.2.6.5 ControlFaceFeaturesType

3.2.6.5.1 Syntax

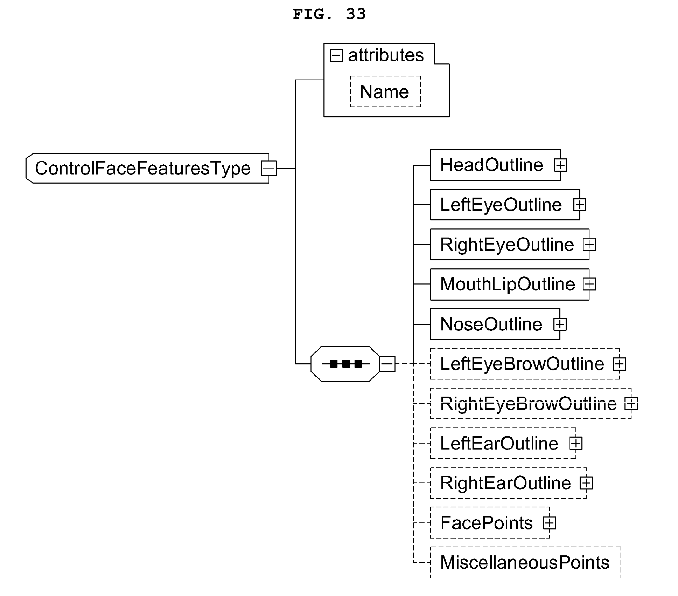

FIG. 33 illustrates a structure of a ControlFaceFeaturesType according to an embodiment. Table 63 shows a syntax of the ControlFaceFeaturesType.

[Table 63]

| | |
|---|---|
| Children | <HeadOutline>, <LeftEyeOutline>, <RightEyeOutline>, <LeftEyeBrowOutline>, <RightEyeBrowOutline>, <LeftEarOutline>, <RightEarOutline>, <NoseOutline>, <MouthLipOutline>, <FacePoints>, <MiscellaneousPoints> |
| Attributes | Name. Name of the Face Control configuration. It is optional. |
| Source | <xsd:complexType name="ControlFaceFeaturesType"> <xsd:sequence> <xsd:element name="HeadOutline" |

(continued)

| | |
|---|---|
| | type="OutlineType"/><br>                                       <xsd:element name="LeftEyeOutline" |
| | type="OutlineType"/><br>                                       <xsd:element name="RightEyeOutline"<br>type="OutlineType"/><br>                                       <xsd:element name="MouthLipOutline"<br>type="OutlineType"/><br>                                       <xsd:element name="NoseOutline"<br>type="OutlineType"/><br>                                       <xsd:element name="LeftEyeBrowOutline"<br>type="Outline4PointsType" minOccurs="0"/><br>                                       <xsd:element name="RightEyeBrowOutline"<br>type="Outline4PointsType" minOccurs="0"/><br>                                       <xsd:element name="LeftEarOutline"<br>type="Outline4PointsType" minOccurs="0"/><br>                                       <xsd:element name="RightEarOutline"<br>type="Outline4PointsType" minOccurs="0"/><br>                                       <xsd:element name="FacePoints"<br>type="OutlineType" minOccurs="0"/><br>                                       <xsd:element name="MiscellaneousPoints"<br>minOccurs="0"/><br>                </xsd:sequence><br>                <xsd:attribute name="Name" type="CDATA"/><br></xsd:complexType> |

3.2.6.5.2 Semantics

Table 64 shows semantics of the ControlFaceFeaturesType.

【Table 64】

| Name | Description |
|---|---|
| HeadOutline | Describes the outline of the head (see FIG. 34).<br><br>| Name | Description |<br>                                                                                                  Outline4points   Describes a basic outline of |

| | | |
|---|---|---|
| | | the head |
| | Outline8points | Describes the extended outline of the head for the higher resolution outline of the head with 8 points. |
| LeftEyeOutline | Describes the outline of the left eye (see FIG. 35). | |
| | Name | Description |
| | Outline4points | Describes a basic outline of the left eye |
| | Outline8points | Describes the extended outline of the left for the higher resolution outline of the head with 8 points. |
| RightEyeOutline | Describes the outline of the right eye (see 36). | |
| | Name | Description |
| | Outline4points | Describes a basic outline of the right eye |
| | Outline8points | Describes the extended outline of the left for the higher resolution outline of the head with 8 points. |
| LeftEyeBrowOutline | Describes the outline of the right eye (see FIG. 37) | |
| RightEyeBrowOutline | Describes the outline of the right eyebrow (see FIG. 38). | |

| | |
|---|---|
| LeftEarOutline | Describes the outline of the left eare (see FIG. 39) |
| RightEarOutline | Describes the outline of the right ear (see FIG. 39) |
| NoseOutline | Describes the basic outline of the nose (see FIG. 40)<br><br>| Name | Description |<br>|---|---|<br>| Outline4points | Describes a basic outline of the right eye |<br>| Outline8points | Describes the extended outline of the left for the higher resolution outline of the head with 8 points. | |
| MouthLipOutline | Describes the outline of the mouth lips (see FIG. 41)<br><br>| Name | Description |<br>|---|---|<br>| Outline4points | Describes a basic outline of the right eye |<br>| Outline14points | Describes the extended outline of the left for the higher resolution outline of the head with 14 points. | |
| FacePoints | Forms a high resolution facial expression (FIG. 42) |

| | |
|---|---|
| MiscellaneousPoints | Describes the any arbitrary feature points can be placed and defined for an advanced facial feature control. |

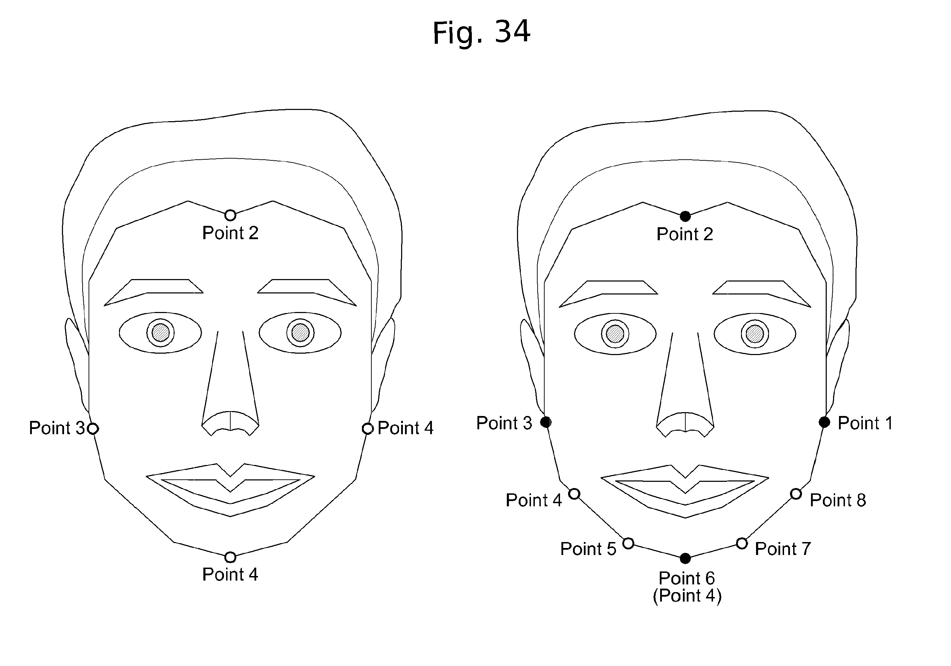

FIG. 34 illustrates an example of a HeadOutline according to an embodiment. "Point1" through "Point4" describe four points forming the basic outline of the head. Also, "Point5" through "Point8" describe additional 4 points forming the high resolution of the head.

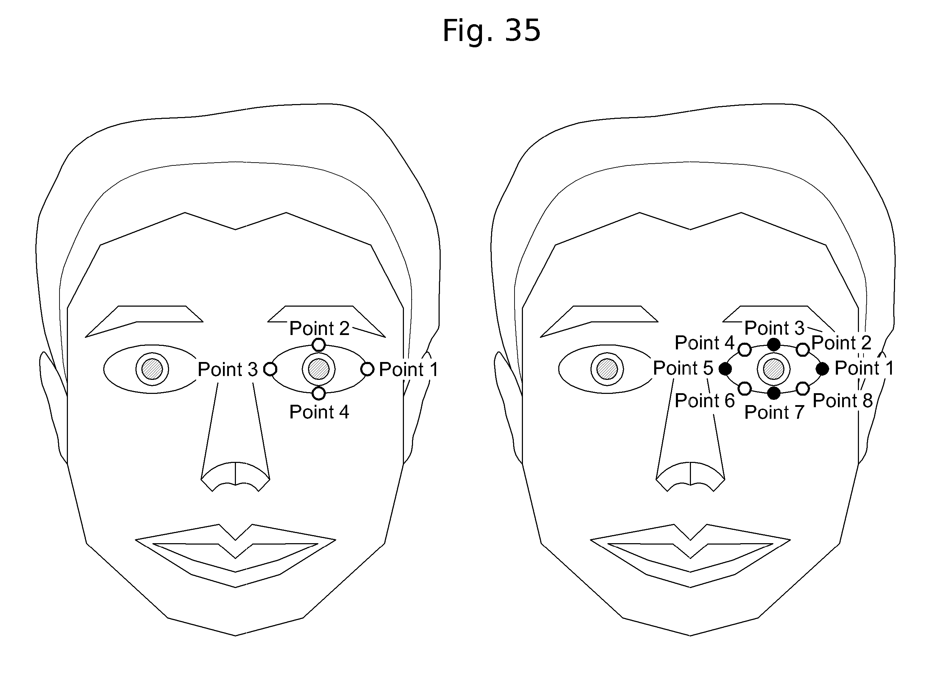

FIG. 35 illustrates an example of a LeftEyeOutline according to an embodiment. In this instance, "Point1" through "Point4" describe four points forming the basic outline of the left eye. Also, "Point5" through "Point8" describe additional four points to form the high resolution outline of the left eye.

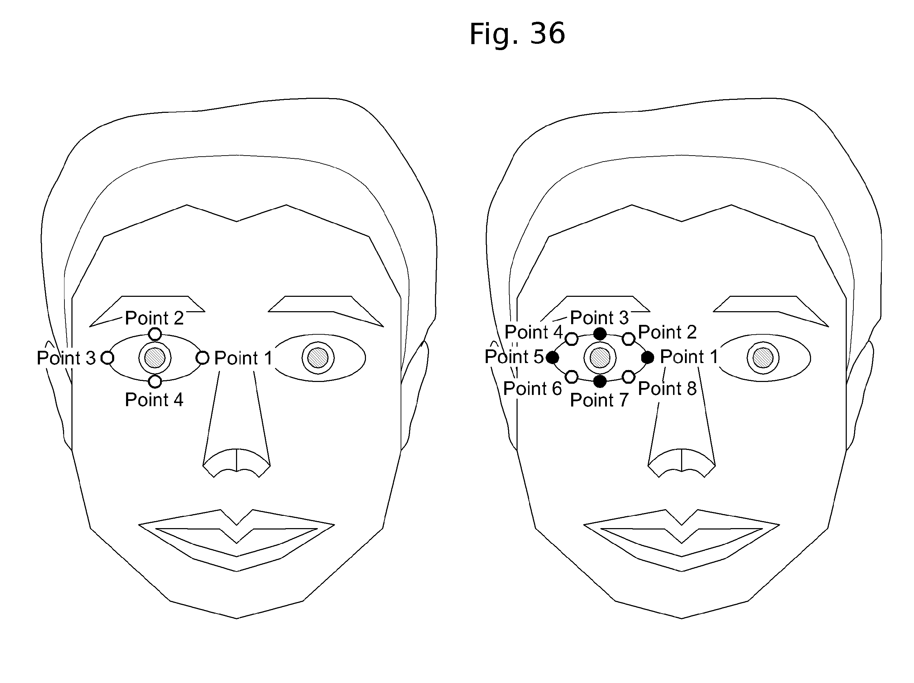

FIG. 36 illustrates an example of aRightEyeOutline according to an embodiment. In this instance, "Point1" through "Point4" describe four points forming the basic outline of the right eye. Also, "Point5" through "Point8" describe additional four points to form the high resolution outline of the right eye.

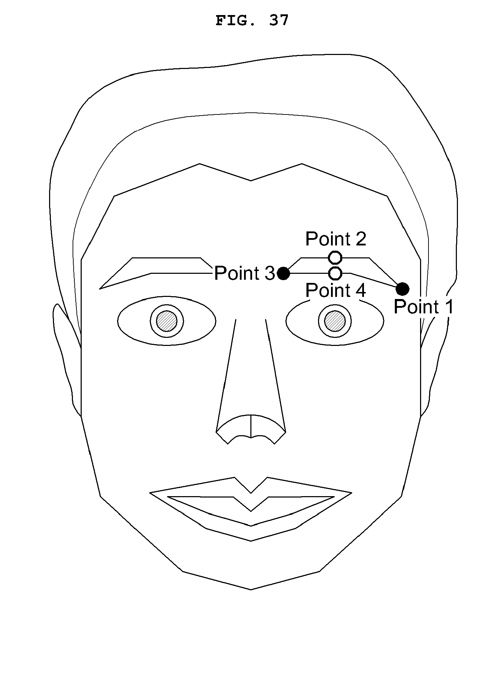

FIG. 37 illustrates an example of a LeftEyeBrowOutline according to an embodiment. In this instance, "Point1" through "Point4" describe four points forming the outline of the left eyebrow.

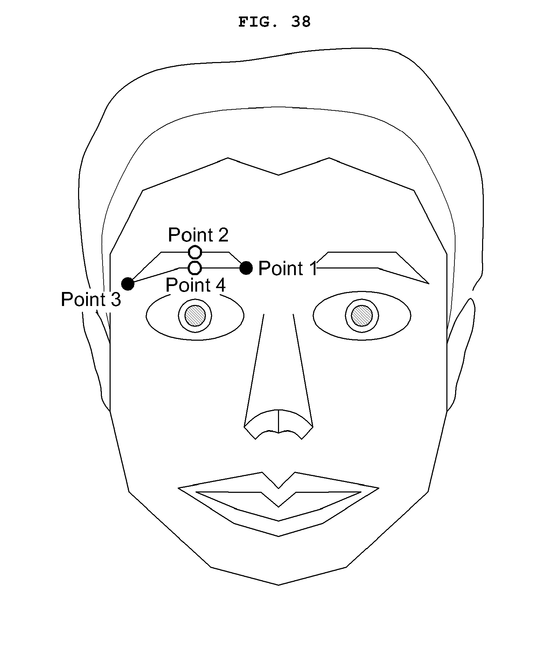

FIG. 38 illustrates an example of a RightEyeBrowOutline according to an embodiment. In this instance, "Point1" through "Point4" describe four points forming the outline of the right eyebrow.

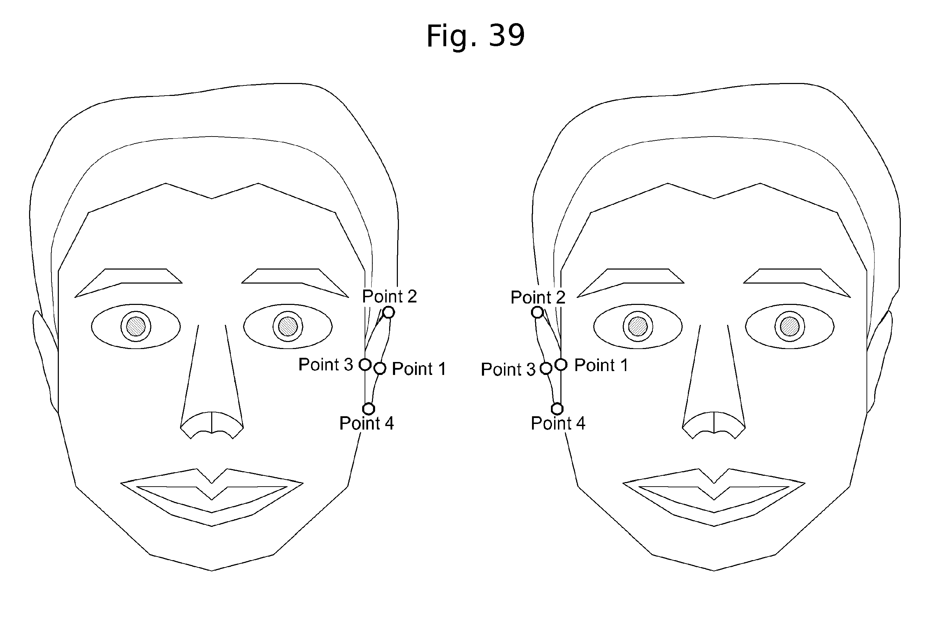

FIG. 39 illustrates an example of a LeftEarOutline and a RightEarOutline according to an embodiment. In the left face shape, "Point1" through "Point4" describe four points forming the outline of the left ear. In the right face shape, "Point1" through "Point4" describe four points forming the outline of the right ear.

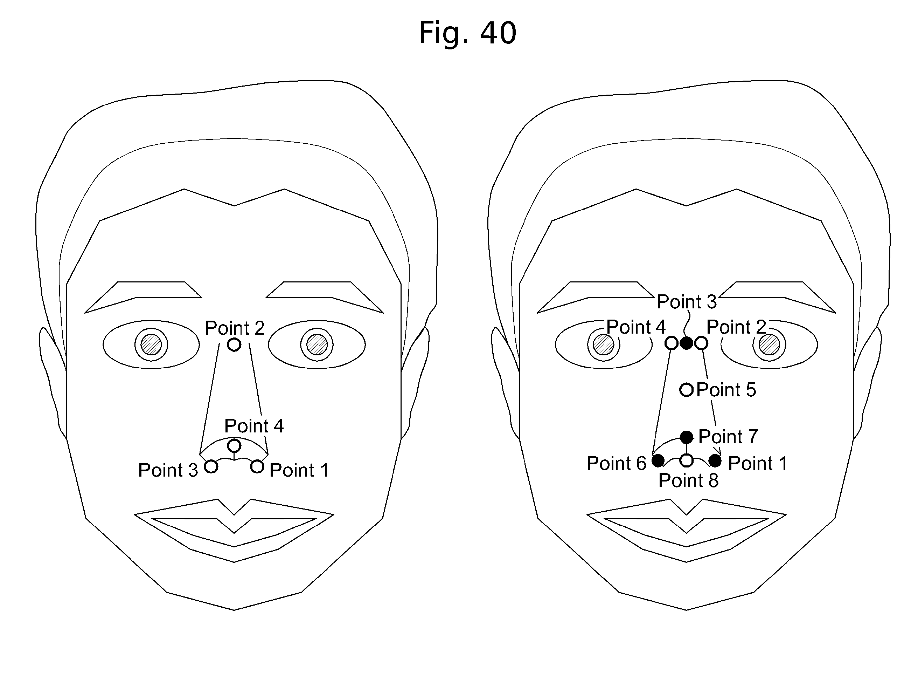

FIG. 40 illustrates an example of a NoseOutline according to an embodiment. In this instance, "Point1" through "Point4" describe four points forming the basic outline of the nose. Also, "Point5" through "Point8" describe additional four points to form the high resolution outline of the nose.

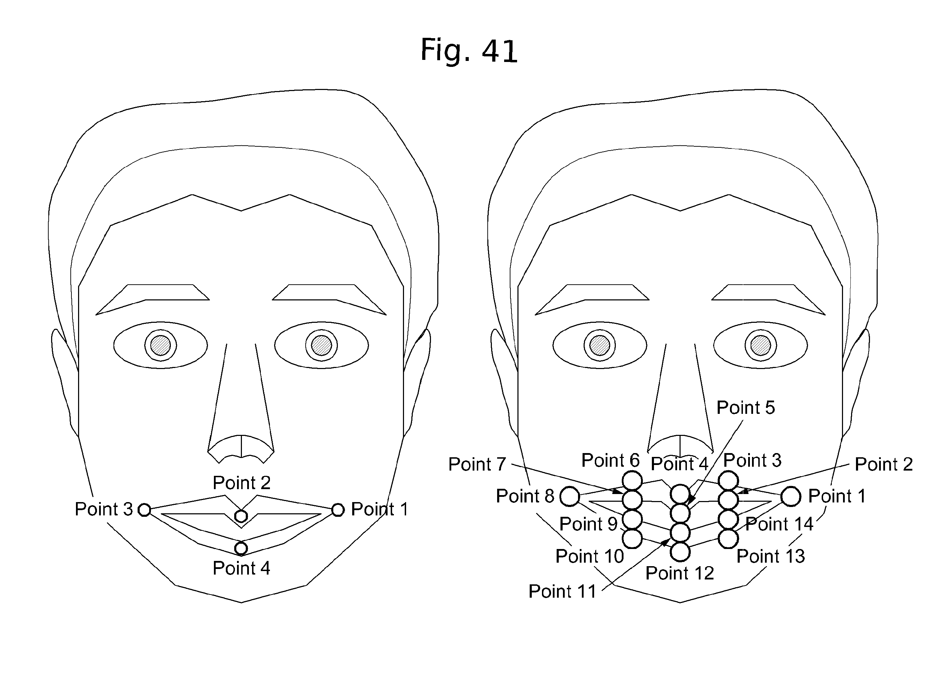

FIG. 41 illustrates an example of aMouthLipOutline according to an embodiment. In this instance, "Point1" through "Point4" describe four points forming the basic outline of the mouth lips. Also, "Point5" through "Point14" describe additional four points to form the high resolution outline of the mouth lips.

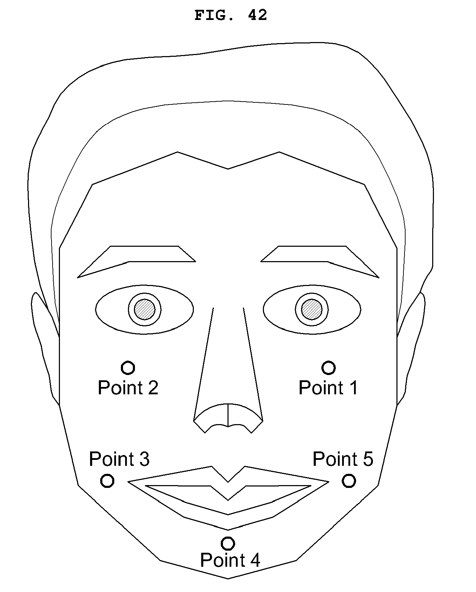

FIG. 42 illustrates an example of a FacePoints according to an embodiment. In this instance, "Point1" through "Point5" describe five points forming the high resolution facial expression.

3.2.6.5.3 OutlineType

3.2.6.5.3.1 Syntax

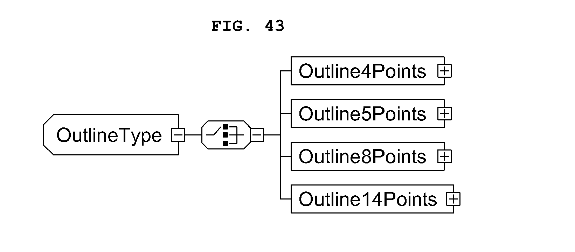

FIG. 43 illustrates a structure of an OutlineType according to an embodiment. Table 65 shows a syntax of the OutlineType.

[Table 65]

| | |
|---|---|
| Children | <Outline4Points>, <Outline5Points>, <Outline8Points>, <Outline14Points> |
| Source | <xsd:complexType name="OutlineType"><br>    <xsd:choice><br>        <xsd:element name="Outline4Points" type="Outline4PointsType"/><br>        <xsd:element name="Outline5Points" type="Outline5PointsType"/><br>        <xsd:element name="Outline8Points" type="Outline8PointsType"/><br>        <xsd:element name="Outline14Points" type="Outline14PointsType"/> |
| | </xsd:choice> |

(continued)

| </xsd:complexType> |
|---|

3.2.6.5.3.2 Semantics

Table 66 shows semantics of the OutlineType. The OutlineType contains 5 different types of outline depending upon the number of points forming the outline.

[Table 66]

| Name | Description |
|---|---|
| Outline4Points | The outline with 4 points. |
| Outline5Points | The outline with 5 points. |
| Outline8Points | The outline with 8 points. |
| Outline14Points | The outline with 14 points. |

3.2.6.5.3.3 Outline4PointsType

3.2.6.5.3.3.1 Syntax

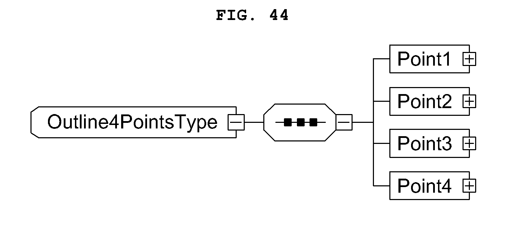

FIG. 44 illustrates a structure of an Outline4PointsType according to an embodiment. Table 67 shows a syntax of the Outline4PointsType.

[Table 67]

| Children | <Point1>, <Point2>, <Point3>, <Point4> |
|---|---|
| Source | <xsd:complexType name="OutlineType"><br>    <xsd:sequence><br>            <xsd:element name="Point1" /><br>            <xsd:element name="Point2" /><br>            <xsd:element name="Point3" /><br>            <xsd:element name="Point4" /><br>    </xsd:sequence><br></xsd:complexType> |

3.2.6.5.3.3.2 Semantics

Table 68 shows semantics of the Outline4PointsType. The points are numbered from the leftmost point by the counter-clockwise. For example, if there are 4 points at the left, top, right, bottom of the outline, they are Point1, Point2, Point3, Point4, respectively.

[Table 68]

| Name | Description |
|---|---|
| Point1 | The 1st point of the outline. |
| Point2 | The 2nd point of the outline. |
| Point3 | The 3rd point of the outline. |
| Point4 | The 4th point of the outline. |

3.2.6.5.3.4 Outline5PointsType

3.2.6.5.3.4.1 Syntax

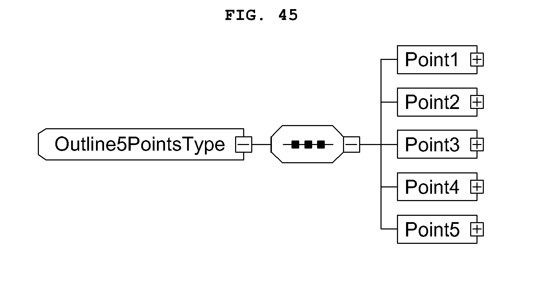

FIG. 45 illustrates a structure of an Outline5PointsType according to an embodiment. Table 69 shows a syntax of the Outline5PointsType.

[Table 69]

| Children | <Point1>, <Point2>, <Point3>, <Point4>, <Point5> |
|---|---|
| Source | `<xsd:complexType name="OutlineType">`<br>　　　`<xsd:sequence>`<br>　　　　　　`<xsd:element name="Point1"/>`<br>　　　　　　`<xsd:element name="Point2"/>`<br>　　　　　　`<xsd:element name="Point3"/>`<br>　　　　　　`<xsd:element name="Point4"/>`<br>　　　　　　`<xsd:element name="Point5"/>`<br>　　　`</xsd:sequence>`<br>`</xsd:complexType>` |

3.2.6.5.3.4.2 Semantics

Table 70 shows semantics of the Outline5PointsType. The points are numbered from the leftmost point by the counter-clockwise.

[Table 70]

| Name | Description |
|---|---|
| Point1 | The 1st point of the outline. |
| Point2 | The 2nd point of the outline. |
| Point3 | The 3rd point of the outline. |
| Point4 | The 4th point of the outline. |
| Point5 | The 5th point of the outline. |

3.2.6.5.3.5 Outline8PointsType

3.2.6.5.3.5.1 Syntax

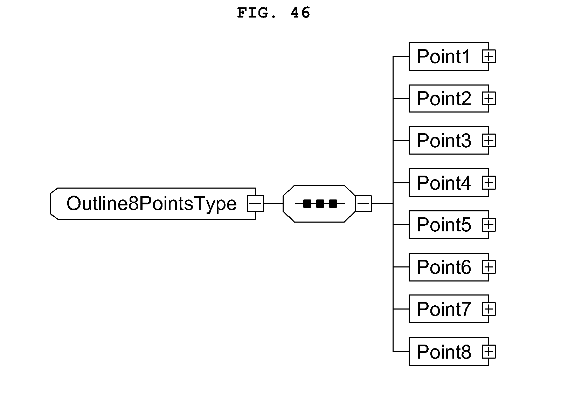

FIG. 46 illustrates a structure of an Outline8PointsType according to an embodiment. Table 71 shows a syntax of the Outline8PointsType.

[Table 71]

| Children | <Point1>, <Point2>, <Point3>, <Point4>, <Point5>, <Point6>, <Point7>, <Point8> |
|---|---|
| Source | `<xsd:complexType name="OutlineType">`<br>　　　`<xsd:sequence>`<br>　　　　　　`<xsd:element name="Point1"/>`<br>　　　　　　`<xsd:element name="Point2"/>`<br>　　　　　　`<xsd:element name="Point3"/>`<br>　　　　　　`<xsd:element name="Point4"/>`<br>　　　　　　`<xsd:element name="Point5"/>` |

(continued)

|  | <xsd:element name="Point6"/><br><xsd:element name="Point7"/><br><xsd:element name="Point8"/><br></xsd:sequence><br></xsd:complexType> |
|---|---|

3.2.6.5.3.5.2 Semantics

Table 72 shows semantics of the Outline8PointsType. The points are numbered from the leftmost point by the counter-clockwise.

[Table 72]

| Name | Description |
|---|---|
| Point1 | The 1st point of the outline. |
| Point2 | The 2nd point of the outline. |
| Point3 | The 3rd point of the outline. |
| Point4 | The 4th point of the outline. |
| Point5 | The 5th point of the outline. |
| Point6 | The 6th point of the outline. |
| Point7 | The 7th point of the outline. |
| Point8 | The 8th point of the outline. |

3.2.6.5.3.6 Outline14Points

3.2.6.5.3.6.1 Syntax

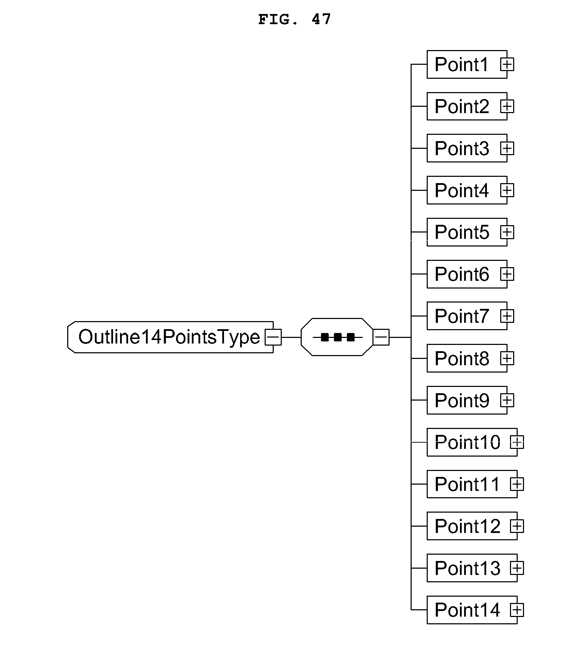

FIG. 47 illustrates a structure of an Outline14Points according to an embodiment. Table 73 shows a syntax of the Outline14Points.

[Table 73]

| Children | <Point1>, <Point2>, <Point3>, <Point4>,<br><Point5>, <Point6>, <Point7>, <Point8>,<br><Point9>, <Point10>, <Point11>, <Point12>,<br><Point13>, <Point14> |
|---|---|
| Source | <xsd:complexType name="OutlineType"><br>    <xsd:sequence><br>        <xsd:element name="Point1"/><br>        <xsd:element name="Point2"/><br>        <xsd:element name="Point3"/><br>        <xsd:element name="Point4"/><br>        <xsd:element name="Point5"/><br>        <xsd:element name="Point6"/> |
|  | <xsd:element name="Point7"/><br>        <xsd:element name="Point8"/><br>        <xsd:element name="Point9"/><br>        <xsd:element name="Point10"/><br>        <xsd:element name="Point11"/><br>        <xsd:element name="Point12"/> |

(continued)

| | <xsd:element name="Point13"/> |
|---|---|
| | <xsd:element name="Point14"/> |
| | </xsd:sequence> |
| </xsd:complexType> | |

3.2.6.5.3.6.2 Semantics

Table 74 shows semantics of the Outline14Points. The points are numbered from the leftmost point by the counter-clockwise.

[Table 74]

| Name | Description |
|---|---|
| Point1 | The 1st point of the outline. |
| Point2 | The 2nd point of the outline. |
| Point3 | The 3rd point of the outline. |
| Point4 | The 4th point of the outline. |
| Point5 | The 5th point of the outline. |
| Point6 | The 6th point of the outline. |
| Point7 | The 7th point of the outline. |
| Point8 | The 8th point of the outline. |
| Point9 | The 9th point of the outline. |
| Point10 | The 10th point of the outline. |
| Point11 | The 11th point of the outline. |
| Point12 | The 12th point of the outline. |
| Point13 | The 13th point of the outline. |
| Point14 | The 14th point of the outline. |

3.2.6.5.4 Examples

Table 75 shows the description of controlling face features with the following semantics. The face features control maps the user defined face feature points to the placeholders. Table 76 shows a set of the feature points that are mapped to the placeholders defined in the semantics.

[Table 75]

```
<ControlFaceFeatures Name="String">
        <HeadOutline>
                <Outline4Points>
                        <Point1>HeadLeft</Point1>
                        <Point2>HeadTop</Point2>
                        <Point3>HeadRight</Point3>
                        <Point4>HeadDown</Point4>
                </Outline4Points>
        </HeadOutline>
        <LeftEyeOutline>
                <Outline4Points>
                        <Point1>LeyeLeft</Point1>
                        <Point2>LeyeTop</Point2>
```

(continued)

```
                                <Point3>LeyeRight</Point3>
                                <Point4>LeyeDown</Point4>
                        </Outline4Points>
                </LeftEyeOutline>
                <RightEyeOutline>
                        <Outline4Points>
                                <Point1>ReyeLeft</Point1>
                                <Point2>ReyeTop</Point2>
                                <Point3>ReyeRight</Point3>
                                <Point4>ReyeDown</Point4>
                        </Outline4Points>
                </RightEyeOutline>
                <MouthLipOutline>
                        <Outline4Points>
                                <Point1>LipsLeft</Point1>
                                <Point2>LipsTop</Point2>
                                <Point3>LipsRight</Point3>
                                <Point4>LipsDown</Point4>
                        </Outline4Points>
                </MouthLipOutline>
                <NoseOutline>
                        <Outline4Points>
                                <Point1>NoseLeft</Point1>
                                <Point2>NoseTop</Point2>
                                <Point3>NoseRight</Point3>
                                <Point4>NoseDown</Point4>
                        </Outline4Points>
                </NoseOutline>
        </ControlFaceFeatures>
```

[Table 76]

| Name of Placeholder | | User defined features | |
|---|---|---|---|
| HeadOutline | Point1 | Head | HeadLeft |
| | Point2 | | HeadTop |
| | Point3 | | HeadRight |
| | Point4 | | HeadDown |
| LeftEyeOutline | Point1 | Leye | LeyeLeft |
| | Point2 | | LeyeTop |
| | Point3 | | LeyeRight |
| | Point4 | | LeyeDown |
| RightEyeOutline | Point1 | Reye | ReyeLeft |
| | Point2 | | ReyeTop |
| | Point3 | | ReyeRight |
| | Point4 | | ReyeDown |

(continued)

| Name of Placeholder | | User defined features | |
|---|---|---|---|
| MouseLipOutline | Point1 | Lips | LipsLeft |
| | Point2 | | LipsTop |
| | Point3 | | LipsRight |
| | Point4 | | LipsDown |
| NoseOutline | Point1 | Nose | NoseLeft |
| | Point2 | | NoseTop |
| | Point3 | | NoseRight |
| | Point4 | | NoseDown |

4 Virtual object metadata

4.1 Type of Virtual Object metadata

Virtual object metadata as a (visual) representation of virtual objects inside the environment serves the following purposes:

- characterize various kinds of objects within the VE,
- provide an interaction between virtual object and avatar
- provide an interaction with the VE ...

The "virtual object" element may include the following type of data in addition to the common associated type of virtual world object characteristics:

- **VO Appearance:** contains the high level description of the appearance and may refer a media containing the exact geometry, texture and haptic properties,
- **VO Animation:** contains the description of a set of animation sequences that the object is able to perform and may refer to several medias containing the exact (geometric transformations and deformations) animation parameters.

4.2 XSD

4.2.1 VirtualObjectType

4.2.1.1 Syntax

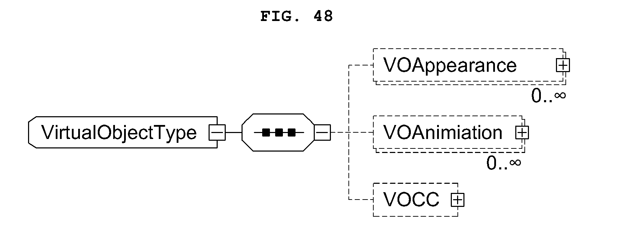

FIG. 48 illustrates a structure of a VirtualObjectType according to an embodiment. Table 77 shows a syntax of the VirtualObjectType.

[Table 77]

| | |
|---|---|
| Children | <VOAppearance>, <VOAnimation>, <VOCC> |
| Attributes | - |
| Source | <xsd:complexType name="VirtualObjectType"><br>        <xsd:sequence><br>                        <xsd:element name="VOAppearance" type="VOAppearanceType" minOccurs="0" maxOccurs="unbounded"/><br>                        <xsd:element name="VOAnimation" type="VOAnimationType" minOccurs="0" maxOccurs="unbounded"/><br>                        <xsd:element name="VOCC" |

(continued)

| | type="CommonCharacteristicsType" minOccurs="0"/&gt;<br>&lt;/xsd:sequence&gt;<br>&lt;/xsd:complexType&gt; |
|---|---|

4.2.1.2 Semantics

Table 78 shows semantics of the VirtualObjectType.

[Table 78]

| Name | Definition |
|---|---|
| VOAppearance | This element contains a set of metadata describing the visual and tactile elements of the object. |
| VOAnimation | This element contains a set of metadata describing pre-recorded animations associated with the object. |
| VOCC | This element contains a set of descriptors about the common characteristics defined in the common characteristics of the virtual world object. |

4.2.2 VOAppearanceType

4.2.2.1 Syntax

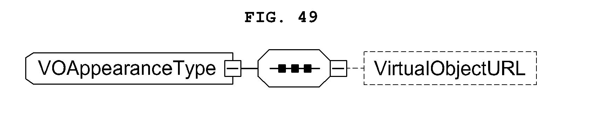

FIG. 49 illustrates a structure of a VOAppearanceType according to an embodiment. Table 79 shows a syntax of the VOAppearanceType.

[Table 79]

| Children | &lt;VirtualObjectURL&gt; |
|---|---|
| Source | &lt;xsd:complexType name="VOAppearanceType"&gt;<br>&lt;xsd:sequence&gt;<br>&lt;xsd:element name="VirtualObjectURL" type="xsd:anyURI" minOccurs="0"/&gt;<br>&lt;/xsd:sequence&gt;<br>&lt;/xsd:complexType&gt; |

4.2.2.2 Semantics

Table 80 shows semantics of the VOAppearanceType.

【Table 80】

| Name | Definition | |
|---|---|---|
| VirtualObjectURL | Element that contains, if exist, one or more link(s) to Appearance (s) file(s). | |
| | anyURI | Contains link to the appearance file. |

4.2.2.3 Examples

Table 81 shows the resource of a virtual object appearance with the following semantics. The VirtualObjectURL provides location information where the virtual object model is saved. The example shows when VirtualObjectURL value is http://3DmodelDb.com/object_0001.3ds.

[Table 81]

```
<VOAppearance>
        <Virtual Object URL>http://3Dmodel Db.com/object_0001.3ds</Virtual Object URL>
</VOAppearance>
```

4.2.3 VOAnimationType

4.2.3.1 Syntax

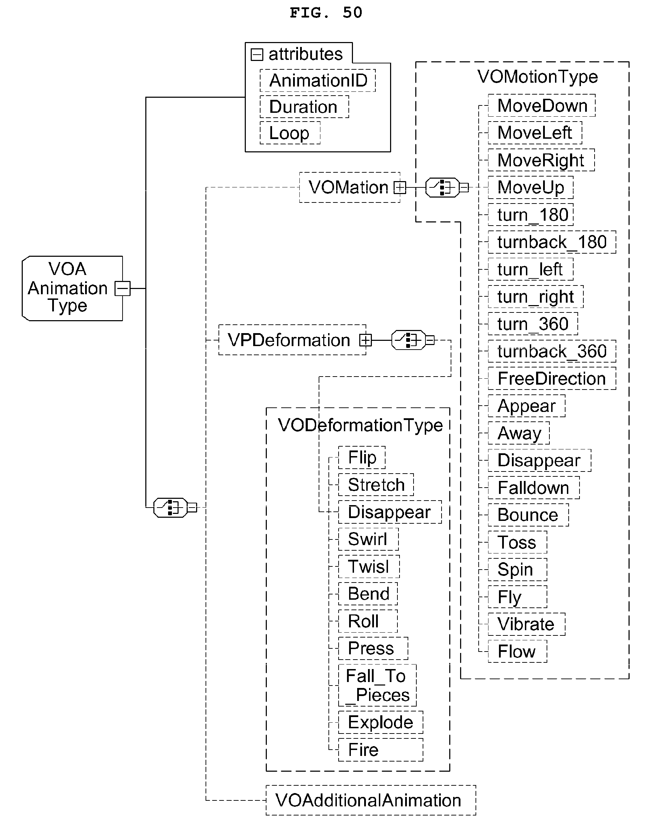

FIG. 50 illustrates a structure of a VOAnimationType according to an embodiment. Table 82 shows a syntax of the VOAnimationType.

[Table 82]

| Children | <VOMotion>,<VODeformation>,<VOAdditionalAnimation> |
|---|---|
| Attributes | AnimationID, Duration, Loop |
| source | <xsd:complexType name="VOAnimationType"><br>    <xsd:choice><br>        <xsd:element name="VOMotion" type="VOMotionType" minOccurs="0"/><br>        <xsd:element name="VODeformation" type="VODeformationType" minOccurs="0"/><br>        <xsd:element name="VOAdditionalAnimation" type="xsd:anyURI" minOccurs="0"/><br>    </xsd:choice><br>    <xsd:attribute name="AnimationID" type="xsd:anyURI" use="optional"/><br>    <xsd:attribute name="Duration" |
| | type="xsd:unsignedInt" use="optional"/><br>    <xsd:attribute name="Loop" type="xsd: unsignedInt" use="optional"/><br></xsd:complexType><br><xsd:complexType name="VOMotionType"><br>    <xsd:choice><br>        <xsd:element name="MoveDown" type="xsd:anyURI" minOccurs="0"/><br>        <xsd:element name="MoveLeft" type="xsd:anyURI" minOccurs="0"/><br>        <xsd:element name="MoveRight" type="xsd:anyURI" minOccurs="0"/><br>        <xsd:element name="MoveUp type="xsd:anyURI" minOccurs="0"/><br>        <xsd:element name="turn_180" type="xsd:anyURI" minOccurs="0"/><br>        <xsd:element name="turnback_180" type="xsd:anyURI" minOccurs="0"/> |

(continued)

```
                                        <xsd:element name="turn_left"
type="xsd:anyURI" minOccurs="0"/>
                                        <xsd:element name="turn_right"
type="xsd:anyURI" minOccurs="0"/>
                                        <xsd:element name="turn_360"
type="xsd:anyURI" minOccurs="0"/>
                                        <xsd:element name="turnback_360"
type="xsd:anyURI" minOccurs="0"/>
                                        <xsd:element name="FreeDirection"
type="xsd:anyURI" minOccurs="0"/>
                                        <xsd:element name="Appear"
type="xsd:anyURI" minOccurs="0"/>
                                        <xsd:element name="Away"
type="xsd:anyURI" minOccurs="0"/>
                                        <xsd:element name="Disappear"
type="xsd:anyURI" minOccurs="0"/>
                                        <xsd:element name="Falldown"
type="xsd:anyURI" minOccurs="0"/>
                                        <xsd:element name="Bounce"
type="xsd:anyURI" minOccurs="0"/>
                                        <xsd:element name="Toss"
type="xsd:anyURI" minOccurs="0"/>
                                        <xsd:element name="Spin"
type="xsd:anyURI" minOccurs="0"/>
                                        <xsd:element name="Fly"
type="xsd:anyURI" minOccurs="0"/>
                                        <xsd:element name="Vibrate"
type="xsd:anyURI" minOccurs="0"/>
                                        <xsd:element name="Flow"
type="xsd:anyURI" minOccurs="0"/>
</xsd:choice>
</xsd:complexType>
<xsd:complexType name="VODeformationType">
                <xsd:choice>
                                        <xsd:element name="Flip"
type="xsd:anyURI" minOccurs="0"/>
                                        <xsd:element name="Stretch"
type="xsd:anyURI" minOccurs="O"/>
                                        <xsd:element name="Swirl"
type="xsd:anyURI" minOccurs="0"/>
                                        <xsd:element name="Twist"
type="xsd:anyURI" minOccurs="0"/>
                                        <xsd:element name="Bend"
type="xsd:anyURI" minOccurs="0"/>
                                        <xsd:element name="Roll"
type="xsd:anyURI" minOccurs="0"/>
                                        <xsd:element name="Press"
type="xsd:anyURI" minOccurs="0"/>
                                <xsd:element name="Fall_To_Pieces"
type="xsd:anyURI" minOccurs="0"/>
```

(continued)

| | |
|---|---|
| | &lt;xsd:element name="Explode" type="xsd:anyURI" minOccurs="0"/&gt;<br>    &lt;xsd:element name="Fire" type="xsd:anyURI" minOccurs="0"/&gt;<br>&lt;/xsd:choice&gt;<br>&lt;/xsd:complexType&gt; |

4.2.3.2 Semantics

Table 83 shows semantics of the VOAnimationType.

【Table 83】

| Name | Definition | | |
|---|---|---|---|
| Motion | Set of animations defined as rigid motion: | | |
| | Element | Information | Type |
| | MoveDown | move down | anyURI |
| | MoveLeft | move left | anyURI |
| | MoveRight | move right | anyURI |
| | MoveUp | move up | anyURI |
| | turn_180 | make a turn for 180° | anyURI |
| | turnback_180 | make a turn back for 180° | anyURI |
| | turnleft | turn left | anyURI |
| | turnright | turn right | anyURI |
| | turn_360 | make a turn for 360° | anyURI |
| | turnback_360 | make a turn back for 360° | anyURI |

|  | FreeDirection | Move to an arbitrary direction | anyURI |
|---|---|---|---|
|  | Appear | appear from somewhere | anyURI |
|  | Away | go away | anyURI |
|  | Disappear | disappear somewhere | anyURI |
|  | Falldown | falling down | anyURI |
|  | Bounce | Bounce | anyURI |
|  | Toss | Toss | anyURI |
|  | Spin | Spin | anyURI |
|  | Fly | Fly | anyURI |
|  | Vibrate | Vibrate | anyURI |
|  | Flow | Flow | anyURI |
| Deformation | Set of animations for deformation actions.<br><br>Containing elements:<br><br>| Element | Information | Type |<br>|---|---|---|<br>| Flip | Flip | anyURI |<br>| Stretch | Stretch | anyURI |<br>| Swirl | Swirl | anyURI |<br>| Twist | Twist | anyURI |<br>| Bend | Bend | anyURI |<br>| Roll | Roll | anyURI |<br>| Press | Press | anyURI | |  |  |

| | Fall_To_Pieces | Falling to pieces | anyURI |
|---|---|---|---|
| | Explode | Exploding | anyURI |
| | Fire | firing | anyURI |
| VOAdditionalAnimation | Element that contains, if exist, one or more link(s) to animation(s) file(s). | | |
| | anyURI | Contains link to animation file, usually MP4 file. Can occur zero, once or more times. | |
| AnimationID | A unique identifier of the animation. It is required. | | |
| Duration | The length of time that the animation lasts. | | |
| Loop | This is a playing option. (default value: 1, 0:repeated, 1:once, 2: twice, …, n: n times) It is optional. | | |

4.2.3.3 Examples

Table 84 shows the description of object animation information with the following semantics. Among all animations, motion type animation of turning 360° is given. The animation resource is saved at "http://vo Animationdb.com/turn_360.bvh" and the value of AnimationID, its identifier is "3." The intensity shall be played once with duration of 30.

[Table 84]

```
<VOAnimation AnimationID="3" Duration="30" Loop="1">
        <VOMotion>
                                <turn_360>

        <url>http://voAnimationdb.com/turn_360.bvh</url>
                                </turn_360>
        </VOMotion>
</VOAnimation>
```

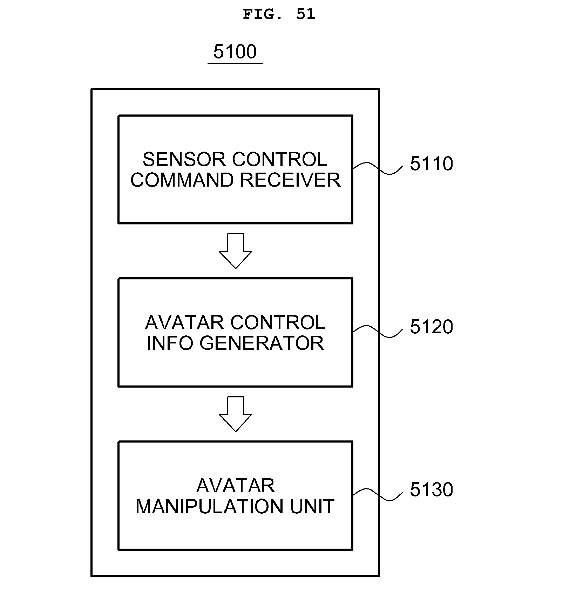

FIG. 51 illustrates a configuration of an avatar characteristic controlling system 5100 according to an embodiment. The avatar characteristic controlling system 5100 may include a sensor control command receiver 5110 and an avatar control information generator 5120.

The sensor control command receiver 5110 may receive a sensor control command representing a user intent via a sensor-based input device. The sensor-based input device may correspond to the sensor-based input device 101 of FIG. 1. For example, a motion sensor, a camera, a depth camera, a 3D mouse, and the like may be used for the sensor-based input device. The sensor control command may be generated by sensing facial expressions and body motions of users of the real world.

The avatar control information generator 5120 may generate avatar control information based on avatar information of the virtual world and the sensor control command. The avatar control information may include information used to map characteristics of the users onto the avatar of the virtual world according to the sensed facial expressions and body expressions.

The avatar information may include common characteristics of a virtual world object. The common characteristics may include, as metadata, at least one element of an Identification for identifying the virtual world object, a VWOSound, a VWOScent, a VWOControl, a VWOEvent, a VWOBehaviorModel, and VWOHapticProperties.

The Identification may include, as an element, at least one of a UserID for identifying a user associated with the virtual world object, an Ownership of the virtual world object, Rights, and Credits, and may include, as an attribute, at least one of a name of the virtual world object and a family with another virtual world object.

The VWOSound may include, as an element, a sound resource URL including at least one link to a sound file, and may include, as an attribute, at least one of a SoundID that is a unique identifier of an object sound, an intensity indicating a sound strength, a duration indicating a length of time where the sound lasts, a loop indicating a playing option, and a sound name.

The VWOScent may include, as an element, a scent resource URL including at least one link to a scent file, and may include, as an attribute, at least one of a ScentID that is a unique identifier of an object scent, an intensity indicating a scent strength, a duration indicating a length of time where the scent lasts, a loop indicating a playing option, and a scent name.

The VWOControl may include, as an element, a MotionFeatureControl that is a set of elements controlling a position, an orientation, and a scale of the virtual world object, and may include, as an attribute, a ControlID that is a unique identifier of control. In this instance, the MotionFeatureControl may include, as an element, at least one of a position of an object in a scene with a 3D floating point vector, an orientation of the object in a scene with the 3D floating point vector as an Euler angle, and a scale of the object in a scene expressed as the 3D floating point vector.

The VWOEvent may include, as an element, at least one of a Mouse that is a set of mouse event elements, a Keyboard that is a set of keyboard event elements, and a UserDefinedInput, and may include, as an attribute, an EventID that is a unique identifier of an event. The Mouse may include, as an element, at least one of a click, Double_Click, a LeftBttn_down that is an event taking place at the moment of holding down a left button of a mouse, a LeftBttn_up that is an event taking place at the moment of releasing the left button of the mouse, a RightBttn_down that is an event taking place at the moment of pushing a right button of the mouse, a RightBttn_up that is an event taking place at the moment of releasing the right button of the mouse, and a move that is an event taking place while changing a position of the mouse. Also, the Keyboard may include, as an element, at least one of a Key_Down that is an event taking place at the moment of holding down a keyboard button and a Key_Up that is an event taking place at the moment of releasing the keyboard button.

The VWOBehaviorModel may include, as an element, at least one of a BehaviorInput that is an input event for generating an object behavior and a BehaviorOutput that is an object behavior output according to the input event. In this instance, the BehaviorInput may include an EventID as an attribute, and the BehaviorOutput may include, as an attribute, at least one of a SoundID, a ScentID, and an AnimationID.

The VWOHapticProperties may include, as an attribute, at least one of a MaterialProperty that contains parameters characterizing haptic properties, a DynamicForceEffect that contains parameters characterizing force effects, and a TactileProperty that contains parameters characterizing tactile properties. In this instance, the MaterialProperty may include, as an attribute, at least one of a Stiffness of the virtual world object, a StaticFriction of the virtual world object, a DynamicFriction of the virtual world object, a Damping of the virtual world object, a Texture containing a link to a haptic texture file, and a mass of the virtual world object. Also, the DynamicForceEffect may include, as an attribute, at least one of a ForceField containing a link to a force field vector file and a MovementTrajectory containing a link to a force trajectory file. Also, the TactileProperty may include, as an attribute, at least one of a Temperature of the virtual world object, a Vibration of the virtual world object, a Current of the virtual world object, and TactilePatterns containing a link to a tactile pattern file.

The object information may include avatar information associated with an avatar of a virtual world, and

The avatar information may include, as the metadata, at least one element of an AvatarAppearance, an AvatarAnimation, AvatarCommunicationSkills, an AvatarPersonality, AvatarControlFeatures, and AvatarCC, and may include, as an attribute, a Gender of the avatar.

The AvatarAppearance may include, as an element, at least one of a Body, a Head, Eyes, Ears, a Nose, a mouth lip (MouthLip), a Skin, a facial, a Nail, a BodyLook, a Hair, EyeBrows, a FacialHair, FacialCalibrationPoints, a PhysicalCondition, Clothes, Shoes, Accessories, and an AppearanceResource.

The AvatarAnimation may include at least one element of an Idle, a Greeting, a Dance, a Walk, a Moves, a Fighting, a Hearing, a Smoke, Congratulations, Common_Actions, Specific_Actions, a Facial_Expression, a Body_Expression, and an AnimationResource.

The AvatarCommunicationSkills may include, as an element, at least one of an InputVerbalCommunication, an InputNonVerbalCommunication, an OutputVerbalCommunication, and an OutputNonVerbalCommunication, and may include, as an attribute, at least one of a Name and a DefaultLanguage. In this instance, a verbal communication including the InputVerbalCommunication and OutputVerbalCommunication may include a language as the element, and may include, as the attribute, at least one of a voice, a text, and the language. The language may include, as an attribute, at least one of a name that is a character string indicating a name of the language and a preference for using the language in the verbal communication. Also, a communication preference including the preference may include a preference level of a communication of the avatar. The language may be set with a CommunicationPreferenceLevel including a preference level for each language that the avatar is able to speak or understand. Also, a nonverbal communication including the InputNonVerbalCommunication and the OutputNonVerbalCommunication may include, as an element, at least one of a SignLanguage and a CuedSpeechCommumication, and may include, as an attribute, a ComplementaryGesture. In this instance, the SignLanguage may include a name of a language as an attribute.

The AvatarPersonality may include, as an element, at least one of an openness, a conscientiousness, an extraversion, an agreeableness, and a neuroticism, and may selectively include a name of a personality.

The AvatarControlFeatures may include, as elements, ControlBodyFeatures that is a set of elements controlling moves of a body and ControlFaceFeatures that is a set of elements controlling moves of a face, and may selectively include a name of a control configuration as an attribute.

The ControlBodyFeatures may include, as an element, at least one of headBones, UpperBodyBones, DownBodyBones, and MiddleBodyBones. In this instance, the ControlFaceFeatures may include, as an element, at least one of a HeadOutline, a LeftEyeOutline, a RightEyeOutline, a LeftEyeBrowOutline, a RightEyeBrowOutline, a LeftEarOutline, a RightEarOutline, a NoseOutline, a MouthLipOutline, FacePoints, and MiscellaneousPoints, and may selectively include, as an attribute, a name of a face control configuration. In this instance, at least one of elements included in the ControlFaceFeatures may include, as an element, at least one of an Outline4Points having four points, an Outline5Points having five points, and an Outline8Points having eight points, and an Outline14Points having fourteen points. Also, at least one of elements included in the ControlFaceFeatures may include a basic number of points and may selectively further include an additional point.

The object information may include information associated with a virtual object. Information associated with the virtual object may include, as metadata for expressing a virtual object of the virtual environment, at least one element of a VOAppearance, a virtual VOAnimation, and VOCC.

When at least one link to an appearance file exists, the VOAppearance may include, as an element, a VirtualObjectURL that is an element including the at least one link.

The VOAnimation c may include, as an element, at least one of a VOMotion, a VODeformation, and a VOAdditionalAnimation, and may include, as an attribute, at least one of an AnimationID, a Duration that is a length of time where an animation lasts, and a Loop that is a playing option.

The above avatar information may refer to descriptions made above with reference to FIGS. 9 through 50. The avatar information is repeatedly described and thus further descriptions are omitted here. Metadata structures for the avatar information may be recordable in a computer-readable storage medium.

The avatar control information generator 5120 may generate avatar control information that is used to control characteristics of the users to be mapped onto the avatar of the virtual world based on the avatar information and the sensor control command. The sensor control command may be generated by sensing facial expressions and body motions of the users of the real world. The avatar characteristic controlling system 5100 may directly manipulate the avatar based on the avatar control information, or may transmit the avatar control information to a separate system of manipulating the avatar. When the avatar characteristic controlling system 5100 directly manipulates the avatar, the avatar characteristic controlling system 5100 may further include an avatar manipulation unit 5130.

The avatar manipulation unit 5130 may manipulate the avatar of the virtual world based on the avatar control information. As described above, the avatar control information may be used to control characteristics of the users to be mapped onto the avatar of the virtual world. Therefore, the avatar manipulation unit 5130 may manipulate the user intent of the real world to be adapted to the avatar of the virtual world based on the avatar control information.

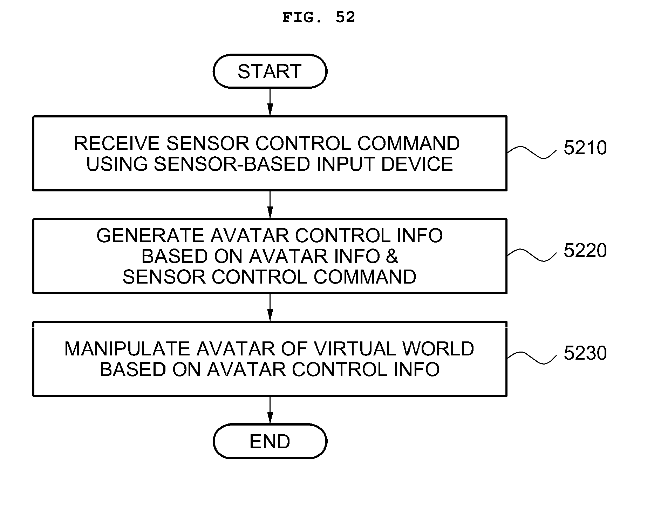

FIG. 52 illustrates a method of controlling characteristics of an avatar according to an embodiment. The avatar characteristic controlling method may be performed by the avatar characteristic controlling system 5100 of FIG. 51. Hereinafter, the avatar characteristic controlling method will be described with reference to FIG. 52.

In operation 5210, the avatar characteristic controlling system 5100 may receive a sensor user command representing the user intent through a sensor-based input device. The sensor-based input device may correspond to the sensor-based input device 101 of FIG. 1. For example, a motion sensor, a camera, a depth camera, a 3D mouse, and the like may be used for the sensor-based input device. The sensor control command may be generated by sensing facial expressions and body motions of users of the real world.

In operation 5220, the avatar characteristic controlling system 5100 may generate avatar control information based on the avatar of the virtual world information and the sensor control information. The avatar control information may include information that is used to map characteristics of the users to be mapped to the avatar of the virtual world according to the facial expressions and the body motions.

The avatar information may include common characteristics of a virtual world object. The common characteristics may include, as metadata, at least one element of an Identification for identifying the virtual world object, a VWOSound, a VWOScent, a VWOControl, a VWOEvent, a VWOBehaviorModel, and VWOHapticProperties.

The Identification may include, as an element, at least one of a UserID for identifying a user associated with the virtual world object, an Ownership of the virtual world object, Rights, and Credits, and may include, as an attribute, at least one of a name of the virtual world object and a family with another virtual world object.

The VWOSound may include, as an element, a sound resource URL including at least one link to a sound file, and may include, as an attribute, at least one of a SoundID that is a unique identifier of an object sound, an intensity indicating a sound strength, a duration indicating a length of time where the sound lasts, a loop indicating a playing option, and a sound name.

The VWOScent may include, as an element, a scent resource URL including at least one link to a scent file, and may include, as an attribute, at least one of a ScentID that is a unique identifier of an object scent, an intensity indicating a scent strength, a duration indicating a length of time where the scent lasts, a loop indicating a playing option, and a scent name.

The VWOControl may include, as an element, a MotionFeatureControl that is a set of elements controlling a position, an orientation, and a scale of the virtual world object, and may include, as an attribute, a ControlID that is a unique identifier of control. In this instance, the MotionFeatureControl may include, as an element, at least one of a position of an object in a scene with a 3D floating point vector, an orientation of the object in a scene with the 3D floating point vector as an Euler angle, and a scale of the object in a scene expressed as the 3D floating point vector.

The VWOEvent may include, as an element, at least one of a Mouse that is a set of mouse event elements, a Keyboard that is a set of keyboard event elements, and a UserDefinedInput, and may include, as an attribute, an EventID that is a unique identifier of an event. The Mouse may include, as an element, at least one of a click, Double_Click, a LeftBttn_down that is an event taking place at the moment of holding down a left button of a mouse, a LeftBttn_up that is an event taking place at the moment of releasing the left button of the mouse, a RightBttn_down that is an event taking place at the moment of pushing a right button of the mouse, a RightBttn_up that is an event taking place at the moment of releasing the right button of the mouse, and a move that is an event taking place while changing a position of the mouse. Also, the Keyboard may include, as an element, at least one of a Key_Down that is an event taking place at the moment of holding down a keyboard button and a Key_Up that is an event taking place at the moment of releasing the keyboard button.

The VWOBehaviorModel may include, as an element, at least one of a BehaviorInput that is an input event for generating an object behavior and a BehaviorOutput that is an object behavior output according to the input event. In this instance, the BehaviorInput may include an EventID as an attribute, and the BehaviorOutput may include, as an attribute, at least one of a SoundID, a ScentID, and an AnimationID.

The VWOHapticProperties may include, as an attribute, at least one of a MaterialProperty that contains parameters characterizing haptic properties, a DynamicForceEffect that contains parameters characterizing force effects, and a TactileProperty that contains parameters characterizing tactile properties. In this instance, the MaterialProperty may include, as an attribute, at least one of a Stiffness of the virtual world object, a StaticFriction of the virtual world object, a DynamicFriction of the virtual world object, a Damping of the virtual world object, a Texture containing a link to a haptic texture file, and a mass of the virtual world object. Also, the DynamicForceEffect may include, as an attribute, at least one of a ForceField containing a link to a force field vector file and a MovementTrajectory containing a link to a force trajectory file. Also, the TactileProperty may include, as an attribute, at least one of a Temperature of the virtual world object, a Vibration of the virtual world object, a Current of the virtual world object, and TactilePatterns containing a link to a tactile pattern file.

The object information may include avatar information associated with an avatar of a virtual world, and

The avatar information may include, as the metadata, at least one element of an AvatarAppearance, an AvatarAnimation, AvatarCommunicationSkills, an AvatarPersonality, AvatarControlFeatures, and AvatarCC.

The AvatarAppearance may include, as an element, at least one of a Body, a Head, Eyes, Ears, a Nose, a mouth lip (MouthLip), a Skin, a facial, a Nail, a BodyLook, a Hair, EyeBrows, a FacialHair, FacialCalibrationPoints, a PhysicalCondition, Clothes, Shoes, Accessories, and an AppearanceResource.

The AvatarAnimation may include at least one element of an Idle, a Greeting, a Dance, a Walk, a Moves, a Fighting, a Hearing, a Smoke, Congratulations, Common_Actions, Specific_Actions, a Facial_Expression, a Body_Expression, and an AnimationResource.

The AvatarCommunicationSkills may include, as an element, at least one of an InputVerbalCommunication, an InputNonVerbalCommunication, an OutputVerbalCommunication, and an OutputNonVerbalCommunication, and may include, as an attribute, at least one of a Name and a DefaultLanguage. In this instance, a verbal communication including the InputVerbalCommunication and OutputVerbalCommunication may include a language as the element, and may include, as the attribute, at least one of a voice, a text, and the language. The language may include, as an attribute, at least one of a name that is a character string indicating a name of the language and a preference for using the language in the verbal communication. Also, a communication preference including the preference may include a preference level of a communication of the avatar. The language may be set with a CommunicationPreferenceLevel including a preference level for each language that the avatar is able to speak or understand. Also, a nonverbal communication including the InputNonVerbalCommunication and the OutputNonVerbalCommunication may include, as an element, at least one of a SignLanguage and a CuedSpeechCommumication, and may include, as an attribute, a ComplementaryGesture. In this instance, the SignLanguage may include a name of a language as an attribute.

The AvatarPersonality may include, as an element, at least one of an openness, a conscientiousness, an extraversion, an agreeableness, and a neuroticism, and may selectively include a name of a personality.

The AvatarControlFeatures may include, as elements, ControlBodyFeatures that is a set of elements controlling moves of a body and ControlFaceFeatures that is a set of elements controlling moves of a face, and may selectively include a name of a control configuration as an attribute.

The ControlBodyFeatures may include, as an element, at least one of headBones, UpperBodyBones, Down-BodyBones, and MiddleBodyBones. In this instance, the ControlFaceFeatures may include, as an element, at least one of a HeadOutline, a LeftEyeOutline, a RightEyeOutline, a LeftEyeBrowOutline, a RightEyeBrowOutline, a LeftEarOutline, a RightEarOutline, a NoseOutline, a MouthLipOutline, FacePoints, and MiscellaneousPoints, and may selectively include, as an attribute, a name of a face control configuration. In this instance, at least one of elements included in the Control-FaceFeatures may include, as an element, at least one of an Outline4Points having four points, an Outline5Points having five points, and an Outline8Points having eight points, and an Outline14Points having fourteen points. Also, at least one of elements included in the ControlFaceFeatures may include a basic number of points and may selectively further include an additional point.

The object information may include information associated with a virtual object. Information associated with the virtual object may include, as metadata for expressing a virtual object of the virtual environment, at least one element of a VOAppearance, a virtual VOAnimation, and VOCC.

When at least one link to an appearance file exists, the VOAppearance may include, as an element, a VirtualObjectURL that is an element including the at least one link.

The VOAnimation c may include, as an element, at least one of a VOMotion, a VODeformation, and a VOAdditionalAnimation, and may include, as an attribute, at least one of an AnimationID, a Duration that is a length of time where an animation lasts, and a Loop that is a playing option.

The above avatar information may refer to descriptions made above with reference to FIGS. 9 through 50. The avatar information is repeatedly described and thus further descriptions are omitted here. Metadata structures for the avatar information may be recordable in a computer-readable storage medium.

The avatar characteristic controlling system 5100 may generate avatar control information that is used to control characteristics of the users to be mapped onto the avatar of the virtual world based on the avatar information and the sensor control command. The sensor control command may be generated by sensing facial expressions and body motions of the users of the real world. The avatar characteristic controlling system 5100 may directly manipulate the avatar based on the avatar control information, or may transmit the avatar control information to a separate system of manipulating the avatar. When the avatar characteristic controlling system 5100 directly manipulates the avatar, the avatar characteristic controlling method may further include operation 5230.

In operation 5230, the avatar characteristic controlling system 5100 may manipulate the avatar of the virtual world based on the avatar control information. As described above, the avatar control information may be used to control characteristics of the users to be mapped onto the avatar of the virtual world. Therefore, the avatar characteristic controlling system 5100 may manipulate the user intent of the real world to be adapted to the avatar of the virtual world based on the avatar control information.

As described above, when employing an avatar characteristic controlling system or an avatar characteristic controlling method according to an embodiment, it is possible to effectively control characteristics of an avatar in a virtual world. In addition, it is possible to generate a random expression indefinable in an animation by setting feature points for sensing a user face in a real world, and by generating a face of the avatar in the virtual world based on data collected in association with the feature points.

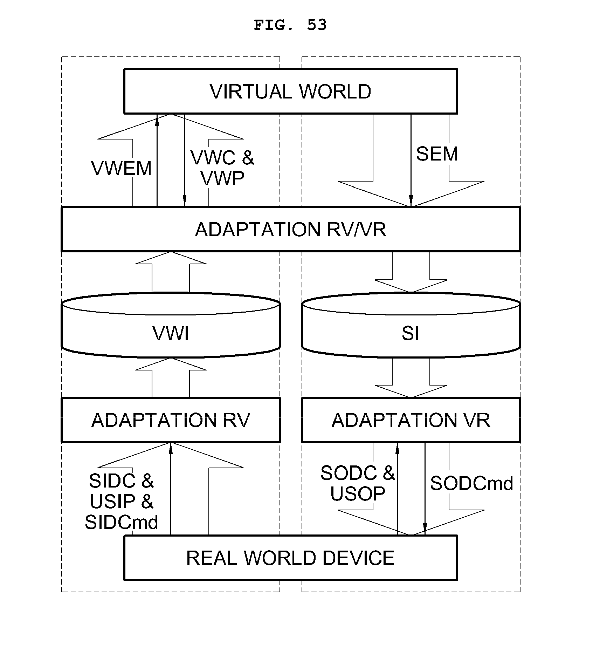

FIG. 53 illustrates a structure of a system of exchanging information and data between the virtual world and the real world according to an embodiment.

Referring to FIG. 53, when an intent of a user in the real world is input using a real world device (e.g., motion sensor), a sensor signal including control information (hereinafter, referred to as 'CI') associated with the user intent of the real world may be transmitted to a virtual world processing device.

The CI may be commands based on values input through the real world device or information relating to the commands. The CI may include sensory input device capabilities (SIDC), user sensory input preferences (USIP), and sensory input device commands (SDICmd).

An adaptation real world to virtual world (hereinafter, referred to as 'adaptation RV') may be implemented by a real world to virtual world engine (hereinafter, referred to as 'RV engine'). The adaptation RV may convert real world information input using the real world device to information to be applicable in the virtual world, using the CI about motion, status, intent, feature, and the like of the user of the real world included in the sensor signal. The above described adaptation process may affect virtual world information (hereinafter, referred to as 'VWI').

The VWI may be information associated with the virtual world. For example, the VWI may be information associated with elements constituting the virtual world, such as a virtual object or an avatar. A change with respect to the VWI may be performed in the RV engine through commands of a virtual world effect metadata (VWEM) type, a virtual world preference (VWP) type, and a virtual world capability type.

Table 85 describes configurations described in FIG. 53.

[Table 85]

| SIDC | Sensory input device capabilities | VWI | Virtual world information |
|---|---|---|---|
| USIP | User sensory input preferences | SODC | Sensory output device capabilities |
| SIDCmd | Sensory input device commands | USOP | User sensory output preferences |
| VWC | Virtual world capabilities | SODCmd | Sensory output device commands |
| VWP | Virtual world preferences | SEM | Sensory effect metadata |
| VWEM | Virtual world effect metadata | SI | Sensory information |

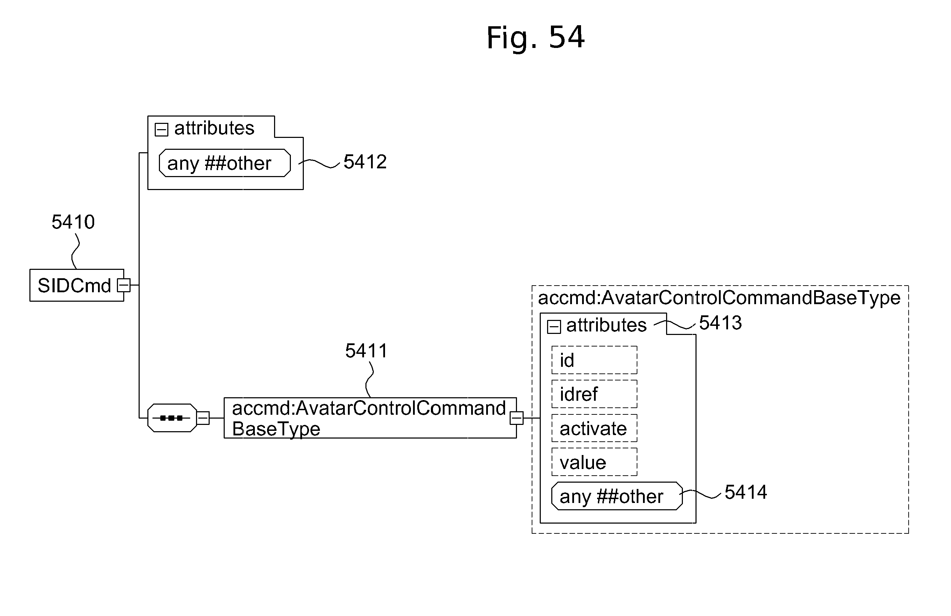

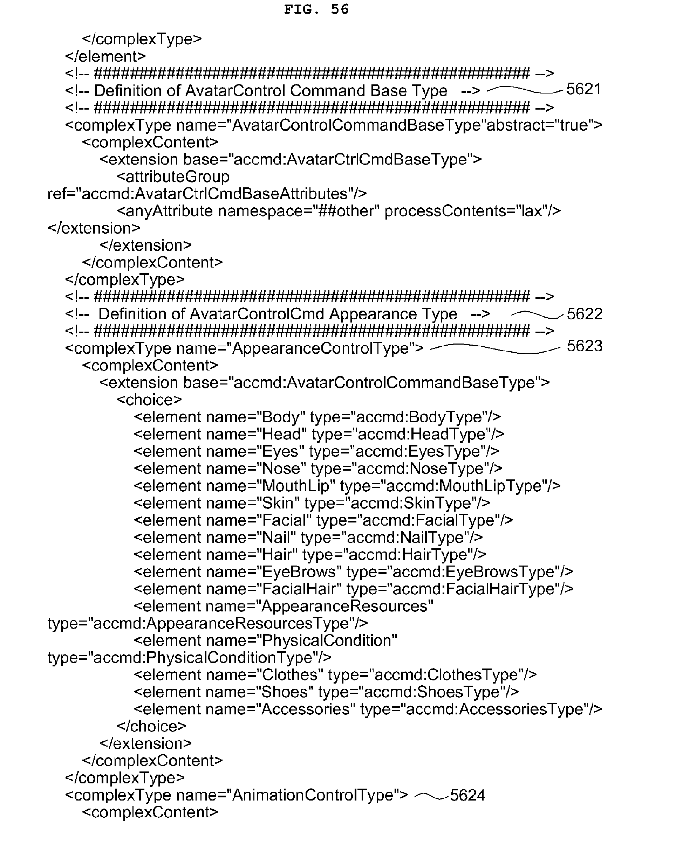

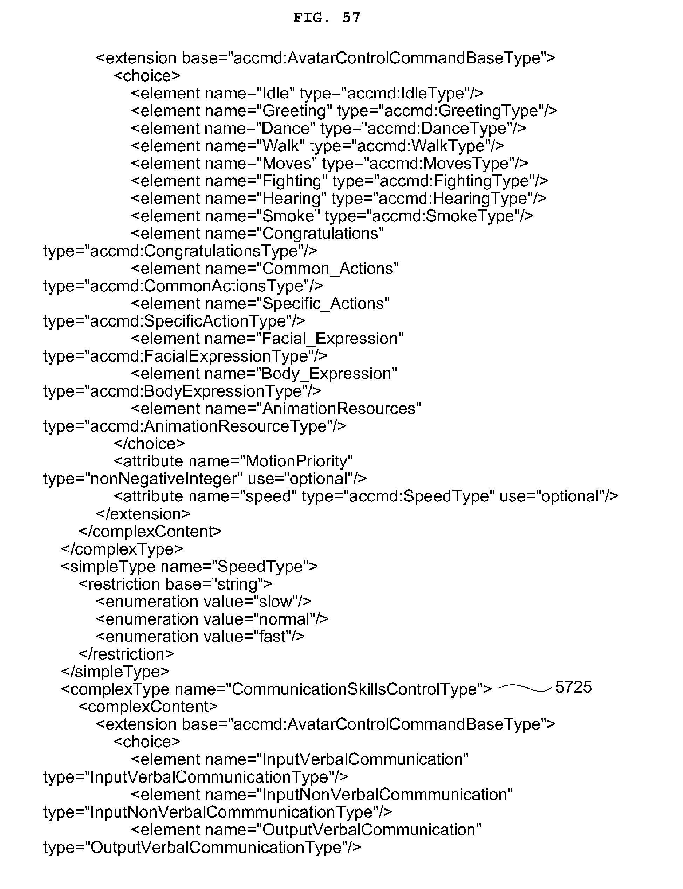

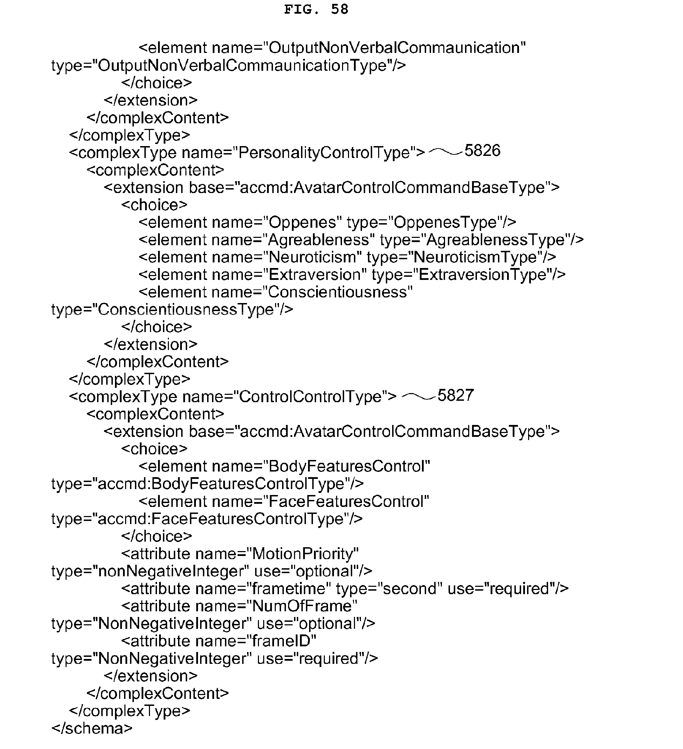

FIGS. 54 to 58 are diagrams illustrating avatar control commands 5410 according to an embodiment.

Referring to FIG. 54, the avatar control commands 5410 may include an avatar control command base type 5411 and any attributes 5412.

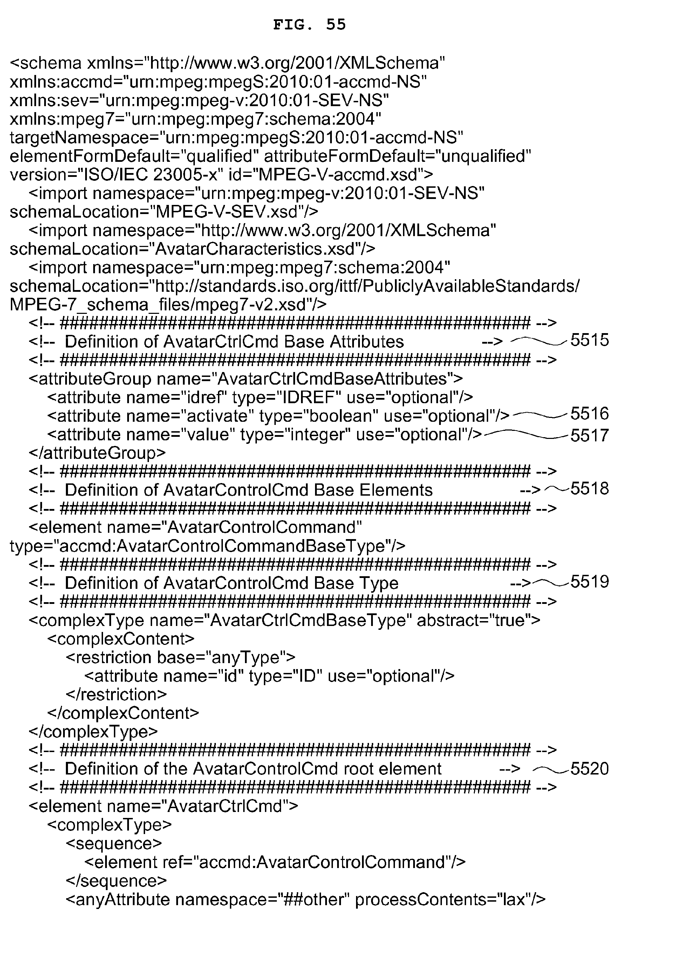

Also, referring to FIGS . 54 to 54, the avatar control commands are displayed using extensible Markup Language (XML). However, a program source displayed in FIGS. 55 to 58 may be merely an example, and the present embodiment is not limited thereto.

A section 5518 may signify a definition of a base element of the avatar control commands 5410. The avatar control commands 5410 may semantically signify commands for controlling an avatar.

A section 5520 may signify a definition of a root element of the avatar control commands 5410. The avatar control commands 5410 may indicate a function of the root element for metadata.

Sections 5519 and 5521 may signify a definition of the avatar control command base type 5411. The avatar control command base type 5411 may extend an avatar control command base type (AvatarCtrlCmdBasetype), and provide a base abstract type for a subset of types defined as part of the avatar control commands metadata types.

The any attributes 5412 may be an additional avatar control command.

According to an embodiment, the avatar control command base type 5411 may include avatar control command base attributes 5413 and any attributes 5414.

A section 5515 may signify a definition of the avatar control command base attributes 5413. The avatar control command base attributes 5413 may be instructions to display a group of attribute for the commands.

The avatar control command base attributes 5413 may include 'id', 'idref', 'activate', and 'value'.

'id' may be identifier (ID) information for identifying individual identities of the avatar control command base type 5411.

'idref' may refer to elements that have an instantiated attribute of type id. 'idref' may be additional information with respect to 'id' for identifying the individual identities of the avatar control command base type 5411.

'activate' may signify whether an effect shall be activated. 'true' may indicate that the effect is activated, and 'false' may indicate that the effect is not activated. As for a section 5416, 'activate' may have data of a "boolean" type, and may be optionally used.

'value' may describe an intensity of the effect in percentage according to a max scale defined within a semantic definition of individual effects. As for a section 5417, 'value' may have data of "integer" type, and may be optionally used.

The any attributes 5414 may be instructions to provide an extension mechanism for including attributes from another namespace being different from target namespace. The included attributes may be XML streaming commands defined in ISO/IEC 21000-7 for the purpose of identifying process units and associating time information of the process units. For example, 'si:pts' may indicate a point in which the associated information is used in an application for processing.

A section 5622 may indicate a definition of an avatar control command appearance type.

According to an embodiment, the avatar control command appearance type may include an appearance control type, an animation control type, a communication skill control type, a personality control type, and a control control type.

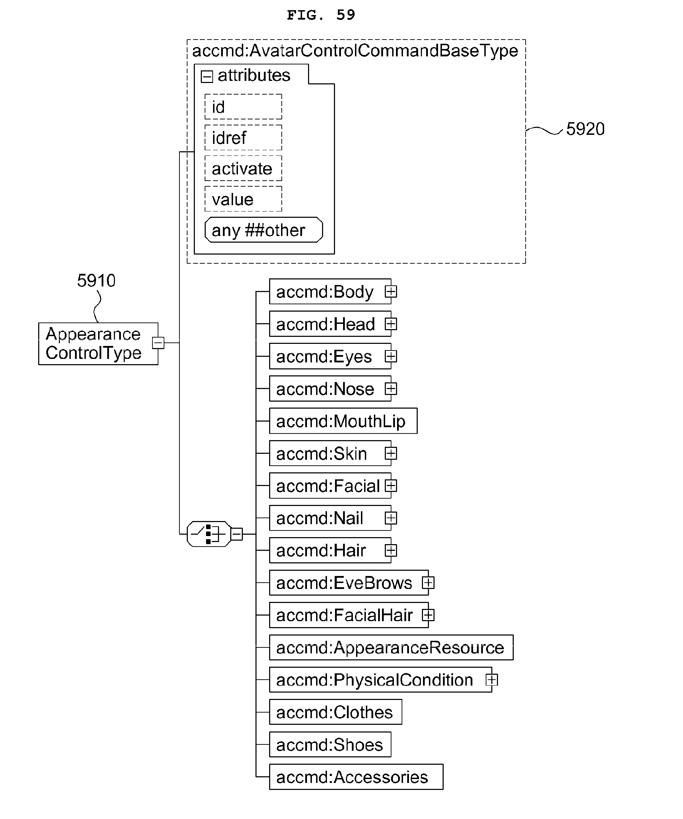

A section 5623 may indicate an element of the appearance control type. The appearance control type may be a tool for expressing appearance control commands. Hereinafter, a structure of the appearance control type will be described in detail with reference to FIG. 59.

FIG. 59 illustrates a structure of an appearance control type 5910 according to an embodiment.

Referring to FIG. 59, the appearance control type 5910 may include an avatar control command base type 5920 and elements. The avatar control command base type 5920 was described in detail in the above, and thus descriptions thereof will be omitted.

According to an embodiment, the elements of the appearance control type 5910 may include body, head, eyes, nose, lip, skin, face, nail, hair, eyebrows, facial hair, appearance resources, physical condition, clothes, shoes, and accessories.

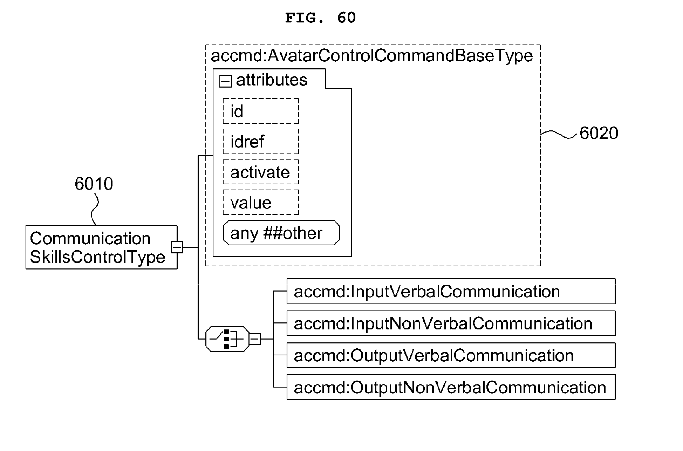

Referring again to FIGS. 54 to 58, a section 5725 may indicate an element of the communication skill control type. The communication skill control type may be a tool for expressing animation control commands. Hereinafter, a structure of the communication skill control type will be described in detail with reference to FIG. 60.

FIG. 60 illustrates a structure of a communication skill control type 6010 according to an embodiment.

Referring to FIG. 60, the communication skill control type 6010 may include an avatar control command base type 6020 and elements.

According to an embodiment, the elements of the communication skill control type 6010 may include input verbal communication, input nonverbal communication, output verbal communication, and output nonverbal communication.

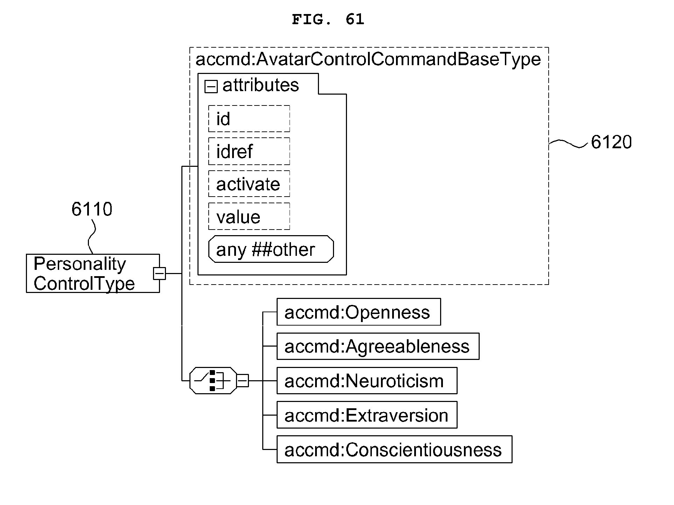

Referring again to FIGS. 54 to 58, a section 5826 may indicate an element of the personality control type. The personality control type may be a tool for expressing animation control commands. Hereinafter, a structure of the personality control type will be described in detail with reference to FIG. 61.

FIG. 61 illustrates a structure of a personality control type 6110 according to an embodiment.

Referring to FIG. 61, the personality control type 6110 may include an avatar control command base type 6120 and elements.

According to an embodiment, the elements of the personality control type 610 may include openness, agreeableness, neuroticism, extraversion, and conscientiousness.

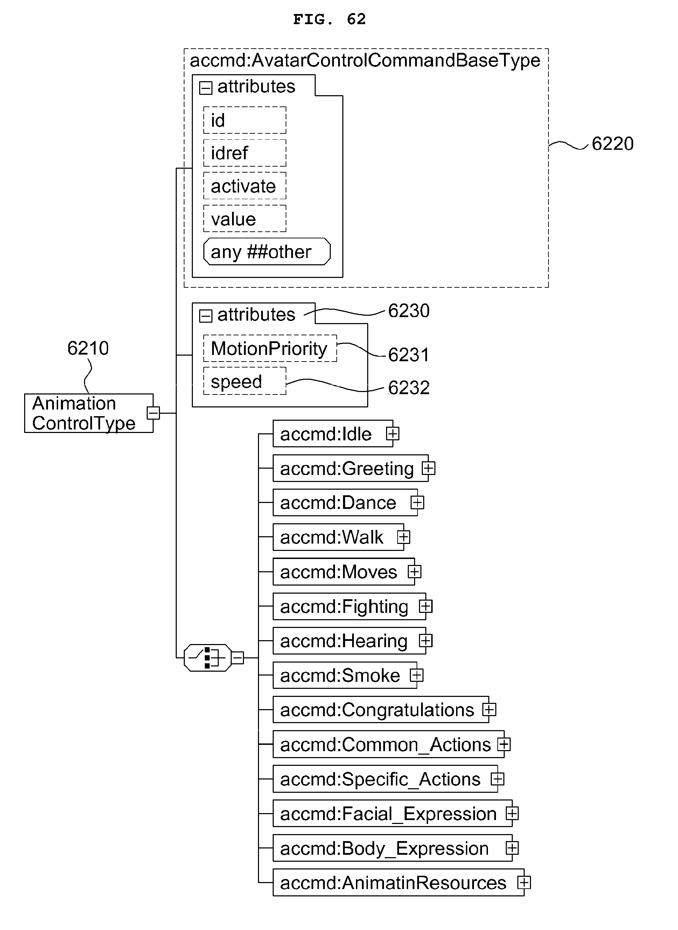

Referring again to FIGS. 54 to 58, a section 5624 may indicate an element of the animation control type. The animation control type may be a tool for expressing animation control commands. Hereinafter, a structure of the animation control type will be described in detail with reference to FIG. 62.

FIG. 62 illustrates a structure of an animation control type 6210 according to an embodiment.

Referring to FIG. 62, the animation control type 6210 may include an avatar control command base type 6220, any attributes 6230, and elements.

According to an embodiment, the any attributes 6230 may include a motion priority 6231 and a speed 6232.

The motion priority 6231 may determine a priority when generating motions of an avatar by mixing animation and body and/or facial feature control.

The speed 6232 may adjust a speed of an animation. For example, in a case of an animation concerning a walking motion, the walking motion may be classified into a slowly walking motion, a moderately waling motion, and a quickly walking motion according to a walking speed.

The elements of the animation control type 6210 may include idle, greeting, dancing, walking, moving, fighting, hearing, smoking, congratulations, common actions, specific actions, facial expression, body expression, and animation resources.

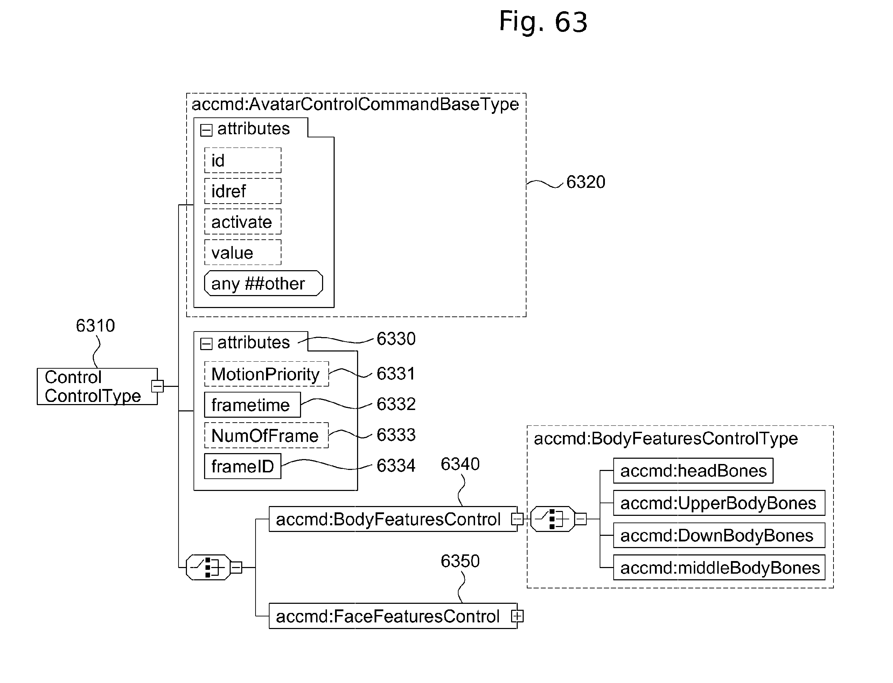

Referring again to FIGS. 54 to 58, a section 5827 may indicate an element of the control control type. The control control type may be a tool for expressing control feature control commands. Hereinafter, a structure of the control control type will be described in detail with reference to FIG. 63.

FIG. 63 illustrates a structure of a control control type 6310 according to an embodiment.

Referring to FIG. 63, the control control type 6310 may include an avatar control command base type 6320, any attributes 6330, and elements.

According to an embodiment, the any attributes 6330 may include a motion priority 6331, a frame time 6332, a number of frames 6333, and a frame ID 6334.

The motion priority 6331 may determine a priority when generating motions of an avatar by mixing an animation with body and/or facial feature control.

The frame time 6332 may define a frame interval of motion control data. For example, the frame interval may be a second unit.

The number of frames 6333 may optionally define a total number of frames for motion control.

The frame ID 6334 may indicate an order of each frame.

The elements of the control control type 6310 may include a body feature control 6340 and a face feature control 6350.

According to an embodiment, the body feature control 6340 may include a body feature control type. Also, the body feature control type may include elements of head bones, upper body bones, lower body bones, and middle body bones.

Motions of an avatar of a virtual world may be associated with the animation control type and the control control type. The animation control type may include information associated with an order of an animation set, and the control control type may include information associated with motion sensing. To control the motions of the avatar of the virtual world, an animation or a motion sensing device may be used. Accordingly, an imaging apparatus of controlling the motions of the avatar of the virtual world according to an embodiment will be herein described in detail.

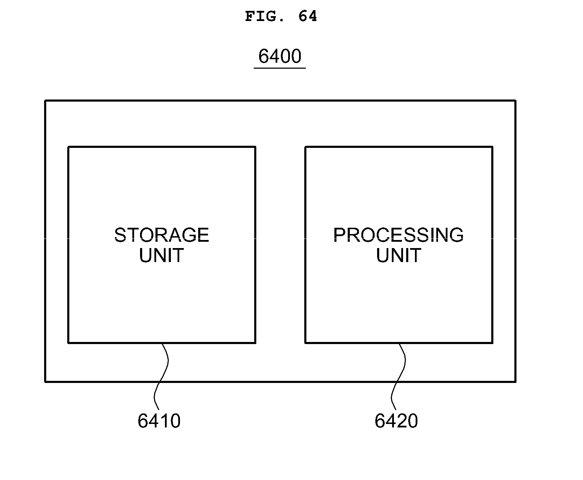

FIG. 64 illustrates a configuration of an imaging apparatus 6400 according to an embodiment.

Referring to FIG. 64, the imaging apparatus 6400 may include a storage unit 6410 and a processing unit 6420.

The storage unit 6410 may include an animation clip, animation control information, and control control information. In this instance, the animation control information may include information indicating a part of an avatar the animation clip corresponds to and a priority. The control control information may include information indicating a part of an avatar motion data corresponds to and a priority. In this instance, the motion data may be generated by processing a value received from a motion senor.

The animation clip may be moving picture data with respect to the motions of the avatar of the virtual world.

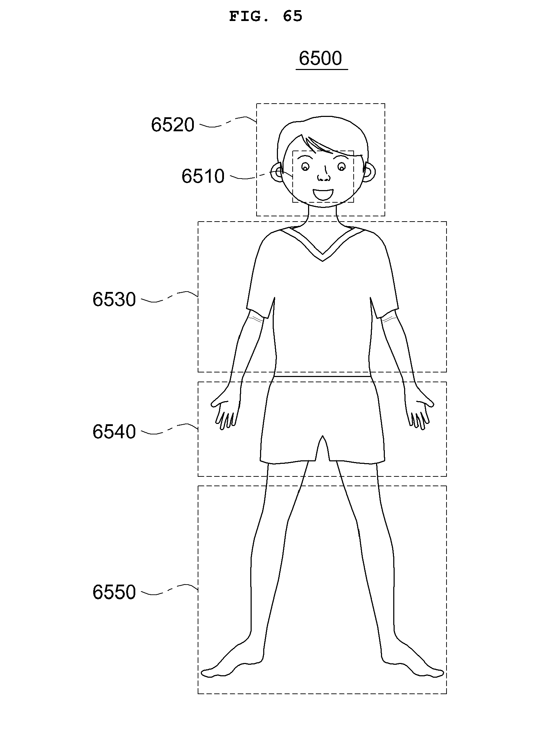

According to an embodiment, the avatar of the virtual world may be divided into each part, and the animation clip and motion data corresponding to each part may be stored. According to embodiments, the avatar of the virtual world may be divided into a facial expression, a head, an upper body, a middle body, and a lower body, which will be described in detail with reference to FIG. 65.

FIG. 65 illustrates a state where an avatar 6500 of a virtual world according to an embodiment is divided into a facial expression, a head, an upper body, a middle body, and a lower body.

Referring to FIG. 65, the avatar 6500 may be divided into a facial expression 6510, a head 6520, an upper body 6530, a middle body 6540, and a lower body 6550.

According to an embodiment, the animation clip and the motion data may be data corresponding to any one of the facial expression 6510, the head 6520, the upper body 6530, the middle body 6540, and the lower body 6550.

Referring again to FIG. 64, the animation control information may include the information indicating the part of the avatar the animation clip corresponds to and the priority. The avatar of the virtual world may be at least one, and the animation clip may correspond to at least one avatar based on the animation control information.

According to embodiments, the information indicating the part of the avatar the animation clip corresponds to may be information indicating any one of the facial expression, the head, the upper body, the middle body, and the lower body.

The animation clip corresponding to an arbitrary part of the avatar may have the priority. The priority may be determined by a user in the real world in advance, or may be determined by real-time input. The priority will be further described with reference to FIG. 13.

According to embodiments, the animation control information may further include information associated with a speed of the animation clip corresponding to the arbitrary part of the avatar. For example, in a case of data indicating a walking motion as the animation clip corresponding to the lower body of the avatar, the animation clip may be divided into slowly walking motion data, moderately walking motion data, quickly walking motion data, and jumping motion data.

The control control information may include the information indicating the part of the avatar the motion data corresponds to and the priority. In this instance, the motion data may be generated by processing the value received from the motion sensor.

The motion sensor may be a sensor of a real world device for measuring motions, expressions, states, and the like of a user in the real world.

The motion data may be data in which a value obtained by measuring the motions, the expressions, the states, and the like of the user of the real world may be received, and the received value is processed to be applicable in the avatar of the virtual world.

For example, the motion sensor may measure position information with respect to arms and legs of the user of the real world, and may be expressed as $\Theta_{Xreal}$, $\Theta_{real}$, and $\Theta_{Zreal}$, that is, values of angles with a x-axis, a y-axis, and a z-axis, and also expressed as $X_{real}$, $Y_{real}$, and $Z_{real}$, that is, values of the x-axis, the y-axis, and the z-axis. Also, the motion data may be data processed to enable the values about the position information to be applicable in the avatar of the virtual world.

According to an embodiment, the avatar of the virtual world may be divided into each part, and the motion data corresponding to each part may be stored. According to embodiments, the motion data may be information indicating any one of the facial expression, the head, the upper body, the middle body, and the lower body of the avatar.

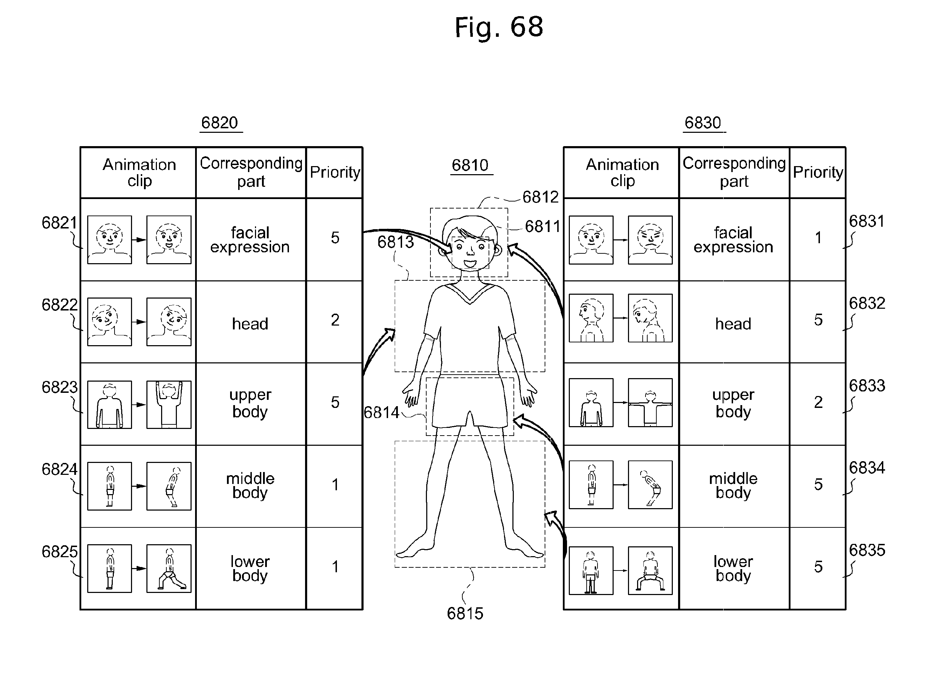

The motion data corresponding to an arbitrary part of the avatar may have the priority. The priority may be determined by the user of the real world in advance, or may be determined by real-time input. The priority of the motion data will be further described with reference to FIG. 68.

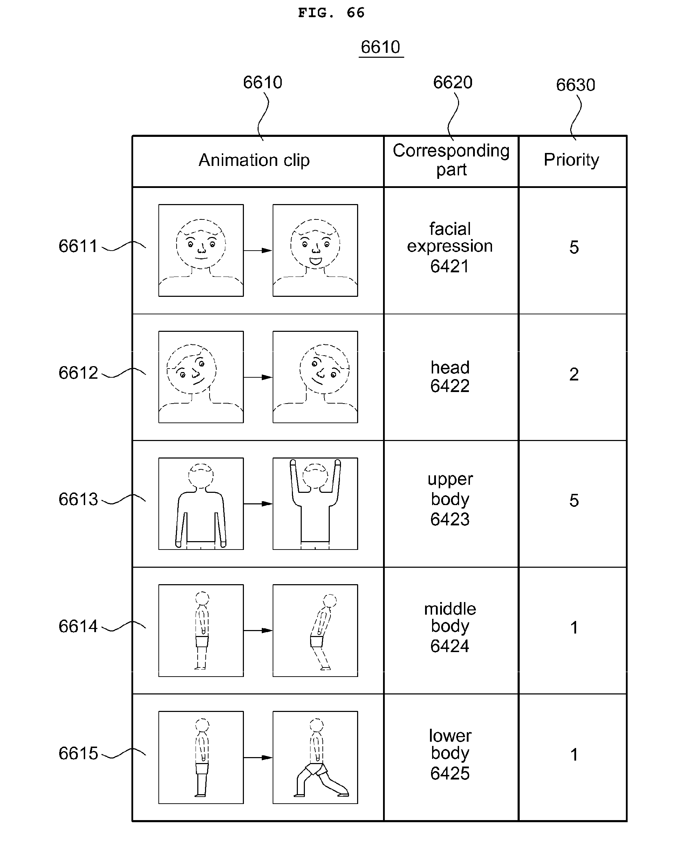

The processing unit 6420 may compare the priority of the animation control information corresponding to a first part of an avatar and the priority of the control control information corresponding to the first part of the avatar to thereby determine data to be applicable in the first part of the avatar, which will be described in detail with reference to FIG. 66.

FIG. 66 illustrates a database 6600 with respect to an animation clip according to an embodiment.

Referring to FIG. 66, the database 6600 may be categorized into an animation clip 6610, a corresponding part 6620, and a priority 6630.

The animation clip 6610 may be a category of data with respect to motions of an avatar corresponding to an arbitrary part of an avatar of a virtual world. According to embodiments, the animation clip 6610 may be a category with respect to the animation clip corresponding to any one of a facial expression, a head, an upper body, a middle body, and a lower body of an avatar. For example, a first animation clip 6611 may be the animation clip corresponding to the facial expression of the avatar, and may be data concerning a smiling motion. A second animation clip 6612 may be the animation clip corresponding to the head of the avatar, and may be data concerning a motion of shaking the head from side to side. A third animation clip 6613 may be the animation clip corresponding to the upper body of the avatar, and may be data concerning a motion of raising arms up. A fourth animation clip 6614 may be the animation clip corresponding to the middle part of the avatar, and may be data concerning a motion of sticking out a butt. A fifth animation clip 6615 may be the animation clip corresponding to the lower part of the avatar, and may be data concerning a motion of bending one leg and stretching the other leg forward.

The corresponding part 6620 may be a category of data indicating a part of an avatar the animation clip corresponds to. According to embodiments, the corresponding part 6620 may be a category of data indicating any one of the facial expression, the head, the upper body, the middle body, and the lower body of the avatar which the animation clip corresponds to. For example, the first animation clip 6611 may be an animation clip corresponding to the facial expression of the avatar, and a first corresponding part 6621 may be expressed as 'facial expression'. The second animation clip 6612 may be an animation clip corresponding to the head of the avatar, and a second corresponding part 6622 may be expressed as 'head'. The third animation clip 6613 may be an animation clip corresponding to the upper body of the avatar, and a third corresponding part 6623 may be expressed as 'upper body'. The fourth animation clip 6614 may be an animation clip corresponding to the middle body of the avatar, and a fourth corresponding part may be expressed as 'middle body'. The fifth animation clip 6615 may be an animation clip corresponding to the lower body of the avatar, and a fifth corresponding part 6625 may be expressed as 'lower body'.

The priority 6630 may be a category of values with respect to the priority of the animation clip. According to embodiments, the priority 6630 may be a category of values with respect to the priority of the animation clip corresponding to any one of the facial expression, the head, the upper body, the middle body, and the lower body of the avatar. For example, the first animation clip 6611 corresponding to the facial expression of the avatar may have a priority value of '5'. The second animation clip 6612 corresponding to the head of the avatar may have a priority value of '2'. The third animation clip 6613 corresponding to the upper body of the avatar may have a priority value of '5'. The fourth animation clip 6614 corresponding to the middle body of the avatar may have a priority value of '1'. The fifth animation clip 6615 corresponding to the lower body of the avatar may have a priority value of '1'. The priority value with respect to the animation clip may be determined by a user in the real world in advance, or may be determined by a real-time input.

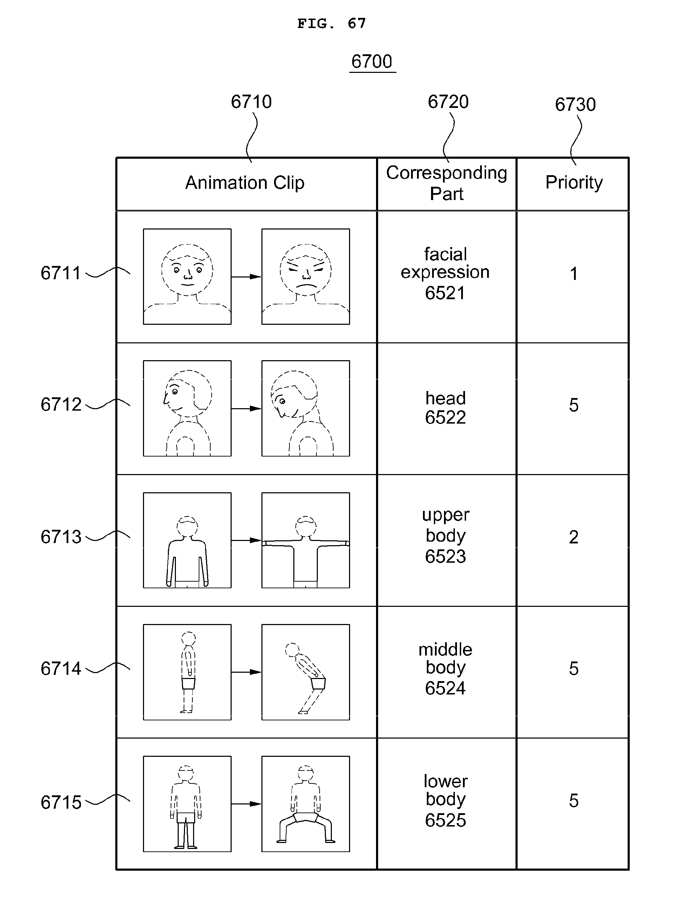

FIG. 67 illustrates a database 6700 with respect to motion data according to an embodiment.

Referring to FIG. 67, the database 6700 may be categorized into motion data 6710, a corresponding part 6720, and a priority 6730.

The motion data 6710 may be data obtained by processing values received from a motion sensor, and may be a category of the motion data corresponding to an arbitrary part of an avatar of a virtual world. According to embodiments, the motion data 6710 may be a category of the motion data corresponding to any one of a facial expression, a head, an upper body, a middle body, and a lower body of the avatar. For example, first motion data 6711 may be motion data corresponding to the facial expression of the avatar, and may be data concerning a grimacing motion of a user in the real world. In this instance, the data concerning the grimacing motion may be obtained such that the grimacing motion of the user of the real world is measured by the motion sensor, and the measured value is applicable in the facial expression of the avatar.

Similarly, second motion data 6712 may be motion data corresponding to the head of the avatar, and may be data concerning a motion of lowering a head of the user of the real world. Third motion data 6713 may be motion data corresponding to the upper body of the avatar, and may be data concerning a motion of lifting arms of the user of the real world from side to side. Fourth motion data 6714 may be motion data corresponding to the middle body of the avatar, and may be data concerning a motion of shaking a butt of the user of the real world back and forth. Fifth motion data 6715 may be motion data corresponding to the lower part of the avatar, and may be data concerning a motion of spreading both legs of the user of the real world from side to side while bending.

The corresponding part 6720 may be a category of data indicating a part of an avatar the motion data corresponds to. According to embodiments, the corresponding part 6720 may be a category of data indicating any one of the facial expression, the head, the upper body, the middle body, and the lower body of the avatar that the motion data corresponds to. For example, since the first motion data 6711 is motion data corresponding to the facial expression of the avatar, a first corresponding part 6721 may be expressed as 'facial expression'. Since the second motion data 6712 is motion data corresponding to the head of the avatar, a second corresponding part 6722 may be expressed as 'head'. Since the third motion data 6713 is motion data corresponding to the upper body of the avatar, a third corresponding part 6723 may be expressed as 'upper body'. Since the fourth motion data 6714 is motion data corresponding to the middle body of the avatar, a fourth corresponding part 6724 may be expressed as 'middle body'. Since the fifth motion data 6715 is motion data corresponding to the lower body of the avatar, a fifth corresponding part 6725 may be expressed as 'lower body'.

The priority 6730 may be a category of values with respect to the priority of the motion data. According to embodiments, the priority 6730 may be a category of values with respect to the priority of the motion data corresponding to any one of the facial expression, the head, the upper body, the middle body, and the lower body of the avatar. For example, the first motion data 6711 corresponding to the facial expression may have apriority value of '1'. The second motion data 6712 corresponding to the head may have a priority value of '5'. The third motion data 6713 corresponding to the upper body may have a priority value of '2'. The fourth motion data 6714 corresponding to the middle body may have a priority value of '5'. The fifth motion data 6715 corresponding to the lower body may have a priority value of '5'. The priority value with respect to the motion data may be determined by the user of the real world in advance, or may be determined by a real-time input.

FIG. 68 illustrates operations determining motion object data to be applied in an arbitrary part of an avatar 6810 by comparing priorities according to an embodiment.

Referring to FIG. 68, the avatar 6810 may be divided into a facial expression 6811, a head 6812, an upper body 6813, a middle body 6814, and a lower body 6815.

Motion object data may be data concerning motions of an arbitrary part of an avatar. The motion object data may include an animation clip and motion data. The motion object data may be obtained by processing values received from a motion sensor, or by being read from the storage unit of the imaging apparatus. According to embodiments, the motion object data may correspond to any one of a facial expression, a head, an upper body, a middle body, and a lower body of the avatar.

A database 6820 may be a database with respect to the animation clip. Also, the database 6830 may be a database with respect to the motion data.

The processing unit of the imaging apparatus according to an embodiment may compare a priority of animation control information corresponding to a first part of the avatar 6810 with a priority of control control information corresponding to the first part of the avatar 6810 to thereby determine data to be applicable in the first part of the avatar.

According to embodiments, a first animation clip 6821 corresponding to the facial expression 6811 of the avatar 6810 may have a priority value of '5', and first motion data 6831 corresponding to the facial expression 6811 may have a priority value of '1'. Since the priority of the first animation clip 6821 is higher than the priority of the first motion data 6831, the processing unit may determine the first animation clip 6821 as the data to be applicable in the facial expression 6811.

Also, a second animation clip 6822 corresponding to the head 6812 may have a priority value of '2', and second motion data 6832 corresponding to the head 6812 may have a priority value of '5'. Since, the priority of the second motion data 6832 is higher than the priority of the second animation clip 6822, the processing unit may determine the second motion data 6832 as the data to be applicable in the head 6812.

Also, a third animation clip 6823 corresponding to the upper body 6813 may have a priority value of '5', and third motion data 6833 corresponding to the upper body 6813 may have a priority value of '2'. Since the priority of the third animation clip 6823 is higher than the priority of the third motion data 6833, the processing unit may determine the third animation clip 6823 as the data to be applicable in the upper body 6813.

Also, a fourth animation clip 6824 corresponding to the middle body 6814 may have a priority value of '1', and fourth motion data 6834 corresponding to the middle body 6814 may have a priority value of '5'. Since the priority of the fourth motion data 6834 is higher than the priority of the fourth animation clip 6824, the processing unit may determine the fourth motion data 6834 as the data to be applicable in the middle body 6814.

Also, a fifth animation clip 6825 corresponding to the lower body 6815 may have a priority value of '1', and fifth motion data 6835 corresponding to the lower body 6815 may have a priority value of '5'. Since the priority of the fifth motion data 6835 is higher than the priority of the fifth animation clip 6825, the processing unit may determine the fifth motion data 6835 as the data to be applicable in the lower body 6815.

Accordingly, as for the avatar 6810, the facial expression 6811 may have the first animation clip 6821, the head 6812 may have the second motion data 6832, the upper body 6813 may have the third animation clip 6823, the middle body 6814 may have the fourth motion data 6834, and the lower body 6815 may have the fifth motion data 6835.

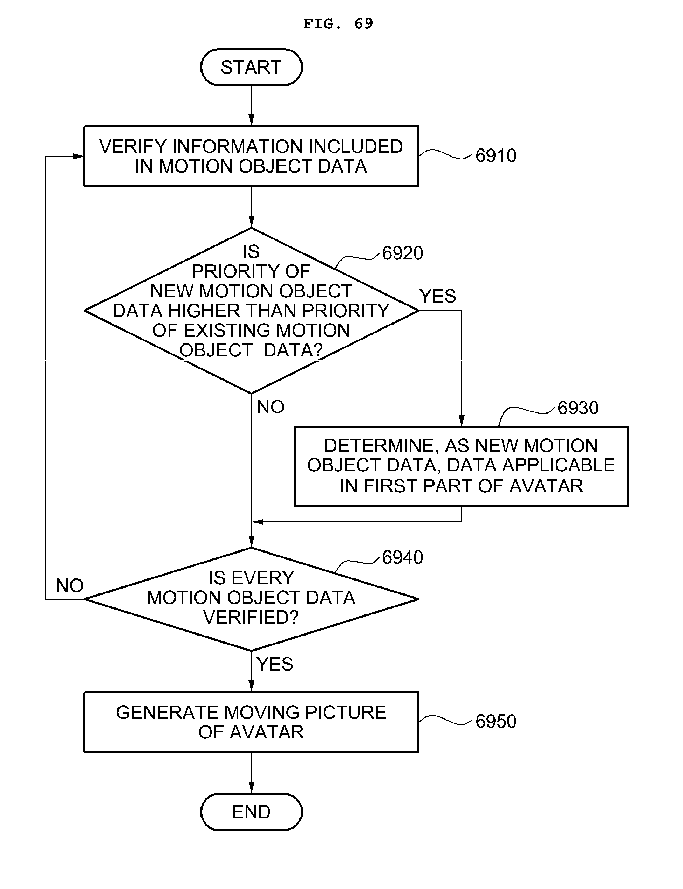

Data corresponding to an arbitrary part of the avatar 6810 may have a plurality of animation clips and a plurality of pieces of motion data. When a plurality of pieces of the data corresponding to the arbitrary part of the avatar 6810 is present, a method of determining data to be applicable in the arbitrary part of the avatar 6810 will be described in detail with reference to FIG. 69.

FIG. 69 is a flowchart illustrating a method of determining motion object data to be applied in each part of an avatar according to an embodiment.

Referring to FIG. 69, in operation 6910, the imaging apparatus according to an embodiment may verify information included in motion object data. The information included in the motion object data may include information indicating a part of an avatar the motion object data corresponds to, and a priority of the motion object data.

When the motion object data corresponding to a first part of the avatar is absent, the imaging apparatus may determine new motion object data obtained by being newly read or by being newly processed, as data to be applicable in the first part.

In operation 6920, when the motion object data corresponding to the first part is present, the processing unit may compare a priority of an existing motion object data and a priority of the new motion object data.

In operation 6930, when the priority of the new motion object data is higher than the priority of the existing motion object data, the imaging apparatus may determine the new motion object data as the data to be applicable in the first part of the avatar.

However, when the priority of the existing motion object data is higher than the priority of the new motion object data, the imaging apparatus may determine the existing motion object data as the data to be applicable in the first part.

In operation 6940, the imaging apparatus may determine whether all motion object data is determined.

When the motion object data not being verified is present, the imaging apparatus may repeatedly perform operations S6910 to S6940 with respect to the all motion object data not being determined.

In operation 6950, when the all motion object data are determined, the imaging apparatus may associate data having a highest priority from the motion object data corresponding to each part of the avatar to thereby generate a moving picture of the avatar.

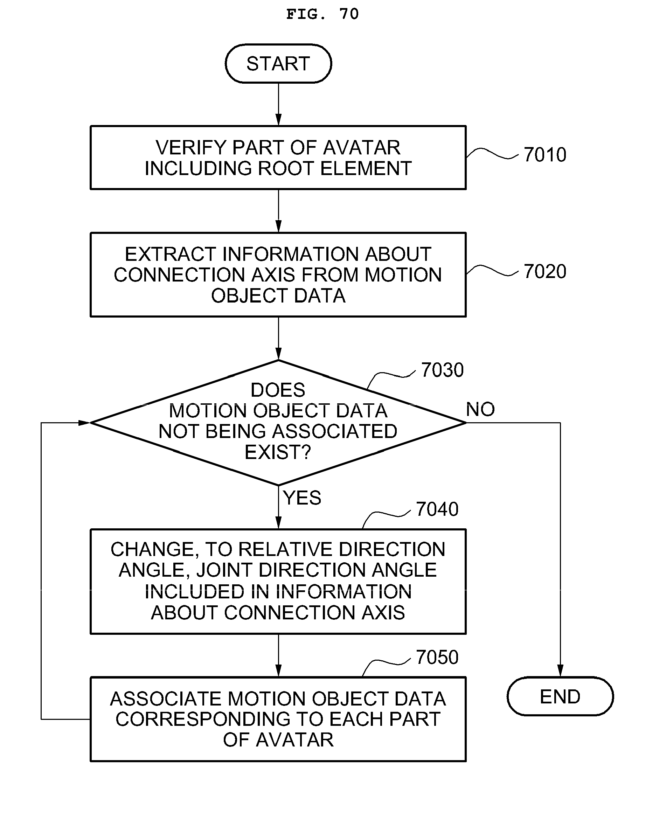

The processing unit of the imaging apparatus according to an embodiment may compare a priority of animation control information corresponding to each part of the avatar with apriority of control control information corresponding to each part of the avatar to thereby determine data to be applicable in each part of the avatar, and may associate the determined data to thereby generate a moving picture of the avatar. A process of determining the data to be applicable in each part of the avatar has been described in detail in FIG. 69, and thus descriptions thereof will be omitted. A process of generating a moving picture of an avatar by associating the determined data will be described in detail with reference to FIG. 70.

FIG. 70 is a flowchart illustrating an operation of associating corresponding motion object data with each part of an avatar according to an embodiment.

Referring to FIG. 70, in operation 7010, the imaging apparatus according to an embodiment may locate a part of an avatar including a root element.

In operation 7020, the imaging apparatus may extract information associated with a connection axis from motion object data corresponding to the part of the avatar. The motion object data may include an animation clip and motion data. The motion object data may include information associated with the connection axis.

In operation 7030, the imaging apparatus may verify whether motion object data not being associated is present.

When the motion object data not being associated is absent, since all pieces of data corresponding to each part of the avatar are associated, the process of generating the moving picture of the avatar will be terminated.

In operation 7040, when the motion object data not being associated is present, the imaging apparatus may change, to a relative direction angle, a joint direction angle included in the connection axis extracted from the motion object data. According to embodiments, the joint direction angle included in the information associated with the connection axis may be the relative direction angle. In this case, the imaging apparatus may advance operation 7050 while omitting operation 7040.

Hereinafter, according to an embodiment, when the joint direction angle is an absolute direction angle, a method of changing the joint direction angle to the relative direction angle will be described in detail. Also, in a case where an avatar of a virtual world is divided into a facial expression, a head, an upper body, a middle body, and a lower body will be described herein in detail.

According to embodiments, motion object data corresponding to the middle body of the avatar may include body center coordinates. The joint direction angle of the absolute direction angle may be changed to the relative direction angle based on a connection portion of the middle part including the body center coordinates.

The imaging apparatus may extract the information associated with the connection axis stored in the motion object data corresponding to the middle part of the avatar. The information associated with the connection axis may include a joint direction angle between a thoracic vertebrae corresponding to a connection portion of the upper body of the avatar with a cervical vertebrae corresponding to a connection portion of the head, a joint direction angle between the thoracic vertebrae and a left clavicle, a joint direction angle between the thoracic vertebrae and a right clavicle, a joint direction angle between a pelvis corresponding to a connection portion of the middle part and a left femur corresponding to a connection portion of the lower body, and a joint direction angle between the pelvis and the right femur.

For example, the joint direction angle between the pelvis and the right femur may be expressed as the following Equation 1.

[Equation 1]

$$A(\theta_{RightFemur}) = R_{RightFemur\_Pelvis} A(\theta_{Pelvis})$$,

where a function A(.) denotes a direction cosine matrix, $R_{RightFemur\_Pelvis}$ denotes a rotational matrix with respect to the direction angle between the pelvis and the right femur, $\Theta_{RightFemur}$ denotes a joint direction angle in the right femur of the lower body of the avatar, and $\Theta_{Pelvis}$ denotes a joint direction angle between the pelvis and the right femur.

Using Equation 1, a rotational function may be calculated as illustrated in the following Equation 2.

[Equation 2]

$$R_{RightFemur\_Pelvis} = A(\theta_{RightFemur}) A(\theta_{Pelvis})^{-1}$$.

The joint direction angle of the absolute direction angle may be changed to the relative direction angle based on the connection portion of the middle body of the avatar including the body center coordinates. For example, using the rotational function of Equation2, a joint direction angle, that is, an absolute direction angle included in information associated with a connection axis, which is stored in the motion object data corresponding to the lower body of the avatar, may be changed to a relative direction angle as illustrated in the following Equation 3.

[Equation 3]

$$A(\theta') = R_{RightFemur\_Pelvis} A(\theta)$$.

Similarly, a joint direction angle, that is, an absolute direction angle included in information associated with a connection axis, which is stored in the motion object data corresponding to the head and upper body of the avatar, may be changed to a relative direction angle.

Through the above described method of changing the joint direction angle to the relative direction angle, when the joint direction angle is changed to the relative direction angle, using information associated with the connection axis stored in motion object data corresponding to each part of the avatar, the imaging apparatus may associate the motion object data corresponding to each part of the avatar in operation 7050.

The imaging apparatus may return to operation 7030, and may verify whether the motion object data not being associated is present.

When the motion object data not being associated is absent, since all pieces of data corresponding to each part of the avatar are associated, the process of generating the moving picture of the avatar will be terminated.

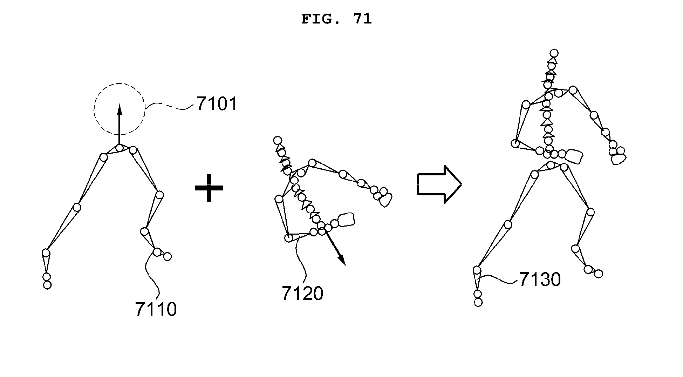

FIG. 71 illustrates an operation of associating corresponding motion object data with each part of an avatar according to an embodiment.

Referring to FIG. 71, the imaging apparatus according to an embodiment may associate motion object data 7110 corresponding to a first part of an avatar and motion object data 7120 corresponding to a second part of the avatar to thereby generate a moving picture 7130 of the avatar.

The motion object data 7110 corresponding to the first part may be any one of an animation clip and motion data. Similarly, the motion object data 7120 corresponding to the second part may be any one of an animation clip and motion data.

According to an embodiment, the storage unit of the imaging apparatus may further store information associated with a connection axis 7101 of the animation clip, and the processing unit may associate the animation clip and the motion data based on the information associated with the connection axis 7101. Also, the processing unit may associate the animation clip and another animation clip based on the information associated with the connection axis 7101 of the animation clip.

According to embodiments, the processing unit may extract the information associated with the connection axis from the motion data, and enable the connection axis 7101 of the animation clip and a connection axis of the motion data to correspond to each to thereby associate the animation clip and the motion data. Also, the processing unit may associate the motion data and another motion data based on the information associated with the connection axis extracted from the motion data. The information associated with the connection axis was described in detail in FIG. 70, and thus further description related thereto will be omitted here.

Hereinafter, an example of the imaging apparatus adapting a face of a user in a real world onto a face of an avatar of a virtual world will be described.

The imaging apparatus may sense the face of the user of the real world using a real world device, for example, an image sensor, and adapt the sensed face onto the face of the avatar of the virtual world. When the avatar of the virtual world is divided into a facial expression, a head, an upper body, a middle body, and a lower body, the imaging apparatus may sense the face of the user of the real world to thereby adapt the sensed face of the real world onto the facial expression and the head of the avatar of the virtual world.

According to embodiments, the imaging apparatus may sense feature points of the face of the user of the real world to collect data about the feature points, and may generate the face of the avatar of the virtual world using the data about the feature points.

As described above, when an imaging apparatus according to an embodiment is used, animation control information used for controlling an avatar of a virtual world and control metadata with respect to a structure of motion data may be provided. A motion of the avatar in which an animation clip corresponding to a part of the avatar of the virtual world is associated with motion data obtained by sensing a motion of a user of a real world may be generated by comparing a priority of the animation clip with a priority of the motion data, and by determining data corresponding the part of the avatar.

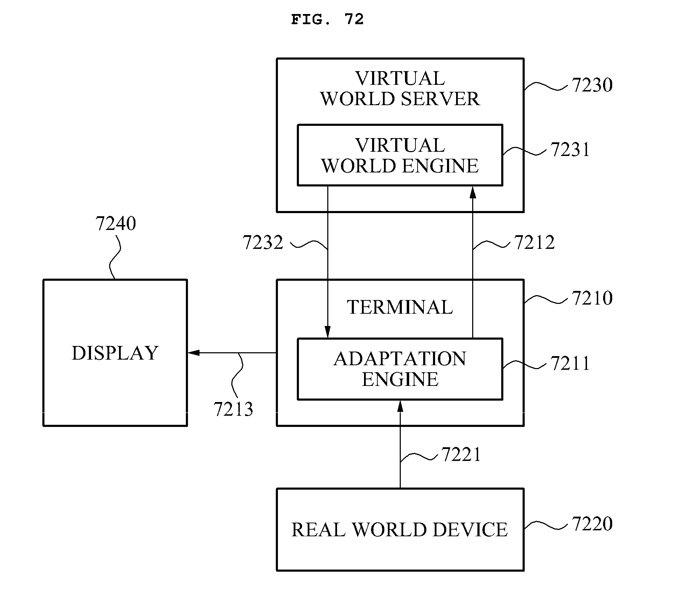

FIG. 72 illustrates a terminal 7210 for controlling a virtual world object and a virtual world server 7230 according to an embodiment.

Referring to FIG. 72, the terminal 7210 may receive information from a real world device 7220 (7221). In this example, the information received from the real worlddevice 7220 may include a control input that is input via a device such as a keyboard, a mouse, or a pointer, and a sensor input that is input via a device such as a temperature sensor, an operational sensor, an optical sensor, an intelligent sensor, a position sensor, an acceleration sensor, and the like. In this example, an adaptation engine 7211 included in the terminal 7210 may generate a regularized control command based on the received information 7221. For example, the adaptation engine 7211 may generate a control command by converting the control input to be suitable for the control command, or may generate the control command based on the sensor input. The terminal 7210 may transmit the regularized control command to the virtual world server 7230 (7212).

The virtual world server 7230 may receive the regularized control command from the terminal 7210. In this example, a virtual world engine 7231 included in the virtual world server 7230 may generate information associated with a virtual world object by converting the regularized control command according to the virtual world object corresponding to the regularized control command. The virtual world server 7230 may transmit again information associated with the virtual world object to the terminal 7210 (7232). The virtual world object may include an avatar and a virtual object. In this example, in the virtual world object, the avatar may indicate an object in which a user appearance is reflected, and the virtual object may indicate a remaining object excluding the avatar.

The terminal 7210 may control the virtual world object based on information associated with the virtual world object. For example, the terminal 7210 may control the virtual world object by generating the control command based on information associated with the virtual world object, and by transmitting the control command to a display 7240 (7213). That is, the display 7240 may display information associated with the virtual world based on the transmitted control command (7213).

Even though the adaptation engine 7211 included in the terminal 7210 generates the regularized control command based on information 7221 received from the real world device 7220 in the aforementioned embodiment, it is only an example. According to another embodiment, the terminal 7210 may directly transmit the received information 7221 to the virtual world server 7230 without directly generating the regularized control command. Alternatively, the terminal 7210 may perform only regularizing of the received information 7221 and then may transmit the received information 7221 to the virtual world server 7230 (7212). For example, the terminal 720 may transmit the received information 7221 to the virtual world server 7230 by converting the control input to be suitable for the virtual world and by regularizing the sensor input. In this example, the virtual world server 7230 may generate information associated with the virtual world object by generating the regularized control command based on the transmitted information 7212, and by converting the regularized control command according to the virtual world object corresponding to the regularized control command. The virtual world server 7230 may transmit information associated with the generated virtual world object to the terminal 7210 (7232). That is, the virtual world server 7230 may process all of processes of generating information associated with the virtual world object based on information 7221 received from the real world device 7220.

The virtual world server 7230 may be employed so that content processed in each of a plurality of terminals may be played back alike in a display of each of the terminals, through communication with the plurality of terminals.

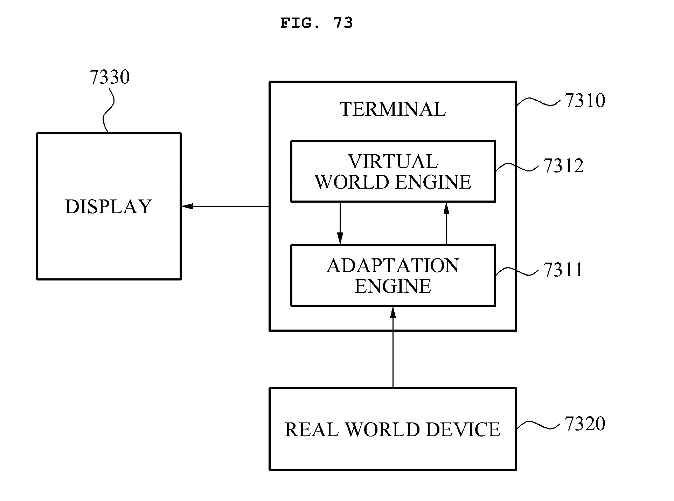

FIG. 73 illustrates a terminal 7310 for controlling a virtual world object according to another embodiment.

Compared to the terminal 7210, the terminal 7310 may further include a virtual world engine 7312. That is, instead of communicating with the virtual world server 7230, described with reference to FIG. 72, the terminal 7310 may include both an adaptation engine 7311 and the virtual world engine 7312 to generate information associated with the virtual world object based on information received from a virtual world device 7320, and to control the virtual world object based on information associated with the virtual world object. Even in this case, the terminal 7310 may control the virtual world object by generating a control command based on information associated with the virtual world object, and by transmitting the control command to a display 7330. That is, the display 7330 may display information associated with the virtual world based on the transmitted control command.

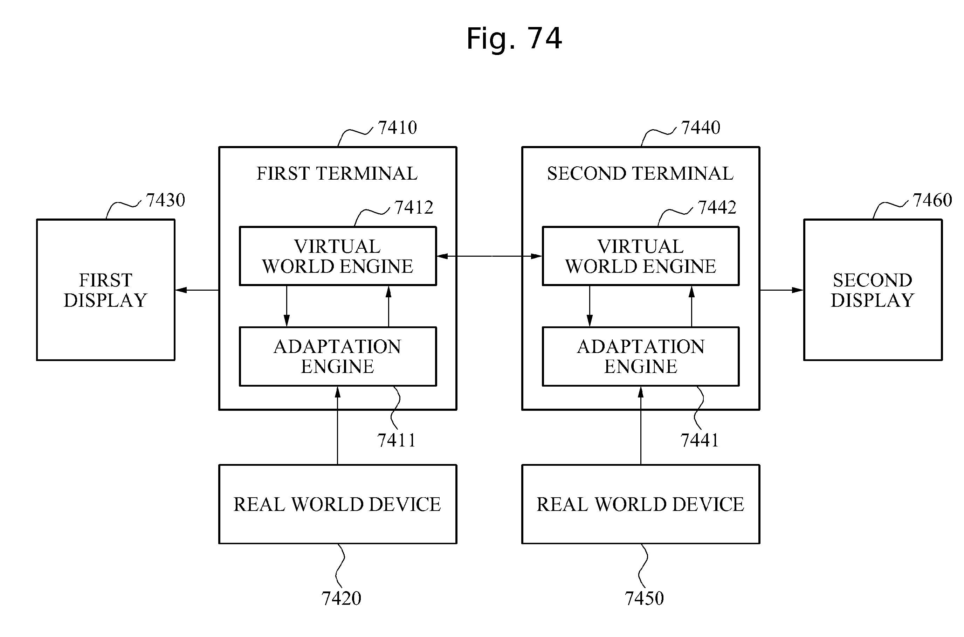

FIG. 74 illustrates a plurality of terminals for controlling a virtual world object according to another embodiment.

A first terminal 7410 may receive information from a real world device 7420, and may generate information associated with the virtual world object based on information received from an adaptation engine 7411 and a virtual world engine 7412. Also, the first terminal 7410 may control the virtual world object by generating a control command based on information associated with the virtual world object and by transmitting the control command to a first display 7430.

A second terminal 7440 may also receive information from a real world device 7450, and may generate information associated with the virtual world object based on information received from an adaptation engine 7441 and a virtual world engine 7442. Also, the second terminal 7440 may control the virtual world object by generating a control command based on information associated with the virtual world object and by transmitting the control command to a second display 7460.

In this example, the first terminal 7410 and the second terminal 7440 may exchange information associated with the virtual world object between the virtual world engines 7412 and 7442 (7470). For example, when a plurality of users controls an avatar in a single virtual world, information associated with the virtual world object may need to be exchanged between the first terminal 7410 and the second terminal 7420 (7470) so that content processed in each of the first terminal 7410 and the second terminal 7420 may be applied alike to the single virtual world.

Even though only two terminals are described for ease of description in the embodiment of FIG. 74, it will be clear to those skilled in the art that information associated with the virtual world object may be exchanged among at least three terminals.

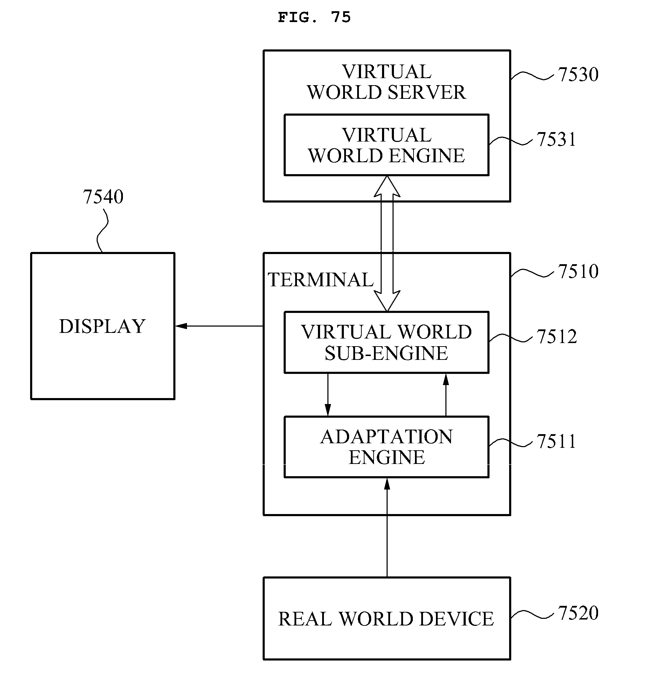

FIG. 75 illustrates a terminal 7510 for controlling a virtual world object according to another embodiment.

The terminal 7510 may communicate with a virtual world server 7530 and further include a virtual world sub-engine 7512. That is, an adaptation engine 7511 included in the terminal 7510 may generate a regularized control command based on information received from a real world device 7520, and may generate information associated with the virtual world object based on the regularized control command. In this example, the terminal 7510 may control the virtual world object based on information associated with the virtual world object. That is, the terminal 7510 may control the virtual world object by generating a control command based on information associated with the virtual world object and by transmitting the control command to a display 7540. In this example, the terminal 7510 may receive virtual world information from the virtual world server 7530, generate the control command based on virtual world information and information associated with the virtual world object, and transmit the control command to the display 7540 to display overall information of the virtual world. For example, avatar information may be used in the virtual world by the terminal 7510 and thus, the virtual world server 7530 may transmit only virtual world information, for example, information associated with the virtual object or another avatar, required by the terminal 7510.

In this example, the terminal 7510 may transmit, to the virtual world server 7530, the processing result that is obtained according to control of the virtual world object, and the virtual world server 7530 may update the virtual world information based on the processing result. That is, since the virtual world server 7530 updates virtual world information based on the processing result of the terminal 7510, virtual world information in which the processing result is used may be provided to other terminals. The virtual world server 7530 may process the virtual world information using a virtual world engine 7531.

The above-described embodiments may be recorded in non-transitory computer-readable media including program instructions to implement various operations embodied by a computer. The media may also include, alone or in combination with the program instructions, data files, data structures, and the like. The program instructions may be specially designed or may be executed by those skilled in the computer software. Also, the aforementioned various metadata structures may be recorded in non-transitory computer-readable storage media. For example, a metadata structure defining an avatar face feature point and a body feature point for controlling a facial expression and a motion of an avatar may be recorded in a non-transitory computer-readable storage medium. In this instance, at least one of a HeadOutline, a LeftEyeOutline, a RightEyeOutline, a LeftEyeBrowOutline, a RightEyeBrowOutline, a LeftEarOutline, a RightEarOutline, a NoseOutline, a MouthLipOutline, FacePoints, and MiscellaneousPoints may be represented based on the avatar face feature point. A non-transitory computer-readable storage medium according to another embodiment may include a first set of instructions to store animation control information and control control information, and a second set of instructions to associate an animation clip and motion data generated from a value received from a motion sensor, based on the animation control information corresponding to each part of an avatar and the control control information. The animation control information and the control control information are described above.

Although a few embodiments have been shown and described, it would be appreciated by those skilled in the art that changes may be made in these embodiments without departing from the principles and spirit of the disclosure, the scope of which is defined by the claims and their equivalents.

**Claims**

1. An object controlling system, comprising:

   a control command receiver to receive a control command with respect to an object of a virtual environment; and an object controller to control the object based on the received control command and object information of the object.

2. The object controlling system of claim 1, wherein:

   the object information comprises common characteristics of a virtual world object, and
   the common characteristics comprises, as metadata, at least one element of an Identification for identifying the virtual world object, a virtual world object sound (VWOSound), a virtual world object scent (VWOScent), a virtual world object control (VWOControl), a virtual world object event (VWOEvent), a virtual world object behavior model (VWOBehaviorModel), and virtual world object haptic properties (VWOHapticProperties).

3. The object controlling system of claim 2, wherein the Identification comprises, as an element, at least one of a user identifier (UserID) for identifying a user associated with the virtual world object, an Ownership of the virtual world object, Rights, and Credits, and comprises, as an attribute, at least one of a name of the virtual world object and a family with another virtual world object.

4. The object controlling system of claim 2, wherein:

   the VWOSound comprises, as an element, a sound resource uniform resource locator (URL) including at least one link to a sound file, and comprises, as an attribute, at least one of a sound identifier (SoundID) that is a unique identifier of an object sound, an intensity indicating a sound strength, a duration indicating a length of time where the sound lasts, a loop indicating a playing option, and a sound name.

5. The object controlling system of claim 2, wherein:

   the VWOScent comprises, as an element, a scent resource URL including at least one link to a scent file, and comprises, as an attribute, at least one of a scent identifier (ScentID) that is a unique identifier of an object scent, an intensity indicating a scent strength, a duration indicating a length of time where the scent lasts, a loop indicating a playing option, and a scent name.

6. The object controlling system of claim 2, wherein:

   the VWOControl comprises, as an element, a motion feature control (MotionFeatureControl) that is a set of elements controlling a position, an orientation, and a scale of the virtual world object, and comprises, as an attribute, a control identifier (ControlID) that is a unique identifier of control.

7. The object controlling system of claim 6, wherein:

   the MotionFeatureControl comprises, as an element, at least one of a position of an object in a scene with a three-dimensional (3D) floating point vector, an orientation of the object in a scene with the 3D floating point vector as an Euler angle, and a scale of the object in a scene expressed as the 3D floating point vector.

8. The object controlling system of claim 2, wherein:

   the VWOEvent comprises, as an element, at least one of a Mouse that is a set of mouse event elements, a Keyboard that is a set of keyboard event elements, and a user defined input (UserDefinedInput), and comprises, as an attribute, an event identifier (EventID) that is a unique identifier of an event.

9. The object controlling system of claim 8, wherein:

the Mouse comprises, as an element, at least one of a click, double click (Double_Click), a left button down (LeftBttn_down) that is an event taking place at the moment of holding down a left button of a mouse, a left button up (LeftBttn_up) that is an event taking place at the moment of releasing the left button of the mouse, a right button down (RightBttn_down) that is an event taking place at the moment of pushing a right button of the mouse, a right button up (RightBttn_up) that is an event taking place at the moment of releasing the right button of the mouse, and a move that is an event taking place while changing a position of the mouse.

10. The object controlling system of claim 8, wherein:

the Keyboard comprises, as an element, at least one of a key down (Key_Down) that is an event taking place at the moment of holding down a keyboard button and a key up (Key_Up) that is an event taking place at the moment of releasing the keyboard button.

11. The object controlling system of claim 2, wherein:

the VWOBehaviorModel comprises, as an element, at least one of a behavior input (BehaviorInput) that is an input event for generating an object behavior and a behavior output (BehaviorOutput) that is an object behavior output according to the input event.

12. The object controlling system of claim 11, wherein:

the BehaviorInput comprises an EventID as an attribute, and
the BehaviorOutput comprises, as an attribute, at least one of a SoundID, a ScentID, and an animation identifier (AnimationID) .

13. The object controlling system of claim 2, wherein:

the VWOHapticProperties comprises, as an attribute, at least one of a material property (MaterialProperty) that contains parameters characterizing haptic properties, a dynamic force effect (DynamicForceEffect) that contains parameters characterizing force effects, and a tactile property (TactileProperty) that contains parameters characterizing tactile properties.

14. The object controlling system of claim 13, wherein:

the MaterialProperty comprises, as an attribute, at least one of a Stiffness of the virtual world object, a static friction (StaticFriction) of the virtual world object, a dynamic friction (DynamicFriction) of the virtual world object, a Damping of the virtual world object, a Texture containing a link to a haptic texture file, and a mass of the virtual world object.

15. The object controlling system of claim 13, wherein:

the DynamicForceEffect comprises, as an attribute, at least one of a force field (ForceField) containing a link to a force field vector file and a movement trajectory (MovementTrajectory) containing a link to a force trajectory file.

16. The object controlling system of claim 13, wherein:

the TactileProperty comprises, as an attribute, at least one of a Temperature of the virtual world object, a Vibration of the virtual world object, a Current of the virtual world object, and tactile patterns (TactilePatterns) containing a link to a tactile pattern file.

17. The object controlling system of claim 1, wherein:

the object information comprises avatar information associated with an avatar of a virtual world, and the avatar information comprises, as the metadata, at least one element of an avatar appearance (AvatarAppearance), an avatar animation (AvatarAnimation), avatar communication skills (AvatarCommunicationSkills), an avatar personality (AvatarPersonality), avatar control features (AvatarControlFeatures), and avatar common characteristics (AvatarCC), and comprises, as an attribute, a Gender of the avatar.

**18.** The object controlling system of claim 17, wherein:

the AvatarAppearance comprises, as an element, at least one of a Body, a Head, Eyes, Ears, a Nose, a mouth lip (MouthLip), a Skin, a facial, a Nail, a body look (BodyLook), a Hair, eye brows (EyeBrows), a facial hair (FacialHair), facial calibration points (FacialCalibrationPoints), a physical condition (PhysicalCondition), Clothes, Shoes, Accessories, and an appearance resource (AppearanceResource).

**19.** The object controlling system of claim 18, wherein:

the PhysicalCondition comprises, as an element, at least one of a body strength (BodyStrength) and a body flexibility (BodyFlexibility).

**20.** The object controlling system of claim 17, wherein:

the AvatarAnimation comprises at least one element of an Idle, a Greeting, a Dance, a Walk, a Moves, a Fighting, a Hearing, a Smoke, Congratulations, common action (Common_Actions), specific actions (Specific_Actions), a facial expression (Facial_Expression), a body expression (Body_Expression), and an animation resource (AnimationResource).

**21.** The object controlling system of claim 17, wherein:

the AvatarCommunicationSkills comprises, as an element, at least one of an input verbal communication (InputVerbalCommunication), an input nonverbal communication (InputNonVerbalCommunication), an output verbal communication (OutputVerbalCommunication), and an output nonverbal communication (OutputNonVerbalCommunication), and comprises, as an attribute, at least one of a Name and a default language (DefaultLanguage).

**22.** The object controlling system of claim 21, wherein:

a verbal communication comprising the InputVerbalCommunication and OutputVerbalCommunication comprises a language as the element, and comprises, as the attribute, at least one of a voice, a text, and the language.

**23.** The object controlling system of claim 22, wherein:

the language comprises, as an attribute, at least one of a name that is a character string indicating a name of the language and a preference for using the language in the verbal communication.

**24.** The object controlling system of claim 23, wherein a communication preference including the preference comprises a preference level of a communication of the avatar.

**25.** The object controlling system of claim 22, wherein the language is set with a communication preference level (CommunicationPreferenceLevel) including a preference level for each language that the avatar is able to speak or understand.

**26.** The object controlling system of claim 21, wherein a nonverbal communication comprising the InputNonVerbalCommunication and the OutputNonVerbalCommunication comprises, as an element, at least one of a sign language (SignLanguage) and a cued speech communication (CuedSpeechCommumication), and comprises, as an attribute, a complementary gesture (ComplementaryGesture).

**27.** The object controlling system of claim 26, wherein the SignLanguage comprises a name of a language as an attribute.

**28.** The object controlling system of claim 17, wherein the AvatarPersonality comprises, as an element, at least one of an openness, a conscientiousness, an extraversion, an agreeableness, and a neuroticism, and selectively comprises a name of a personality.

**29.** The object controlling system of claim 17, wherein the AvatarControlFeatures comprises, as elements, control body features (ControlBodyFeatures) that is a set of elements controlling moves of a body and control face features (ControlFaceFeature) that is a set of elements controlling moves of a face, and selectively comprises a name of a control configuration as an attribute.

30. The object controlling system of claim 29, wherein the ControlBodyFeatures comprises, as an element, at least one of head bones (headBones), upper body bones (UpperBodyBones), down body bones (DownBodyBones), and middle body bones (MiddleBodyBones).

31. The object controlling system of claim 29, wherein the ControlFaceFeatures comprises, as an element, at least one of a head outline (HeadOutline), a left eye outline (LeftEyeOutline), a right eye outline (RightEyeOutline), a left eye brow outline (LeftEyeBrowOutline), a right eye brow outline (RightEyeBrowOutline), a left ear outline (LeftEarOutline), a right ear outline (RightEarOutline), a nose outline (NoseOutline), a mouth lip outline (MouthLipOutline), face points (FacePoints), and miscellaneous points (MiscellaneousPoints), and selectively comprises, as an attribute, a name of a face control configuration.

32. The object controlling system of claim 31, wherein at least one of elements comprised in the ControlFaceFeatures comprises, as an element, at least one of an outline (Outline4Points) having four points, an outline (Outline5Points) having five points, and an outline (Outline8Points) having eight points, and an outline (Outline14Points) having fourteen points.

33. The object controlling system of claim 31, wherein at least one of elements comprised in the ControlFaceFeatures comprises a basic number of points and selectively further comprises an additional point.

34. The object controlling system of claim 1, wherein:

the object information comprises information associated with a virtual object, and
information associated with the virtual object comprises, as metadata for expressing a virtual object of the virtual environment, at least one element of a virtual object appearance (VOAppearance), a virtual object animation (VOAnimation), and virtual object common characteristics (VOCC).

35. The object controlling system of claim 34, wherein when at least one link to an appearance file exists, the VOAppearance comprises, as an element, a virtual object URL (VirtualObjectURL) that is an element including the at least one link.

36. The object controlling system of claim 34, wherein the VOAnimation comprises, as an element, at least one of a virtual object motion (VOMotion), a virtual object deformation (VODeformation), and a virtual object additional animation (VOAdditionalAnimation), and comprises, as an attribute, at least one of an animation identifier (AnimationID), a Duration that is a length of time where an animation lasts, and a Loop that is a playing option.

37. The object controlling system of claim 1, wherein when the object is an avatar, the object controller controls the avatar based on the received control command and metadata defining an avatar face feature point and a body feature point for controlling a facial expression and a motion of the avatar.

38. The object controlling system of claim 1, wherein:

when the object is an avatar of a virtual world, the control command is generated by sensing a facial expression and a body motion of a user of a real world, and
the object controller controls the object to map characteristics of the user to the avatar of the virtual world according to the facial expression and the body motion.

39. An object controlling system, comprising:

a controller to control a virtual world object of a virtual world using a real world device,
wherein the virtual world object comprises an avatar and a virtual object, and comprises, as metadata, common characteristics of the avatar and the virtual object, and
the common characteristics comprises at least one element of an Identification for identifying the virtual world object, a virtual world object sound (VWOSound), a virtual world object scent (VWOScent), a virtual world object control (VWOControl), a virtual world object event (VWOEvent), a virtual world object

behavior model (VWOBehaviorModel), and virtual world object haptic properties (VWOHapticProperties).

**40.** An object controlling system, comprising:

a controller to control a virtual world object of a virtual world using a real world device,
wherein the virtual world object comprises an avatar and a virtual object, and comprises avatar information associated with the avatar, and
the avatar information comprises at least one element of an avatar appearance (AvatarAppearance), an avatar animation (AvatarAnimation), avatar communication skills (AvatarCommunicationSkills), an avatar personality (AvatarPersonality), avatar control features (AvatarControlFeatures), and avatar common characteristics (AvatarCC), and comprises, as an attribute, a Gender of the avatar.

**41.** An object controlling system, comprising:

a controller to control a virtual world object of a virtual world using a real world device,
wherein the virtual world object comprises an avatar and a virtual object, and comprises, as metadata for expressing the virtual object of a virtual environment, information associated with the virtual object and
information associated with the virtual object comprises at least one element of a virtual object appearance (VOAppearance), a virtual object animation (VOAnimation), and virtual object common characteristics (VOCC).

**42.** An object controlling system, comprising:

a control command generator to generate a regularized control command based on information received from a real world device;
a control command transmitter to transmit the regularized control command to a virtual world server; and
an object controller to control a virtual world object based on information associated with the virtual world object received from the virtual world server.

**43.** An object controlling system, comprising:

an information generator to generate information associated with a corresponding virtual world object by converting a regularized control command received from a terminal according to the virtual world object; and
an information transmitter to transmit information associated with the virtual world object to the terminal,
wherein the regularized control command is generated based on information received by the terminal from a real world device.

**44.** An object controlling system, comprising:

an information transmitter to transmit, to a virtual world server, information received from a real world device; and
an object controller to control a virtual world object based on information associated with the virtual world object that is received from the virtual world server according to the transmitted information.

**45.** An object controlling system, comprising:

a control command generator to generate a regularized control command based on information received from a terminal;
an information generator to generate information associated with a corresponding virtual world object by converting the regularized control command according to the virtual world object; and
an information transmitter to transmit information associated with the virtual world object to the terminal, wherein the received information comprises information received by the terminal from a real world device.

**46.** An object controlling system, comprising:

a control command generator to generate a regularized control command based on information received from a real world device;
an information generator to generate information associated with a corresponding virtual world object by converting the regularized control command according to the virtual world object; and
an object controller to control the virtual world object based on information associated with the virtual world object.

**47.** An object controlling system, comprising:

a control command generator to generate a regularized control command based on information received from a real world device;

an information generator to generate information associated with a corresponding virtual world object by converting the regularized control command according to the virtual world object;

an information exchanging unit to exchange information associated with the virtual world object with information associated with a virtual world object of another object controlling system; and

an object controller to control the virtual world object based on information associated with the virtual world object and the exchanged information associated with the virtual world object of the other virtual world object.

48. An object controlling system, comprising:

an information generator to generate information associated with a virtual world object based on information received from a real world device and virtual world information received from a virtual world server;

an object controller to control the virtual world object based on information associated with the virtual world object; and

a processing result transmitter to transmit, to the virtual world server, a processing result according to controlling of the virtual world object.

49. An object controlling system, comprising:

an information transmitter to transmit virtual world information to a terminal; and

an information update unit to update the virtual world information based on a processing result received from the terminal,

wherein the processing result comprises a control result of a virtual world object based on information received by the terminal from a real world device, and the virtual world information.

50. The object controlling system of claim 42, wherein the object controller controls the virtual world object by generating a control command based on information associated with the virtual world object and transmitting the generated control command to a display.

51. A method of controlling an object in an object controlling system, the method comprising:

receiving a control command with respect to an object of a virtual environment; and

controlling the object based on the received control command and object information of the object.

52. The method of claim 51, wherein:

the object information comprises common characteristics of a virtual world object, and

the common characteristics comprises, as metadata, at least one element of an identification for identifying the virtual world object, a virtual world object sound (VWOSound), a virtual world object scent (VWOScent), a virtual world object control (VWOControl), a virtual world object event (VWOEvent), a virtual world object behavior model (VWOBehaviorModel), and virtual world object haptic properties (VWOHapticProperties).

53. The method of claim 51, wherein:

the object information comprises avatar information associated with an avatar of a virtual world, and

the avatar information comprises, as the metadata, at least one element of an avatar appearance (AvatarAppearance), an avatar animation (AvatarAnimation), Avatar communication skills (AvatarCommunicationSkills), an avatar personality (AvatarPersonality), avatar control features (AvatarControlFeatures), and avatar common characteristics (AvatarCC), and comprises, as an attribute, a Gender of the avatar.

54. The method of claim 51, wherein:

the object information comprises information associated with a virtual object, and

information associated with the virtual object comprises, as metadata for expressing a virtual object of the virtual environment, at least one element of a virtual object appearance (VOAppearance), a virtual object animation (VOAnimation), and virtual object common characteristics (VOCC).

**55.** The method of claim 51, wherein the controlling comprises controlling the avatar based on the received control command and metadata defining an avatar face feature point and a body feature point for controlling a facial expression and a motion of an avatar when the object is the avatar.

**56.** The method of claim 51, wherein:

when the object is an avatar of a virtual world, the control command is generated by sensing a facial expression and a body motion of a user of a real world, and
the controlling comprises controlling the object to map characteristics of the user to the avatar of the virtual world according to the facial expression and the body motion.

**57.** An object controlling method, comprising:

controlling a virtual world object of a virtual world using a real world device,
wherein the virtual world object comprises an avatar and a virtual object, and comprises, as metadata, common characteristics of the avatar and the virtual object, and
the common characteristics comprises at least one element of an Identification for identifying the virtual world object, a virtual world object sound (VWOSound), a virtual world object scent (VWOScent), a virtual world object control (VWOControl), a virtual world object event (VWOEvent), a virtual world object behavior model (VWOBehaviorModel), and virtual world object haptic properties (VWOHapticProperties).

**58.** An object controlling method, comprising:

controlling a virtual world object of a virtual world using a real world device,
wherein the virtual world object comprises an avatar and a virtual object, and comprises avatar information associated with the avatar, and
the avatar information comprises at least one element of an avatar appearance (AvatarAppearance), an avatar animation (AvatarAnimation), avatar communication skills (AvatarCommunicationSkills), an avatar personality (AvatarPersonality), avatar control features (AvatarControlFeatures), and avatar common characteristics (AvatarCC), and comprises, as an attribute, a Gender of the avatar.

**59.** An object controlling method, comprising:

controlling a virtual world object of a virtual world using a real world device,
wherein the virtual world object comprises an avatar and a virtual object, and comprises, as metadata for expressing the virtual object of a virtual environment, information associated with the virtual object and
information associated with the virtual object comprises at least one element of a virtual object appearance (VOAppearance), a virtual object animation (VOAnimation), and virtual object common characteristics (VOCC).

**60.** An object controlling method, comprising:

generating a regularized control command based on information received from a real world device;
transmitting the regularized control command to a virtual world server; and
controlling a virtual world object based on information associated with the virtual world object received from the virtual world server.

**61.** An object controlling method, comprising:

generating information associated with a corresponding virtual world object by converting a regularized control command received from a terminal according to the virtual world object; and transmitting information associated with the virtual world object to the terminal,
wherein the regularized control command is generated based on information received by the terminal from a real world device.

**62.** An object controlling method, comprising:

transmitting, to a virtual world server, information received from a real world device; and
controlling a virtual world object based on information associated with the virtual world object that is received from the virtual world server according to the transmitted information.

63. An object controlling method, comprising:

generating a regularized control command based on information received from a terminal;
generating information associated with a corresponding virtual world object by converting the regularized control command according to the virtual world object; and
transmitting information associated with the virtual world object to the terminal,
wherein the received information comprises information received by the terminal from a real world device.

64. An object controlling method, comprising:

generating a regularized control command based on information received from a real world device;
generating information associated with a corresponding virtual world object by converting the regularized control command according to the virtual world object; and
controlling the virtual world object based on information associated with the virtual world object.

65. An object controlling method, comprising:

generating a regularized control command based on information received from a real world device;
generating information associated with a corresponding virtual world object by converting the regularized control command according to the virtual world object;
exchanging information associated with the virtual world object with information associated with a virtual world object of another object controlling system; and
controlling the virtual world object based on information associated with the virtual world object and the exchanged information associated with the virtual world object of the other virtual world object.

66. An object controlling method, comprising:

generating information associated with a virtual world object based on information received from a real world device and virtual world information received from a virtual world server;
controlling the virtual world object based on information associated with the virtual world object; and
transmitting, to the virtual world server, a processing result according to controlling of the virtual world object.

67. An object controlling method, comprising:

transmitting virtual world information to a terminal; and
updating the virtual world information based on a processing result received from the terminal,
wherein the processing result comprises a control result of a virtual world object based on information received by the terminal from a real world device, and the virtual world information.

68. The object controlling method according to any one of claim 60, 62, or 64 through 66, wherein the controlling of the virtual world object comprises controlling the virtual world object by generating a control command based on information associated with the virtual world object and transmitting the generated control command to a display.

69. A non-transitory computer-readable storage medium storing a program to implement the method according to any one of claims 51 through 68.

70. A non-transitory computer-readable storage medium storing a metadata structure, wherein an avatar face feature and a body feature point for controlling a facial expression and a motion of an avatar are defined.

71. The non-transitory computer-readable storage medium of claim 70, wherein at least one of a head outline (HeadOutline), a left eye outline (LeftEyeOutline), a right eye outline (RightEyeOutline), a left eye brow outline (LeftEyeBrowOutline), a right eye brow outline (RightEyeBrowOutline), a left ear outline (LeftEarOutline), a right ear outline (RightEarOutline), a nose outline (NoseOutline), a lip outline (MouthLipOutline), face points (FacePoints), and miscellaneous points (MiscellaneousPoints) is expressed based on the avatar face feature point.

72. An imaging apparatus comprising:

a storage unit to store an animation clip, animation control information, and control control information, the animation control information including information indicating a part of an avatar the animation clip corresponds to and a priority, and the control control information including information indicating a part of an avatar motion data corresponds to and a priority, the motion data being generated by processing a value received from a motion sensor; and

a processing unit to compare a priority of animation control information corresponding to a first part of the avatar with a priority of control control information corresponding to the first part of the avatar, and to determine data to be applicable to the first part of the avatar.

**73.** The imaging apparatus of claim 72, wherein the processing unit compares the priority of the animation control information corresponding to each part of the avatar with the priority of the control control information corresponding to each part of the avatar, to determine data to be applicable to each part of the avatar, and associates the determined data to generate a motion picture of the avatar.

**74.** The imaging apparatus of claim 72, wherein:

information associated with a part of an avatar that each of the animation clip and the motion data corresponds to is information indicating that each of the animation clip and the motion data corresponds to one of a facial expression, a head, an upper body, a middle body, and a lower body of the avatar.

**75.** The imaging apparatus of claim 72, wherein the animation control information further comprises information associated with a speed of an animation of the avatar.

**76.** The imaging apparatus of claim 72, wherein:

the storage unit further stores information associated with a connection axis of the animation clip, and
the processing unit associates the animation clip with the motion data based on information associated with the connection axis of the animation clip.

**77.** The imaging apparatus of claim 76, wherein the processing unit extracts information associated with a connection axis from the motion data, and associates the animation clip and the motion data by enabling the connection axis of the animation clip to correspond to the connection axis of the motion data.

**78.** A non-transitory computer-readable storage medium storing a program implemented in a computer system comprising a processor and a memory, the non-transitory computer-readable storage medium comprising:

a first set of instructions to store animation control information and control control information; and
a second set of instructions to associate an animation clip and motion data generated from a value received from a motion sensor, based on the animation control information corresponding to each part of an avatar and the control control information,
wherein the animation control information comprises information associated with a corresponding animation clip, and an identifier indicating the corresponding animation clip corresponds to one of a facial expression, a head, an upper body, a middle body, and a lower body of an avatar, and
the control control information comprises an identifier indicating real-time motion data corresponds to one of the facial expression, the head, the upper body, the middle body, and the lower body of an avatar.

**79.** The non-transitory computer-readable storage medium of claim 78, wherein:

the animation control information further comprises a priority, and
the control control information further comprises a priority.

**80.** The non-transitory computer-readable storage medium of claim 79, wherein the second set of instructions compares a priority of animation control information corresponding to a first part of an avatar with a priority of control control information corresponding to the first part of the avatar, to determine data to be applicable to the first part of the avatar.

**81.** The non-transitory computer-readable storage medium of claim 78, wherein the animation control information further comprises information associated with a speed of an animation of the avatar.

82. The non-transitory computer-readable storage medium of claim 78, wherein the second set of instructions extracts information associated with a connection axis from the motion data, and associates the animation clip and the motion data by enabling the connection axis of the animation clip to correspond to the connection axis of the motion data.

# Fig. 1

MOTION SENSOR

CAMERA

⋮

3D MOUSE

101

SENSOR CONTROL COMMAND

103

ADAPTION RV

102

AVATAR INFO

105

AVATAR CONTROL INFO

106

AVATAR

OBJECT

⋮

104

EP 2 431 936 A2

FIG. 2

```
┌─────────────────────────────────────────────────────────┐
│                    VIRTUAL WORLD                         │
└─────────────────────────────────────────────────────────┘
```

DEVICE COMMAND     PART 2: CONTROL INFO     SENSING INFO

```
┌─────────────────────────────────────────────────────────┐
│                    CONTEXT INFO                          │
│                                                          │
│  PART 4: VIRTUAL OBJECT INFO    PART 3:  SENSORY INFO    │
│                                                          │
│  PART 5: VIRTUAL OBJECT INFO                             │
└─────────────────────────────────────────────────────────┘
```

SENSING INFO     PART 2: CONTROL INFO     DEVICE COMMAND

```
┌─────────────────────────────────────────────────────────┐
│                     REAL WORLD                           │
└─────────────────────────────────────────────────────────┘
```

# Fig. 3

Enriched content

Virtual object data representation V

Digital content provider (virtual world, game, simulator, DVD, ...)

Adapt. VV

VWI

Adapt. VV

Virtual world N

Virtual world data representation R

Adaptation RV/VR

Adaptation VR/RV

User interaction

Adaptation RV

Adaptation VR

Adaptation RV

Adaptation VR

Real world data representation

Device command

Real world device N

Real world device 1

Real world device 2

Real world device 3

EP 2 431 936 A2

FIG. 4

START

SET AVATAR INFO OF
ADAPTATION RV ENGINE — 401

MONITOR SENSOR INPUT — 402

DOES SENSOR
CONTROL COMMAND
OCCUR? — 403

NO

YES

RECOGNIZE COMMAND OF
ADAPTATION RV ENGINE — 404

GENERATE AVATAR CONTROL INFO — 405

OUTPUT AVATAR MANIPULATION — 406

END

FIG. 5

## Fig. 6

601 Real world device

→ Control info + Feature point RW Position info →

602 Adaption RV engine

+ Regularization
+ Feature point mapping
(User-avatar model)

→ 603 Virtual world info (Avatar model)

↓

602 Adaptation RV engine

+ Adjust size using face of individual avatar
+ Feature point mapping (Avatar model-individual avatar)

← Control info + Feature point RW Position info ←

604 Virtual world

EP 2 431 936 A2

Fig. 7

FIG. 8

801

802

NEXT

BODY STRENGTH = 3

BODY STRENGTH = -2

FIG. 9

CommonCharacteristicsType

- Identification
- VWOSound
- VWOScent
- VWOControl
- VWOEvent
- VWOBehaviorModel
- VWOHapticProperties

FIG. 10

IdentificationType

Comment describing
your root element

attributes

Name

Family

UserID

Ownership

Rights

0..∞

Credits

0..∞

FIG. 11

```
                    ┌─────────────────┐
                    │ ⊟ attributes    │
                    │ ┌─────────────┐ │
                    │ ╎ SoundID     ╎ │
                    │ └─────────────┘ │
                    │ ┌─────────────┐ │
                    │ ╎ Intensity   ╎ │
                    │ └─────────────┘ │
                    │ ┌─────────────┐ │
              ┌─────┤ ╎ Duration    ╎ │
              │     │ └─────────────┘ │
              │     │ ┌─────────┐     │
              │     │ ╎ Loop    ╎     │
┌──────────────┐   │ └─────────┘     │
│ VWOSoundType ├┤  │ ┌─────────┐     │
└──────────────┘   │ ╎ Name    ╎     │
              │     │ └─────────┘     │
              │     └─────────────────┘
              │     ┌───────┐  ┌──────────────────┐
              └─────┤ ■■■  ├┤ ╎ SoundResourcesURL ╎
                    └───────┘  └──────────────────┘
```

FIG. 12

EP 2 431 936 A2

# Fig. 13

FIG. 14

# Fig. 15

FIG. 16

```
                                              ┌─────────────────────┐
                                              │  MaterialProperty ⊞ │
                                              └─────────────────────┘
┌──────────────────────┐    ┌───────┐    ┌──────────────────────────┐
│ VWOHapticPropertyType⊞│───│ ■■■ ⊟│────│  DynamicForceEffect ⊞    │
└──────────────────────┘    └───────┘    └──────────────────────────┘
                                              ┌─────────────────────┐
                                              │  TactileProperty ⊞  │
                                              └─────────────────────┘
```

FIG. 17

attributes

Stiffness

StaticFriction

DynamicFriction

Damping

Texture

Mass

MaterialPropertyType

FIG. 18

DynamicForceEffectType

attributes

ForceField

MovementTrajectory

FIG. 19

FIG. 20

FIG. 21

AvatarAppearanceType

Body
Head
Eyes
Ears
Nose
MouthLip
Skin
Facial
Nail
BodyLook
Hair
EyeBrows
FacialHair
AppearanceResources
FacialCalibrationPoints
PhysicalCondition
Clothes
Shoes
0..∞
Accessories
0..∞

FIG. 23

PhysicalConditionType

BodyStrength

BodyFlexibility

FIG. 24

AvatarAppearanceType

- idle
- Greeting
- Dance
- Walk
- Moves
- Fighting
- Hearing
- Smoke
- Congratulations
- Common_Actions
- Specific_Actions
- Facial_Expression
- Body_Expression
- AnimationResources

FIG. 25

attributes

Name

DefaultLanguage

AvatarCommunication
SkillsType

InputVerbalCommunication

InputNonVerbalCommunication

OutputVerbalCommunication

OutputNonVerbalCommunication

FIG. 26

FIG. 27

FIG. 28

```
                                    ┌─┐
                                    │□ attributes       │
                                    │ ┌─────────────────┐
                                    │ ┆ ComplementaryGesture ┆
                                    │ └─────────────────┘
┌──────────────────────────┐
│ NonVerbalCommunicationType │─┐
└──────────────────────────┘         ┌──────────────────┐
                              │       │ SignLanguage ⊞   │
                         ┌─■■■─┐─     └──────────────────┘
                         └─────┘      ┌──────────────────────────┐
                                      │ CuedSpeechCommunication ⊞ │
                                      └──────────────────────────┘
```

FIG. 29

FIG. 30

FIG. 31

```
                                    ┌─────────────────┐
                                    │ ⊟ attributes    │
                                    │  ┌ ─ ─ ─ ─ ─ ┐  │
                                    │  │   Name    │  │
                                    │  └ ─ ─ ─ ─ ─ ┘  │
                                    └─────────────────┘
┌──────────────────────────┐
│ AvatarControlFeaturesType ⊟
└──────────────────────────┘       ┌──────────────────────┐
                                    │ ControlBodyFeatures ⊞ │
                            ┌─┐     ├──────────────────────┤
                            │■■■│   │ ControlFaceFeatures ⊞ │
                            └─┘     └──────────────────────┘
```

FIG. 32

ControlBodyFeaturesType

headBones

UpperBodyBones

DownBodyBones

MiddleBodyBones

FIG. 33

```
                        ┌─────────────────┐
                        │ ⊟ attributes    │
                        │  ┌ ─ ─ ─ ─ ─ ┐  │
                        │  ╎   Name    ╎  │
                        │  └ ─ ─ ─ ─ ─ ┘  │
                        └─────────────────┘

                                          ┌──────────────────┐
                                          │  HeadOutline ⊞   │
                                          └──────────────────┘
                                          ┌──────────────────┐
┌──────────────────────────┐             │  LeftEyeOutline ⊞│
│ ControlFaceFeaturesType ⊟│             └──────────────────┘
└──────────────────────────┘             ┌──────────────────┐
                                          │ RightEyeOutline ⊞│
                                          └──────────────────┘
                                          ┌──────────────────┐
                                          │ MouthLipOutline ⊞│
                                          └──────────────────┘
                                          ┌──────────────────┐
                                          │  NoseOutline ⊞   │
                                          └──────────────────┘
                      ┌─────────┐        ┌ ─ ─ ─ ─ ─ ─ ─ ─ ─ ┐
                      │ ■■■  ⊟  │        ╎ LeftEyeBrowOutline ⊞╎
                      └─────────┘        └ ─ ─ ─ ─ ─ ─ ─ ─ ─ ┘
                                         ┌ ─ ─ ─ ─ ─ ─ ─ ─ ─ ─ ┐
                                         ╎ RightEyeBrowOutline ⊞╎
                                         └ ─ ─ ─ ─ ─ ─ ─ ─ ─ ─ ┘
                                         ┌ ─ ─ ─ ─ ─ ─ ─ ─ ┐
                                         ╎  LeftEarOutline ⊞╎
                                         └ ─ ─ ─ ─ ─ ─ ─ ─ ┘
                                         ┌ ─ ─ ─ ─ ─ ─ ─ ─ ─ ┐
                                         ╎  RightEarOutline ⊞╎
                                         └ ─ ─ ─ ─ ─ ─ ─ ─ ─ ┘
                                         ┌ ─ ─ ─ ─ ─ ─ ┐
                                         ╎  FacePoints ⊞╎
                                         └ ─ ─ ─ ─ ─ ─ ┘
                                         ┌ ─ ─ ─ ─ ─ ─ ─ ─ ─ ─ ┐
                                         ╎ MiscellaneousPoints ╎
                                         └ ─ ─ ─ ─ ─ ─ ─ ─ ─ ─ ┘
```

Fig. 34

## Fig. 35

Fig. 36

Point 2 Point 1 Point 8
Point 3 Point 7
Point 4 Point 6 Point 7
Point 5 Point 6

Point 1

Point 2 Point 4
Point 3

FIG. 37

FIG. 38

Fig. 39

Fig. 40

# Fig. 41

EP 2 431 936 A2

FIG. 42

Point 2    Point 1

Point 3    Point 5

Point 4

FIG. 43

FIG. 44

Outline4PointsType

Point1

Point2

Point3

Point4

FIG. 45

Outline5PointsType

Point1
Point2
Point3
Point4
Point5

FIG. 46

Outline8PointsType

Point1
Point2
Point3
Point4
Point5
Point6
Point7
Point8

FIG. 47

```
                                                    ┌─ Point1  ⊞
                                                    ├─ Point2  ⊞
                                                    ├─ Point3  ⊞
                                                    ├─ Point4  ⊞
                                                    ├─ Point5  ⊞
                                                    ├─ Point6  ⊞
                                                    ├─ Point7  ⊞
  Outline14PointsType ─── ▪▪▪ ──┤   ──┤             ├─ Point8  ⊞
                                                    ├─ Point9  ⊞
                                                    ├─ Point10 ⊞
                                                    ├─ Point11 ⊞
                                                    ├─ Point12 ⊞
                                                    ├─ Point13 ⊞
                                                    └─ Point14 ⊞
```

FIG. 48

VirtualObjectType

VOAppearance
0..∞

VOAnimiation
0..∞

VOCC

**FIG. 49**

VOAppearanceType — ▪▪▪ — VirtualObjectURL

FIG. 50

**FIG. 51**

5100

```
┌─────────────────────────────────────┐
│  ┌───────────────────────────┐       │
│  │     SENSOR CONTROL        │       │
│  │   COMMAND RECEIVER        │──── 5110
│  └───────────────────────────┘       │
│              ⇓                        │
│  ┌───────────────────────────┐       │
│  │     AVATAR CONTROL        │       │
│  │    INFO GENERATOR         │──── 5120
│  └───────────────────────────┘       │
│              ⇓                        │
│  ┌───────────────────────────┐       │
│  │         AVATAR            │       │
│  │   MANIPULATION UNIT       │──── 5130
│  └───────────────────────────┘       │
└─────────────────────────────────────┘
```

**FIG. 52**

START

RECEIVE SENSOR CONTROL COMMAND
USING SENSOR-BASED INPUT DEVICE — 5210

GENERATE AVATAR CONTROL INFO
BASED ON AVATAR INFO &
SENSOR CONTROL COMMAND — 5220

MANIPULATE AVATAR OF VIRTUAL WORLD
BASED ON AVATAR CONTROL INFO — 5230

END

FIG. 53

# Fig. 54

accmd:AvatarControlCommandBaseType

5413

- attributes
  - id
  - idref
  - activate
  - value
- any ##other — 5414

accmd:AvatarControlCommand
BaseType

5411

SIDCmd — 5410

attributes
any ##other — 5412

## FIG. 55

```
<schema xmlns="http://www.w3.org/2001/XMLSchema"
xmlns:accmd="urn:mpeg:mpegS:2010:01-accmd-NS"
xmlns:sev="urn:mpeg:mpeg-v:2010:01-SEV-NS"
xmlns:mpeg7="urn:mpeg:mpeg7:schema:2004"
targetNamespace="urn:mpeg:mpegS:2010:01-accmd-NS"
elementFormDefault="qualified" attributeFormDefault="unqualified"
version="ISO/IEC 23005-x" id="MPEG-V-accmd.xsd">
    <import namespace="urn:mpeg:mpeg-v:2010:01-SEV-NS"
schemaLocation="MPEG-V-SEV.xsd"/>
    <import namespace="http://www.w3.org/2001/XMLSchema"
schemaLocation="AvatarCharacteristics.xsd"/>
    <import namespace="urn:mpeg:mpeg7:schema:2004"
schemaLocation="http://standards.iso.org/ittf/PubliclyAvailableStandards/
MPEG-7_schema_files/mpeg7-v2.xsd"/>
    <!-- ####################################################### -->
    <!-- Definition of AvatarCtrlCmd Base Attributes       -->    ~~5515
    <!-- ####################################################### -->
    <attributeGroup name="AvatarCtrlCmdBaseAttributes">
        <attribute name="idref" type="IDREF" use="optional"/>
        <attribute name="activate" type="boolean" use="optional"/>  ~~5516
        <attribute name="value" type="integer" use="optional"/>  ~~5517
    </attributeGroup>
    <!-- ####################################################### -->
    <!-- Definition of AvatarControlCmd Base Elements       -->  ~5518
    <!-- ####################################################### -->
    <element name="AvatarControlCommand"
type="accmd:AvatarControlCommandBaseType"/>
    <!-- ####################################################### -->
    <!-- Definition of AvatarControlCmd Base Type          -->  ~~5519
    <!-- ####################################################### -->
    <complexType name="AvatarCtrlCmdBaseType" abstract="true">
        <complexContent>
            <restriction base="anyType">
                <attribute name="id" type="ID" use="optional"/>
            </restriction>
        </complexContent>
    </complexType>
    <!-- ####################################################### -->
    <!-- Definition of the AvatarControlCmd root element      -->  ~5520
    <!-- ####################################################### -->
    <element name="AvatarCtrlCmd">
        <complexType>
            <sequence>
                <element ref="accmd:AvatarControlCommand"/>
            </sequence>
            <anyAttribute namespace="##other" processContents="lax"/>
```

FIG. 56

```
        </complexType>
    </element>
    <!-- ############################################### -->
    <!-- Definition of AvatarControl Command Base Type  -->  5621
    <!-- ############################################### -->
    <complexType name="AvatarControlCommandBaseType"abstract="true">
        <complexContent>
            <extension base="accmd:AvatarCtrlCmdBaseType">
                <attributeGroup
ref="accmd:AvatarCtrlCmdBaseAttributes"/>
                <anyAttribute namespace="##other" processContents="lax"/>
    </extension>
            </extension>
        </complexContent>
    </complexType>
    <!-- ############################################### -->
    <!-- Definition of AvatarControlCmd Appearance Type  -->    5622
    <!-- ############################################### -->
    <complexType name="AppearanceControlType">    5623
        <complexContent>
            <extension base="accmd:AvatarControlCommandBaseType">
                <choice>
                    <element name="Body" type="accmd:BodyType"/>
                    <element name="Head" type="accmd:HeadType"/>
                    <element name="Eyes" type="accmd:EyesType"/>
                    <element name="Nose" type="accmd:NoseType"/>
                    <element name="MouthLip" type="accmd:MouthLipType"/>
                    <element name="Skin" type="accmd:SkinType"/>
                    <element name="Facial" type="accmd:FacialType"/>
                    <element name="Nail" type="accmd:NailType"/>
                    <element name="Hair" type="accmd:HairType"/>
                    <element name="EyeBrows" type="accmd:EyeBrowsType"/>
                    <element name="FacialHair" type="accmd:FacialHairType"/>
                    <element name="AppearanceResources"
type="accmd:AppearanceResourcesType"/>
                    <element name="PhysicalCondition"
type="accmd:PhysicalConditionType"/>
                    <element name="Clothes" type="accmd:ClothesType"/>
                    <element name="Shoes" type="accmd:ShoesType"/>
                    <element name="Accessories" type="accmd:AccessoriesType"/>
                </choice>
            </extension>
        </complexContent>
    </complexType>
    <complexType name="AnimationControlType">    5624
        <complexContent>
```

FIG. 57

```
<extension base="accmd:AvatarControlCommandBaseType">
    <choice>
        <element name="Idle" type="accmd:IdleType"/>
        <element name="Greeting" type="accmd:GreetingType"/>
        <element name="Dance" type="accmd:DanceType"/>
        <element name="Walk" type="accmd:WalkType"/>
        <element name="Moves" type="accmd:MovesType"/>
        <element name="Fighting" type="accmd:FightingType"/>
        <element name="Hearing" type="accmd:HearingType"/>
        <element name="Smoke" type="accmd:SmokeType"/>
        <element name="Congratulations"
type="accmd:CongratulationsType"/>
        <element name="Common_Actions"
type="accmd:CommonActionsType"/>
        <element name="Specific_Actions"
type="accmd:SpecificActionType"/>
        <element name="Facial_Expression"
type="accmd:FacialExpressionType"/>
        <element name="Body_Expression"
type="accmd:BodyExpressionType"/>
        <element name="AnimationResources"
type="accmd:AnimationResourceType"/>
    </choice>
    <attribute name="MotionPriority"
type="nonNegativeInteger" use="optional"/>
    <attribute name="speed" type="accmd:SpeedType" use="optional"/>
    </extension>
  </complexContent>
</complexType>
<simpleType name="SpeedType">
  <restriction base="string">
    <enumeration value="slow"/>
    <enumeration value="normal"/>
    <enumeration value="fast"/>
  </restriction>
</simpleType>
<complexType name="CommunicationSkillsControlType">        〜〜5725
  <complexContent>
    <extension base="accmd:AvatarControlCommandBaseType">
      <choice>
        <element name="InputVerbalCommunication"
type="InputVerbalCommunicationType"/>
        <element name="InputNonVerbalCommmunication"
type="InputNonVerbalCommmunicationType"/>
        <element name="OutputVerbalCommunication"
type="OutputVerbalCommunicationType"/>
```

FIG. 58

```
            <element name="OutputNonVerbalCommaunication"
type="OutputNonVerbalCommaunicationType"/>
            </choice>
        </extension>
    </complexContent>
</complexType>
<complexType name="PersonalityControlType">  ~5826
    <complexContent>
        <extension base="accmd:AvatarControlCommandBaseType">
            <choice>
                <element name="Oppenes" type="OppenesType"/>
                <element name="Agreableness" type="AgreablenessType"/>
                <element name="Neuroticism" type="NeuroticismType"/>
                <element name="Extraversion" type="ExtraversionType"/>
                <element name="Conscientiousness"
type="ConscientiousnessType"/>
            </choice>
        </extension>
    </complexContent>
</complexType>
<complexType name="ControlControlType">  ~5827
    <complexContent>
        <extension base="accmd:AvatarControlCommandBaseType">
            <choice>
                <element name="BodyFeaturesControl"
type="accmd:BodyFeaturesControlType"/>
                <element name="FaceFeaturesControl"
type="accmd:FaceFeaturesControlType"/>
            </choice>
            <attribute name="MotionPriority"
type="nonNegativeInteger" use="optional"/>
            <attribute name="frametime" type="second" use="required"/>
            <attribute name="NumOfFrame"
type="NonNegativeInteger" use="optional"/>
            <attribute name="frameID"
type="NonNegativeInteger" use="required"/>
        </extension>
    </complexContent>
</complexType>
</schema>
```

FIG. 59

accmd:AvatarControlCommandBaseType

☐ attributes

id

idref

activate

value

any ##other

5920

5910

Appearance
ControlType

accmd:Body ⊞

accmd:Head ⊞

accmd:Eyes ⊞

accmd:Nose ⊞

accmd:MouthLip

accmd:Skin ⊞

accmd:Facial ⊞

accmd:Nail ⊞

accmd:Hair ⊞

accmd:EveBrows ⊞

accmd:FacialHair ⊞

accmd:AppearanceResource

accmd:PhysicalCondition ⊞

accmd:Clothes

accmd:Shoes

accmd:Accessories

**FIG. 60**

Communication
SkillsControlType — 6010

accmd:AvatarControlCommandBaseType — 6020

attributes

id

idref

activate

value

any ##other

accmd:InputVerbalCommunication

accmd:InputNonVerbalCommunication

accmd:OutputVerbalCommunication

accmd:OutputNonVerbalCommunication

FIG. 61

accmd:AvatarControlCommandBaseType

⊟ attributes

id

idref

activate

value

any ##other

6120

6110

Personality
ControlType

accmd:Openness

accmd:Agreeableness

accmd:Neuroticism

accmd:Extraversion

accmd:Conscientiousness

FIG. 62

```
accmd:AvatarControlCommandBaseType
  ⊟ attributes
    id
    idref
    activate
    value
    (any ##other)
```
6220

⊟ attributes — 6230

MotionPriority — 6231

speed — 6232

6210

Animation
ControlType

accmd:Idle ⊞

accmd:Greeting ⊞

accmd:Dance ⊞

accmd:Walk ⊞

accmd:Moves ⊞

accmd:Fighting ⊞

accmd:Hearing ⊞

accmd:Smoke ⊞

accmd:Congratulations ⊞

accmd:Common_Actions ⊞

accmd:Specific_Actions ⊞

accmd:Facial_Expression ⊞

accmd:Body_Expression ⊞

accmd:AnimatinResources ⊞

# Fig. 63

accmd:AvatarControlCommandBaseType

attributes
- id
- idref
- activate
- value
- any ##other

6320

6310

Control
ControlType

attributes — 6330
- MotionPriority — 6331
- frametime — 6332
- NumOfFrame — 6333
- frameID — 6334

6340

accmd:BodyFeaturesControl

6350

accmd:FaceFeaturesControl

accmd:BodyFeaturesControlType
- accmd:headBones
- accmd:UpperBodyBones
- accmd:DownBodyBones
- accmd:middleBodyBones

EP 2 431 936 A2

FIG. 64

6400

STORAGE UNIT

PROCESSING UNIT

6410

6420

FIG. 65

6500

6520

6510

6530

6540

6550

**FIG. 66**

<u>6610</u>

6610          6620       6630

| Animation clip | Corresponding part | Priority |
|---|---|---|
| 6611 | facial expression 6421 | 5 |
| 6612 | head 6422 | 2 |
| 6613 | upper body 6423 | 5 |
| 6614 | middle body 6424 | 1 |
| 6615 | lower body 6425 | 1 |

## FIG. 67

6700

| Animation Clip | Corresponding Part | Priority |
|---|---|---|
| | facial expression 6521 | 1 |
| | head 6522 | 5 |
| | upper body 6523 | 2 |
| | middle body 6524 | 5 |
| | lower body 6525 | 5 |

# Fig. 68

EP 2 431 936 A2

FIG. 69

```
                    ┌─────────┐
                    │  START  │
                    └────┬────┘
                         │
                         ▼
        ┌────────────────────────────────┐
        │ VERIFY INFORMATION INCLUDED     │──── 6910
        │    IN MOTION OBJECT DATA        │
        └────────────────┬───────────────┘
                         │
                         ▼
                 ╱╲
                ╱  ╲          6920
               ╱ IS ╲
              ╱ PRIORITY OF ╲
             ╱ NEW MOTION OBJECT ╲      YES
            ╱ DATA HIGHER THAN PRIORITY ╲────────┐
            ╲ OF EXISTING MOTION       ╱         │
             ╲ OBJECT  DATA?          ╱          │
              ╲                      ╱           │
               ╲                    ╱            │
                ╲        NO        ╱             ▼
                 ╲                ╱    ┌──────────────────────────┐
                         │            │ DETERMINE, AS NEW MOTION  │── 6930
                         │            │ OBJECT DATA, DATA APPLICABLE │
                         │            │   IN FIRST PART OF AVATAR │
                         │            └─────────────┬────────────┘
                         │                          │
                         ▼◄─────────────────────────┘
                 ╱╲
                ╱  ╲              6940
               ╱ IS EVERY ╲
     NO      ╱ MOTION OBJECT DATA ╲
    ┌───────╲     VERIFIED?       ╱
    │         ╲                  ╱
    │          ╲                ╱
    │                 │ YES
    │                 ▼
    │    ┌────────────────────────────┐
    │    │  GENERATE MOVING PICTURE    │──── 6950
    │    │        OF AVATAR            │
    │    └──────────────┬─────────────┘
    │                   │
    │                   ▼
    │            ┌─────────┐
    │            │   END   │
    │            └─────────┘
    └──────────────────────────► (back to 6910)
```

## FIG. 70

START

VERIFY PART OF AVATAR
INCLUDING ROOT ELEMENT — 7010

EXTRACT INFORMATION ABOUT
CONNECTION AXIS FROM MOTION
OBJECT DATA — 7020

DOES
MOTION OBJECT DATA
NOT BEING ASSOCIATED
EXIST? — 7030

NO

YES

CHANGE, TO RELATIVE DIRECTION
ANGLE, JOINT DIRECTION ANGLE
INCLUDED IN INFORMATION
ABOUT CONNECTION AXIS — 7040

ASSOCIATE MOTION OBJECT DATA
CORRESPONDING TO EACH PART
OF AVATAR — 7050

END

FIG. 71

FIG. 72

**FIG. 73**

# Fig. 74

FIRST TERMINAL 7410

VIRTUAL WORLD ENGINE 7412

ADAPTATION ENGINE

FIRST DISPLAY 7430

REAL WORLD DEVICE 7420

7411

SECOND TERMINAL 7440

VIRTUAL WORLD ENGINE 7442

ADAPTATION ENGINE

SECOND DISPLAY 7460

REAL WORLD DEVICE 7450

7441

EP 2 431 936 A2

**FIG. 75**